# EUROPEAN PATENT APPLICATION

(11) **EP 1 462 491 A1**
(43) Date of publication of application: **29.09.2004**
(21) Application number: 04007159.9
(22) Date of filing: 25.03.2004
(51) Int. Cl.: C09D 11/00

(54) **Inkjet ink and inkjet ink set**

(30) Priority: 25.03.2003 JP 2003082852; 09.03.2004 JP 2004065569
(71) Applicant: Fuji Photo Film Co., Ltd., Kanagawa (JP)
(72) Inventor: Taguchi, Toshiki, Fujinomiya-shi Shizuoka (JP); Wachi, Naotaka, Fujinomiya-shi Shizuoka (JP)
(74) Representative: HOFFMANN - EITLE

(57) **Abstract**

An ink comprising at least one dye in an aqueous medium, wherein the dye satisfies a relation of ε1/ε2 > 1.2 wherein ε1 represents a molar extinction coefficient obtained from absorbance at the maximum wavelength of a spectral absorption curve obtained by measuring an aqueous solution of the dye having a concentration of 0.1 mmol/liter using a cell having a light pass length of 1 cm and ε2 represents a molar extinction coefficient obtained from absorbance at the maximum wavelength of a spectral absorption curve obtained by measuring an aqueous solution of the dye having a concentration of 0.2 mmol/liter using a cell having a light pass length of 5 µm.

## Description

### BACKGROUND OF THE INVENTION

The present invention relates to an inkjet ink and an inkjet ink set, which forms an image having excellent durability.

### FIELD OF THE INVENTION

With the popularization of computers in recent years, inkjet printers are widely used not only at offices but also at homes for printing letters or images on paper, films, cloths or the like.

The inkjet recording method includes a system of ejecting a liquid droplet upon applying a pressure by means of a piezoelectric elements a system of ejecting a liquid droplet by generating a bubble in an ink upon heat, a system of using an ultrasonic wave, and a system of ejecting a liquid droplet by drawing with an electrostatic force. An ink composition for use in such inkjet recording methods includes an aqueous ink, an oily ink and a solid (melt-type) ink. Of these inks, the aqueous ink becomes mainstream in view of production, handleability, odor, safety and the like.

A coloring agent used in such an ink for inkjet recording method is required to have high solubility in a solvent, enable high-density recording, have good color hue, exhibit excellent fastness to light, heat, air, water and chemicals, ensure good fixing property and less bleeding on an image-receiving material, provide an ink having excellent preservability, shows no toxicity, have high purity, and be available at a low cost. However, it is very difficult to find out a coloring agent satisfying these requirements at a high level. Although various dyes and pigments for inkjet recording have been already proposed and practically used, a coloring agent satisfying all of such requirements is not yet found out at present. Conventionally well-known dyes and pigments, for example, those having a Colour Index (C.I.) number can hardly satisfy both the color hue and fastness required to the ink for inkjet recording.

The inventors have made technical searches for resolving the above-described problems exist'ing in the inkjet ink using dye and found that an aqueous inkjet ink is many times particularly inferior in image durability due to water solubility of the dye. As dyes suitable for the aqueous inkjet ink, azo dyes containing a heterocyclic group having a specific structure are disclosed in Patent Document 1 described below, phthalocyanine dyes having specific structures are disclosed in Patent Documents 2 to 4 described below, and aqueous inkjet ink sets comprising a combination of cyan, yellow and magenta dyes excellent in fastness and a combination of cyan, yellow, magenta and black dyes excellent in fastness are disclosed in Patent Documents 5 to 7 described below. These techniques exhibit improvements in simultaneous pursuit of the color hue and fastness. However, further improvements have been desired in order to use inkjet recording images under various environments indoors and out of doors.

Patent Document 1: JP-A-2002-371214 (the term "JP-A" as used herein means an 'unexamined published Japanese patent application")
Patent Document 2: JP-A-2003-3086
Patent Document 3: JP-A-2003-3099
Patent Document 4: JP.-A-2003-3109
Patent Document 5: JP-A-2003-238862
Patent Document 6: JP-A-2003-238863
Patent Document 7: JP-A-2003-238865

### SUMMARY OF THE INVENTION

Therefore, an object of the present invention is to provide an ink, which is aqueous, is excellent in ejection stability at the image drawing and provides a drawing image having excellent image fastness, and an ink set includes the above-described ink. Another object of the invention is to provide the above-described ink and ink set suitable for use in inkjet recording.

Other objects of the invention will become apparent from the following description.

The objects of the invention can be attained by the ink and ink set described in items (1) to (7) below.
(1) An ink comprising at least one dye in an aqueous medium, wherein the dye satisfies a relation of ε1/ε2 > 1.2 wherein ε1 represents a molar extinction coefficient obtained from absorbance at the maximum wavelength of a spectral absorption curve obtained by measuring an aqueous solution of the dye having a concentration of 0.1 mmol/liter using a cell having a light pass length of 1 cm and ε2 represents a molar extinction coefficient obtained from absorbance at the maximum wavelength of a spectral absorption curve obtained by measuring an aqueous solution of the dye having a concentration of 0.2 mmol/liter using a cell having a light pass length of 5 µm.
(2) An ink set comprising the ink as described in item (1) above as at least one of constituting inks.
(3) The ink set as described in item (2) above, wherein the dye contained in the ink as described in item (1) above constituting the ink set is an azo dye having a heterocyclic group.
(4) The ink set as described in item (3) above, wherein the azo dye having a heterocyclic group is an azo dye wherein two heterocyclic groups are connected with an azo bond.
(5) The ink set as described in item (2) above, wherein the dye contained in the ink described in item (1) above constituting the ink set is a metal chelate dye wherein a metal coordinated with a heterocyclic group forms a nucleus.
(6) The ink set as described in item (5) above, wherein the metal chelate dye wherein a metal coordinated with a heterocyclic group form a nucleus is a phthalocyanine dye.
(7) The ink set as claimed in any one of items (2) to (6) above, which is for use in inkjet recording.

### DETAILED DESCRIPTION OF THE INVENTION

The ink containing a dye having concentration dependency of the molar extinction coefficient as described in the specification and the ink set including the ink as a constituting ink according to the invention exhibits excellent ejection stability at the drawing and provides an drawing image having an excellent image durability. Particularly, the ink and ink set exert excellent effects on the inkjet recording use.

The present invention is described in detail below.

The ink of the invention comprising at least one dye dissolved or dispersed in an aqueous medium and at least one dye contained in the ink has a property of forming aggregation in a concentrated ink solution and decreasing an apparent molar extinction coefficient (ε) in comparison with a diluted ink solution.

The dye having such a property is characterized by exhibiting concentration dependency of the molar extinction coefficient in an aqueous solution as described below. Specifically, the dye satisfies the following relation between a molar extinction coefficient (ε1) obtained from absorbance at the maximum wavelength of a spectral absorption curve obtained by measuring an aqueous solution of the dye having a concentration of 0.1 mmol/liter using a cell having a light pass length of 1 cm and a molar extinction coefficient (ε2) obtained from absorbance at the maximum wavelength of a spectral absorption curve obtained by measuring an aqueous solution of the dye having a concentration of 0.2 mmol/liter using a cell having a light pass length of 5 µm.

### Ratio of molar extinction coefficient: ε1/ε2 > 1.2

The ratio of molar extinction coefficient is preferably more than 1.2 to 2.0 and more preferably more than 1.2 to 1.5.

More specifically, two or more molecules of the dyes for use in the invention are aggregated in a solution having high concentration and exhibit a behavior as if molar extinction coefficient of the dye decreases in comparison with in a diluted solution. Therefore, the dye has the feature that as the concentration increases, it behaves as if apparent absorbance compensated by the concentration of solution decreases. The absorbance of dye in a diluted solution can be measured using a conventional cell. However, in order to measure the absorbance of dye in a solution having high concentration as in the invention, a cell having a very short light pass length is necessary. Thus, a liquid crystal cell is employed for such a purpose in the invention and the value thus-obtained is compared with a value obtained by measuring using a cell having a long light pass length, whereby dye concentration dependency of the absorbance is determined as a scale for a characteristic of preferred dye. The behavior of change in the ratio of molar extinction coefficient is believed to depend on difference in aggregation degree of the dye. The dye having the ratio of molar extinction coefficient of 1.2 or more exhibits remarkable image fastness suiting the purpose of the invention. The upper limit of the ratio of molar extinction coefficient is not particularly limited as far as the absorbance of the concentrated solution extremely decreases, but it is ordinarily 3 or below.

The term "liquid crystal cell" as used herein includes a measurement cell having a light pass length similar to the liquid crystal cell as is apparent from the above-described purport and should not be construed as being limited to the liquid crystal cell alone.

Of the dyes for use in the ink and ink set according to the invention, those having an oxidation potential more positive than 1.00 V (vs SCE) in addition to the above-described properties are preferably used because they exhibit excellent effects. The dyes having an oxidation potential more positive than 1.10 V (vs SCE) are more preferable and the dyes having an oxidation potential more positive than 1.15 V (vs SCE) are still more preferable.

The oxidation potential value (Eox) can be easily measured by one skilled in the art. The methods therefor are described, for example, in P. Delahay, New Instrumental Methods in Electrochemistry, Interscience Publishers (1954), A. J. Bard et al., Electrochemical Methods, John Wiley & Sons (1980), and Akira Fujishima et al., Denkikagaku Sokuteiho (Electrochemical Measuring Methods), Gihodo Shuppan Co., Ltd. (1984).

More specifically, a test sample is dissolved at a concentration of 1×10⁻⁶ to 1×10⁻² mol/liter in a solvent, for example, dimethylformamide or acetonitrile containing a supporting electrolyte, for example, sodium perchlorate or tetrapropylammonium perchlorate and the oxidation potential is measured as a value to SCE (saturated calomel electrode) using a cyclic voltammetry. The value sometimes may deviate on the order of several tens of millivolts due to the effect of liquid junction potential, liquid resistance of the sample solution or the like, however, reproducibility of the potential can be guaranteed using a standard sample (for example, hydroquinone).

In the invention, in order to univocally specify the potential, a value (vs SCE) measured in an N,N-dimethylformamide solution (concentration of dye: 0.001 mol·dm⁻³) containing 0.1 mol·dm⁻³ of tetrapropylammonium perchlorate as the supporting electrolyte is used as the oxidation potential of the dye. In the case of a water-soluble dye, the dye is sometimes hardly dissolved directly in N,N-dimethylformamide. In such a case, the oxidation potential is measured after dissolving the dye using water in a small amount as much as possible and then diluting the aqueous solution with N,N-dimethylformamide so as to have a water content of 2% or below.

The oxidation potential (Eox) value indicates the transferability of an electron from the sample to the electrode and as the value is larger (the oxidation potential is more positive), the electron is less transferable from the sample to the electrode, in other words, the oxidation less occurs. With respect to the relationship with structure of the compound, the oxidation potential becomes more positive when an electron-withdrawing group is introduced and becomes more negative when an electron-donating group is introduced.

Any dye can be used in the invention as long as the dye satisfies the above-described property regarding the dye concentration dependency of the molar extinction coefficient. The dye preferably used in the invention can be selected from the azo dye having a heterocyclic group as described in item (3), especially the azo dye wherein two heterocyclic groups are connected with an azo bond as described in item (4), and the metal chelate dye wherein a metal coordinated with a heterocyclic group forms a nucleus as described in item (5), especially the phthalocyanine dye as described in item (6).

Preferred examples of the dyes described above include azo dyes (for yellow dye, magenta dye and black dye) and phthalocyanine dyes (for cyan dye) having the above-described property regarding the dye concentration dependency of the molar extinction coefficient and the specific characteristics and structure.

More specifically, preferred examples of the azo dye having a heterocyclic group as described in item (3) are dyes having the above-described property regarding the dye concentration dependency of the molar extinction coefficient and represented by formula (1), formula (3) or formula (4) shown below. Among them, the azo dyes wherein two heterocyclic groups are connected with an azo bond as described in item (4) and represented by formula (3) are more preferred. Also, the metal chelate dyes wherein a metal coordinated with a heterocyclic group forms a nucleus as described in item (5) and having the above-described property regarding the dye concentration dependency of the molar extinction coefficient are preferably used in the invention. Among them, the metal phthalocyanine dyes represented by formula (2) shown below are more preferred.

Thus, more preferred dyes are dyes selected from the dyes represented by any one of formulae (1) to (4) and having an oxidation potential more positive than 1.00 V (vs SCE).

The dyes represented by any one of formulae (1) to (4) preferably used in the invention are described below. Formula (1):

A₁₁-N=N-B₁₁

In formula (1), A₁₁ and B₁₁ each independently represents a heterocyclic group which may be substituted;

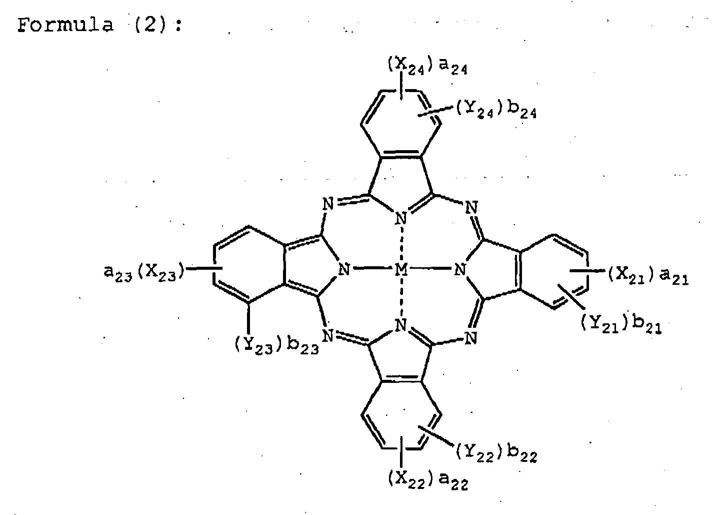

In formula (2), X₂₁, X₂₂, X₂₃ and X₂₄ each independently represents -SO-Z₂, -SO₂-Z₂, -SO₂NR₂₁R₂₂, a sulfo group, -CONR₂₁R₂₂ or -COOR₂₁,
Z₂ independently represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group,
R₂₁ and R₂₂ each independently represents a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group,
Y₂₁, Y₂₂, Y₂₃ and Y₂₄ each independently represents a monovalent substituent,
a₂₁ to a₂₄ and b₂₁ to b₂₄ represent the numbers of substituents X₂₁, X₂₂, X₂₃ and X₂₄ and Y₂₁ Y₂₂, Y₂₃ and Y₂₄, respectively, a₂₁ to a₂₄ each independently represents an integer of from 0 to 4, provided that all of a₂₁ to a₂₄ are not 0 at the same time, and b₂₁ to b₂₄ each independently represents an integer of from 0 to 4, provided that when a₂₁ to a₂₄ and b₂₁ to b₂₄ each represents an integer of 2 or more, the plurality of X₂₁s, X₂₂s, X₃₃s, X₂₄s, Y₂₁s, Y₂₂s, X₂₃s or Y₂₄s may be the same or different from each other, and
M represents a metal atom or an oxide, hydroxide or halide thereof;

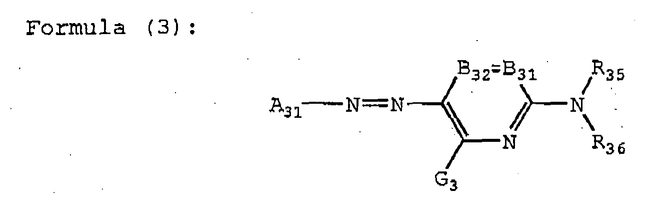

In formula (3), A₃₁ represents a 5-membered heterocyclic group,
B₃₁ and B₃₂ each represents =CR₃₁- or -CR₃₂=, or either one of B₃₁ and B₃₂ represents a nitrogen atom and the other represents =CR₃₁- or -CR₃₂=,
R₃₅ and R₃₆ each independently represents a hydrogen atom, an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group, and each group may further have a substituent,
G₃, R₃₁ and R₃₂ each independently represents a hydrogen atom, a halogen atom, an aliphatic group, an aromatic group, a heterocyclic group, a cyano group, a carboxy group, a carbamoyl group, an alkoxycarbonyl group, an aryloxycarbonyl group, a heterocyclic oxycarbonyl group, an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an arylamino group and a heterocyclic amino group), an acylamino group, a ureido group, a sulfamoylamino group, an alkoxycarbonylamino group, an aryloxycarbonylamino group, an alkylsulfonylamino group, an arylsulfonylamino group, a heterocyclic sulfonylamino group, a nitro group, an alkylthio group, an arylthio group, an alkylsulfonyl group, an arylsulfonyl group, a heterocyclic sulfonyl group, an alkylsulfinyl group, an arylsulfinyl group, a heterocyclic sulfinyl group, a sulfamoyl group, a sulfo group or a heterocyclic thio group, and each group may be further substituted, and
R₃₁ and R₃₅, or R₃₅ and R₃₆ may be combined with each other to form a 5-membered or 6-membered ring; $\text{Formula (4):} {\text{A}}_{\text{41}} {\text{-N=N-B}}_{\text{41}} {\text{-N=N-C}}_{\text{41}}$

In formula (4), A₄₁, B₄₁ and C₄₁ each independently represents an aromatic group which may be substituted or a heterocyclic group which may be substituted.

Now, the respective dyes are described in detail below.

### [Yellow Dye]

The yellow dye for use in the invention is preferably a dye capable of forming an image having high fastness to an acidic atmosphere. The fastness of dye to an acidic atmosphere is denoted by an accelerated fading rate constant (k). Specifically, an ink containing the yellow dye is printed on a reflective medium, a reflection density after the printing is measured through a Status A filter and one point having a reflection density (D_{B}) of 0.90 to 1.10 in the yellow region (blue light absorbing region) is defined as the initial density of the ink. Then, the printed material is subjected to enforced discoloration using an ozone fading tester capable of always generating 5 ppm of ozone and the accelerated fading rate constant (k) is determined from a time period (t) until the reflection density decreases to 80% (remaining rate) of the initial density. The yellow dye preferably exhibits the accelerated fading rate constant of 5.0×10⁻² [hour⁻¹] or less. With such an accelerated fading rate constant, fastness, particularly, fastness to ozone gas, can be increased. From this point of view, the accelerated fading rate constant is more preferably 3.0×10⁻² [hour⁻¹] or less, still more preferably 1.0×10⁻² [hour⁻¹] or less.

The reflection density as used herein means a value measured through a Status A (blue) filter using a reflection densitometer (for example, X-Rite 310TR). The accelerated fading rate constant (k) means a value obtained from a remaining rate = exp(-kt), that is, k = (-1n0.8)/t.

As described above, the yellow dye preferably has an oxidation potential more positive than 1.0 V (vs SCE), more preferably more positive than 1.1 V (vs SCE), and still more preferably more positive than 1.15 V (vs SCE). In the invention, the oxidation potential is preferably rendered more positive by introducing an electron-withdrawing group into the yellow dye skeleton.

The dye for use in the invention preferably has good color hue as well as good fastness, more preferably shows a sharp absorption spectrum on the long wavelength side. For such a purpose, the yellow dye preferably has λmax in the region from 390 to 470 nm and a ratio I(λmax + 70 nm)/I(λmax) of the absorbance at λmax + 70 nm (I(λmax + 70 nm)) to the absorbance at λmax (I(λmax)) is preferably 0.2 or less, more preferably 0.1 or less. The lower limit of the ratio is ideally 0 but actually difficult to be 0.01 or less.

Examples of the dye satisfying the oxidation potential and absorption properties include the dye represented by formula (1): $\text{Formula (1):} {\text{A}}_{\text{11}} {\text{-N=N-B}}_{\text{11}}$wherein A₁₁ and B₁₁ each independently represents a heterocyclic group which may be substituted.

A heterocyclic ring for the heterocyclic group is preferably a heterocyclic ring constituted by a 5- or 6-membered ring and the heterocyclic ring may have a monocyclic structure or a polycyclic structure resulting from condensation of two or more rings and may be an aromatic heterocyclic ring or a non-aromatic heterocyclic ring. The heteroatom constituting the heterocyclic ring is preferably N, O or S atom.

The heterocyclic ring represented by A₁₁ in formula (1) is preferably 5-pyrazolone, pyrazole, triazole, oxazolone, isoxazolone, barbituric acid, pyridone, pyridine, rhodanine, pyrazolidinedione, pyrazolopyridone, merdramic acid or a condensed heterocyclic ring resulting from condensation of such a heterocyclic ring with a hydrocarbon aromatic ring or a heterocyclic ring, more preferably 5-pyrazolone, 5-aminopyrazole, pyridone, 2,6-diaminopyridine or a pyrazoloazole, still more preferably 5-aminopyrazole, 2-hydroxy-6-pyridone or pyrazolotriazole.

Examples of the heterocyclic ring represented by B₁₁ include pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, isoxazole, benzoxazole, thiazole, benzothiazole, isothiazole, benzisothiazole, thiadiazole, benzisoxazole, pyrrolidine, piperidine, piperazine, imidazolidine and thiazoline. Among these, preferred are pyridine, quinoline, thiophene, benzothiophene, pyrazole, imidazole, benzimidazole, triazole, oxazole, isoxazole, benzoxazole, thiazole, benzothiazole, isothiazole, benzisothiazole, thiadiazole and benzisoxazole, more preferred are quinoline, thiophene, pyrazole, thiazole, benzoxazole, benzisoxazole, isothiazole, imidazole, benzothiazole and thiadiazole, and still more preferred are pyrazole, benzothiazole, benzoxazole, imidazole, 1,2,4-thiadiazole and 1,3,4-thiadiazole.

The heterocyclic group represented by A₁₁ and B₁₁ may be substituted and examples of the substituent include a halogen atom, an alkyl group, a cycloalkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group; an aryloxycarbonyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an imido group, a phosphino group, a phosphinyl' group, a phosphinyloxy group, a phosphinylamino group, a silyl group and an ionic hydrophilic group.

In the case where the dye represented by formula (1) is used as a water-soluble dye, the dye preferably contains at least one ionic hydrophilic group in the molecule thereof. Examples of the ionic hydrophilic group include a sulfo group, a carboxyl group, a phosphono group and a quaternary ammonium group. Among these ionic hydrophilic groups, preferred are a carboxyl group, a phosphono group and a sulfo group, more preferred are a carboxyl group and a sulfo group. The carboxyl group, the phosphono group and the sulfo group each may be in a salt state and examples of the counter ion for forming the salt include ammonium ion, alkali metal ions (e.g., lithium ion, sodium ion, potassium ion) and organic cations (e.g., tetramethylammonium ion, tetramethylguanidium ion, tetramethylphosphonium). Among the counter ions, alkali metal ions are preferred and a lithium ion is more preferred.

Among the dyes represented by formula (1), preferred are dyes represented by the following formulae (1-A), (1-B) and (1-C): 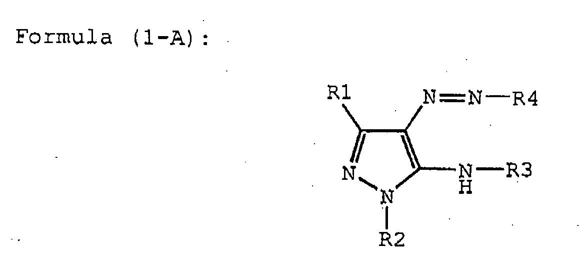 wherein R1 and R3 each represents a hydrogen atom, a cyano group, an alkyl group, a cycloalkyl group, an aralkyl group, an alkoxy group, an alkylthio group, an arylthio group, an aryl group or an ionic hydrophilic group, R2 represents a hydrogen atom, an alkyl group, a cycloalkyl group, an aralkyl group, a carbamoyl group, an acyl group, an aryl group or a heterocyclic group, and R4 represents a heterocyclic group; 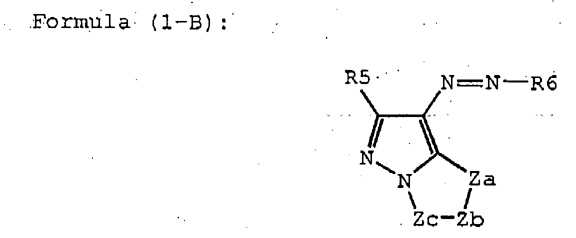 wherein R5 represents a hydrogen atom, a cyano group, an alkyl group, a cycloalkyl group, an aralkyl group, an alkoxy group, an alkylthio group, an arylthio group, an aryl group or an ionic hydrophilic group, Za represents -N=, -NH- or -C(R11)=, Zb and Zc each independently represents -N= or -C(R11)=, R11 represents a hydrogen atom or a nonmetallic substituent, and R6 represents a heterocyclic group; 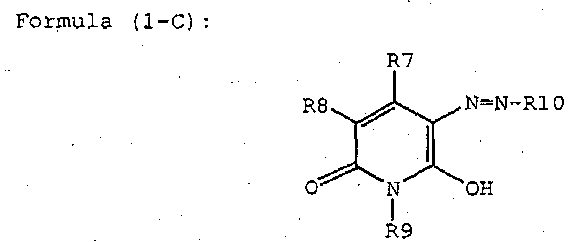 wherein R7 and R9 each independently represents a hydrogen atom, a cyano group, an alkyl group, a cycloalkyl group, an aralkyl group, an aryl group, an alkylthio group, an arylthio group, an alkoxycarbonyl group, a carbamoyl group or an ionic hydrophilic group, R8 represents a hydrogen atom, a halogen atom, an alkyl group, an alkoxy group, an aryl group, an aryloxy group, a cyano group, an acylamino group, a sulfonylamino group, an alkoxycarbonylamino group, a ureido group, an alkylthio group, an arylthio group, an alkoxycarbonyl group, a carbamoyl group, a sulfamoyl group, an alkylsulfonyl group, an arylsulfonyl group, an acyl group, an amino group, a hydroxy group or an ionic hydrophilic group, and R10 represents a heterocyclic group.

The alkyl group represented by R1, R2, R3, R5, R7, R8 or R9 in formulae (1-A) , (1-B) and (1-C) includes an alkyl group having a substituent and an unsubstituted alkyl group. The alkyl group is preferably an alkyl group having from 1 to 20 carbon atoms. Examples of the substituent include a hydroxyl group, an alkoxy group, a cyano group, a halogen atom and an ionic hydrophilic group. Examples of the alkyl group include a methyl group, an ethyl group, a butyl group, an isopropyl group, a tert-butyl group, a hydroxyethyl group, a methoxyethyl group, a cyanoethyl group, a trifluoromethyl group, a 3-sulfopropyl group and a 4-sulfobutyl group.

The cycloalkyl group represented by R1, R2, R3, R5, R7, R8 or R9 includes a cycloalkyl group having a substituent and an unsubstituted cycloalkyl group. The cycloalkyl group is preferably a cycloalkyl group having from 5 to 12 carbon atoms. Examples of the substituent include an ionic hydrophilic group. Examples of the cycloalkyl group include a cyclohexyl group.

The aralkyl group represented by R1, R2, R3, R5, R7, R8 or R9 includes an aralkyl group having a substituent and an unsubstituted aralkyl group. The aralkyl group is preferably an aralkyl group having from 7 to 20 carbon atoms. Examples of the substituent include an ionic hydrophilic group. Examples of the aralkyl group include a benzyl group and a 2-phenethyl group.

The aryl group represented by R1, R2, R3, R5, R7, R8 or R9 includes an aryl group having a substituent and an unsubstituted aryl group. The aryl group is preferably an aryl group having from 6 to 20 carbon atoms. Examples of the substituent include an alkyl group, an alkoxy group, a halogen atom, an alkylamino group and an ionic hydrophilic group. Examples of the aryl group include a phenyl group, a p-tolyl group, a p-methoxyphenyl group, an o-chlorophenyl group and an m-(3-sulfopropylamino)phenyl group.

The alkylthio group represented by R1, R2, R3, R5, R7, R8 or R9 includes an alkylthio group having a substituent and an unsubstituted alkylthio group. The alkylthio group is preferably an alkylthio group having from 1 to 20 carbon atoms. Examples of the substituent include an ionic hydrophilic group. Examples of the alkylthio group include a methylthio group and an ethylthio group.

The arylthio group represented by R1, R2, R3, R5, R7, R8 or R9 includes an arylthio group having a substituent and an unsubstituted arylthio group. The arylthio group is preferably an arylthio group having from 6 to 20 carbon atoms. Examples of the substituent include an alkyl group and an ionic hydrophilic group. Examples of the arylthio group include a phenylthio group and a p-tolylthio group.

The heterocyclic group represented by R2 or R22 which is described later is preferably a 5- or 6-membered heterocyclic ring and the heterocyclic ring may be further condensed. The heteroatom constituting the heterocyclic ring is preferably N, S or O. The ring may be an aromatic heterocyclic ring or a non-aromatic heterocyclic ring. The heterocyclic ring may be substituted and examples of the substituent are the same as those of the substituent of the aryl group which is described later. The heterocyclic ring is preferably a 6-membered nitrogen-containing aromatic heterocyclic ring and preferred examples thereof include triazine, pyrimidine and phthalazine.

The halogen atom represented by R8 includes a fluorine atom, a chlorine atom and a bromine atom.

The alkoxy group represented by R1, R3, R5 or R8 includes an alkoxy group having a substituent and an unsubstituted alkoxy group. The alkoxy group is preferably an alkoxy group having from 1 to 20 carbon atoms. Examples of the substituent include a hydroxyl group and an ionic hydrophilic group. Examples of the alkoxy group include a methoxy group, an ethoxy group, an isopropoxy group, a methoxyethoxy group, a hydroxyethoxy group and a '3-carboxypropoxy group.

The aryloxy group represented by R8 includes an aryloxy group having a substituent and an unsubstituted aryloxy group. The aryloxy group is preferably an aryloxy group having from 6 to 20 carbon atoms. Examples of the substituent include an alkoxy group and an ionic hydrophilic group. Examples of the aryloxy group include a phenoxy group, a p-methoxyphenoxy group and an o-methoxyphenoxy group.

The acylamino group represented by R8 includes an acylamino group having a substituent and an unsubstituted acylamino group. The acylamino group is preferably an acylamino group having from 2 to 20 carbon atoms. Examples of the substituent include an ionic hydrophilic group. Examples of the acylamino group include an acetamide group, a propionamide group, a benzamide group and a 3,5-disulfobenzamide group.

The sulfonylamino group represented by R8 includes a sulfonylamino group having a substituent and an unsubstituted sulfonylamino group. The sulfonylamino group is preferably a sulfonylamino group having from 1 to 20 carbon atoms. Examples of the sulfonylamino group include a methylsulfonylamino group and an ethylsulfonylamino group.

The alkoxycarbonylamino group represented by R8 includes an alkoxycarbonylamino group having a substituent and an unsubstituted alkoxycarbonylamino group. The alkoxycarbonylamino group is preferably an alkoxycarbonylamino group having from 2 to 20 carbon atoms. Examples of the substituent include an ionic hydrophilic group. Examples of the alkoxycarbonylamino group include an ethoxycarbonylamino group.

The ureido group represented by R8 includes a ureido group having a substituent and an unsubstituted ureido group. The ureido group is preferably a ureido group having from 1 to 20 carbon atoms. Examples of the substituent include an alkyl group and an aryl group. Examples of the ureido group include a 3-methylureido group, a 3,3-dimethylureido group and a 3-phenylureido group.

The alkoxycarbonyl group represented by R7, R8 or R9 includes an alkoxycarbonyl group having a substituent and an unsubstituted alkoxycarbonyl group. The alkoxycarbonyl group is preferably an alkoxycarbonyl group having from 2 to 20 carbon atoms. Examples of the substituent include an ionic hydrophilic group. Examples of the alkoxycarbonyl group include a methoxycarbonyl group and an ethoxycarbonyl group.

The carbamoyl group represented by R2, R7, R8 or R9 includes a carbamoyl group having a substituent and an unsubstituted carbamoyl group. Examples of the substituent include an alkyl group. Examples of the carbamoyl group include a methylcarbamoyl group and a dimethylcarbamoyl group.

The sulfamoyl group represented by R8 includes a sulfamoyl-group having a substituent and an unsubstituted sulfamoyl group. Examples of the substituent include an alkyl group. Examples of the sulfamoyl group include a dimethylsulfamoyl group and a di-(2-hydroxyethyl)sulfamoyl group.

Examples of the alkylsulfonyl group and arylsulfonyl group represented by R8 include a methylsulfonyl group and a phenylsulfonyl group.

The acyl group represented by R2 or R8 includes an acyl group having a substituent and an unsubstituted acyl group. The acyl group is preferably an acyl group having from 1 to 20 carbon atoms. Examples of the substituent include an ionic hydrophilic group. Examples of the acyl group include an acetyl group and a benzoyl group.

The amino group represented by R8 includes an amino group having a substituent and an unsubstituted amino group. Examples of the substituent include an alkyl group, an aryl group and a heterocyclic group. Examples of the amino group include a methylamino group, a diethylamino group, an anilino group and a 2-chloroanilino group.

The heterocyclic group represented by R4, R6 or R10 is the same as the heterocyclic group represented by B₁₁ in formula (1), which may be substituted, and preferred examples, more preferred examples and still more preferred examples are the same as those described above. Examples of the substituent include an ionic hydrophilic group, an alkyl group having from 1 to 12 carbon atoms, an aryl group, an alkylthio group, an arylthio group, a halogen atom, a cyano group, a sulfamoyl group, a sulfonamino group, a carbamoyl group and an acylamino group. The alkyl group, the aryl group and the like each may further have a substituent.

In formula (1-B), Za represents -N=, -NH- or -C(R11)=, Zb and Zc each independently represents -N= or -C(R11)=, and R11 represents a hydrogen atom or a nonmetallic substituent. The nonmetallic substituent represented by R11 is preferably a cyano group, a cycloalkyl group, an aralkyl group, an aryl group, an alkylthio group, an arylthio group or an ionic hydrophilic group. These substituents have the same meanings as the substituents represented by R1, respectively, and preferred examples are also the same. Examples of the skeleton of the heterocyclic ring comprising two 5-membered rings, contained in formula (1-B), are shown below.

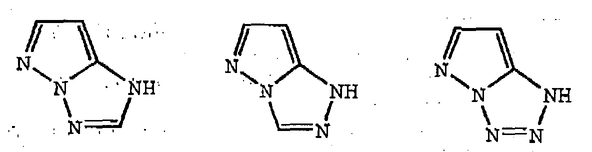

When the above-described substituents each may further have a substituent, examples of the substituent include the substituents which may be substituted on the heterocyclic ring of A₁₁ or B₁₁ in formula (1).

In the case where the dyes represented by formulae (1-A) to (1-C) are used as a water-soluble dye, the dye preferably contains at least one ionic hydrophilic group in the molecule thereof. In such a case, the dye includes dyes where at least one of R1, R2, R3, R5, R7, R8 and R9 in formulae (1-A) to (1-C) is an ionic hydrophilic group, and dyes where R1 to R11 in formulae (1-A) to (1-C) each further has an ionic hydrophilic group as the substituent.

Among the dyes represented by formulae (1-A), (1-B) and (1-C), those preferred are the dyes represented by formula (1-A), and those more preferred are the dyes represented by the following formula (1-A1): 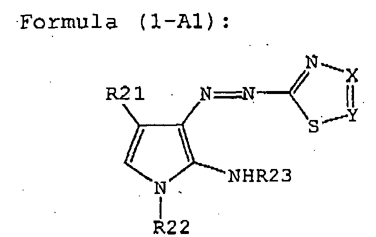 wherein R21 and R23 each represents a hydrogen atom, an alkyl group, a cycloalkyl group, an aralkyl group, an alkoxy group or an aryl group, R22 represents an aryl group or a heterocyclic group, one of X and Y represents a nitrogen atom and the other represents -CR24 (wherein R24 represents a hydrogen atom, a halogen atom, a cyano group, an alkyl group, an alkylthio group, an alkylsulfonyl group, an alkylsulfinyl group, an alkyloxycarbonyl group, a carbamoyl group, an alkoxy group, an aryl group, an arylthio group, an arylsulfonyl group, an arylsulfinyl group, an aryloxy group or an acylamino group). The substituents each may be further substituted.

Of the dyes represented by formula (1-A), dyes having an ionic hydrophilic group are preferred.

Specific preferred examples of the dye represented by formula (1) are set forth below. The dyes of specific examples, which exhibit the above-described property regarding the dye concentration dependency of the molar extinction coefficient, are preferably used in the invention. However, the dye for use in the present invention is not limited to the following specific examples. The compounds can be synthesized by referring to JP-A-2-24191 and JP-A-2001-279145.

In many specific examples set forth below, sodium ion is illustrated as the counter ion of the ionic hydrophilic group, but the counter ion is not limited thereto and an appropriate ion may be used as the counter ion by adjustment at the synthesis.

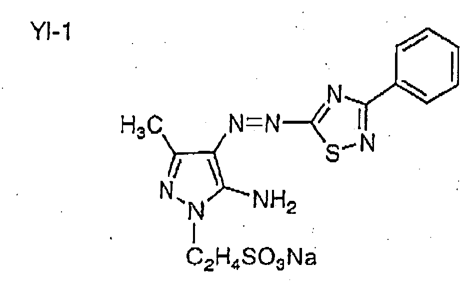

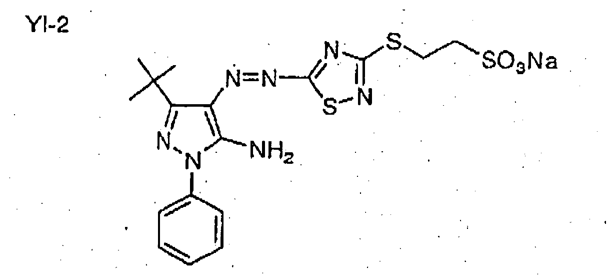

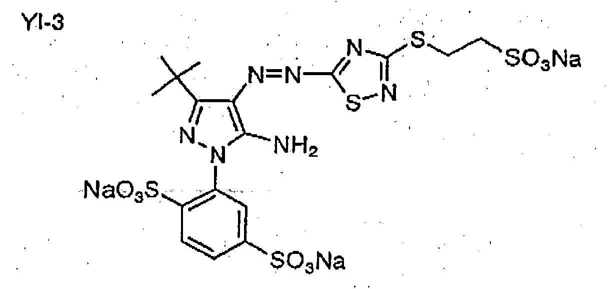

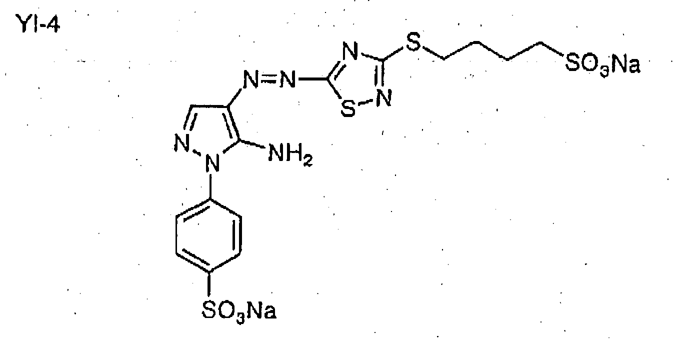

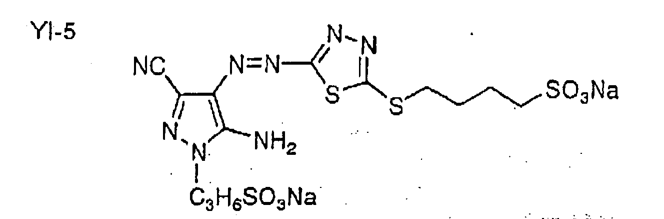

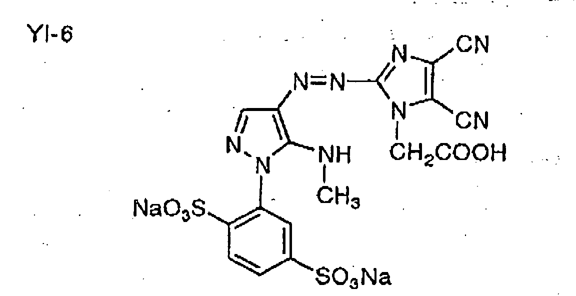

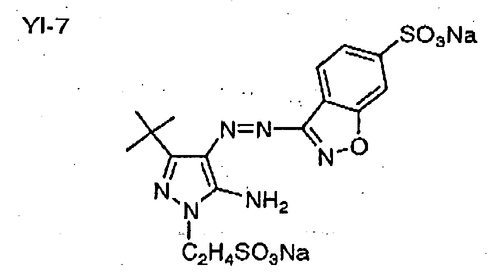

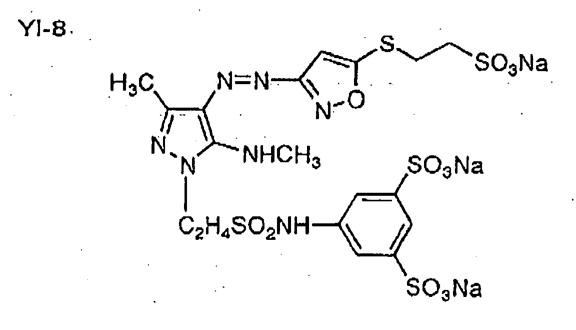

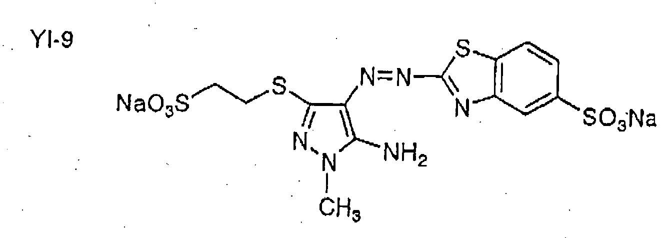

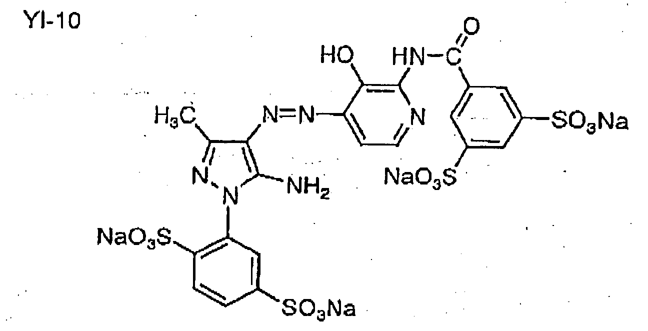

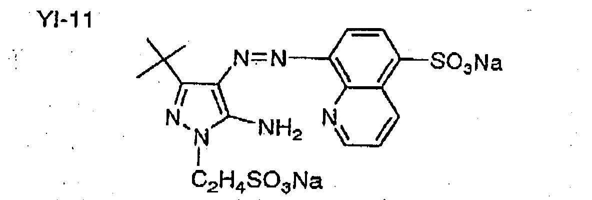

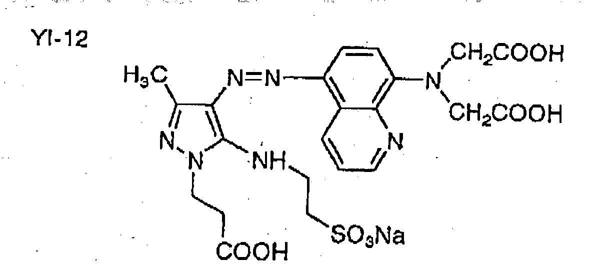

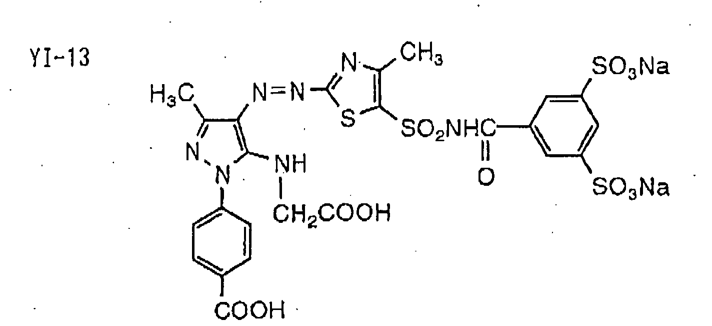

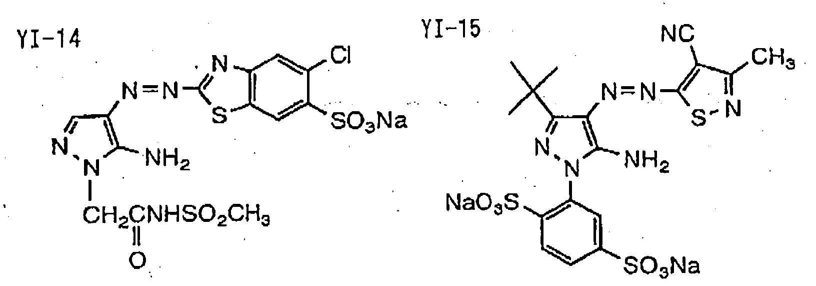

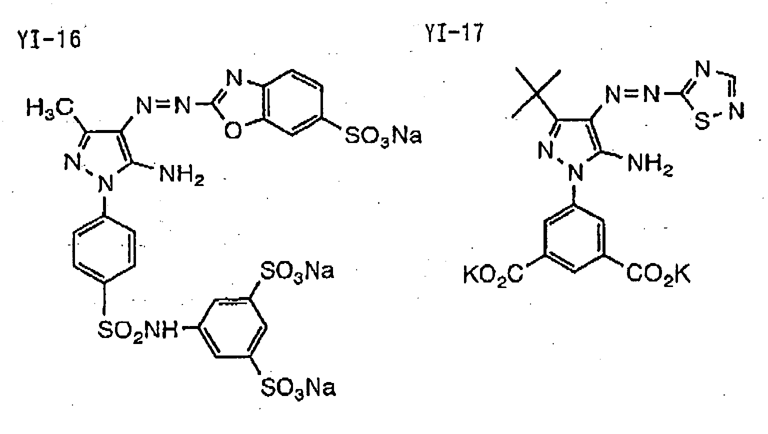

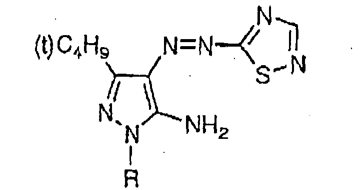

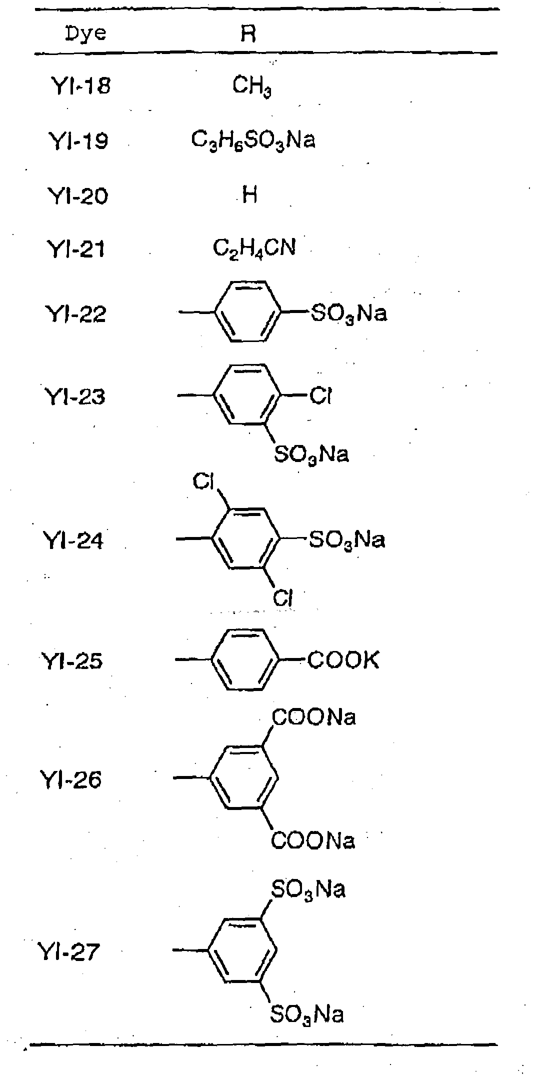

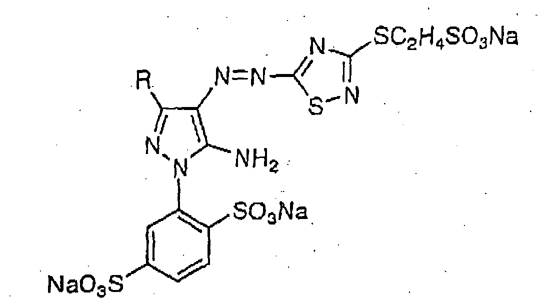

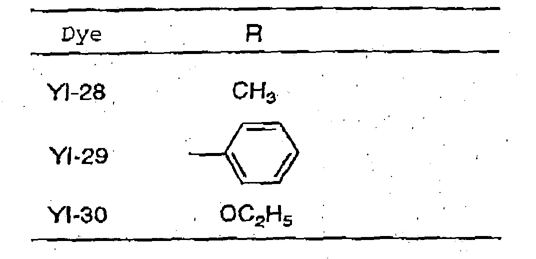

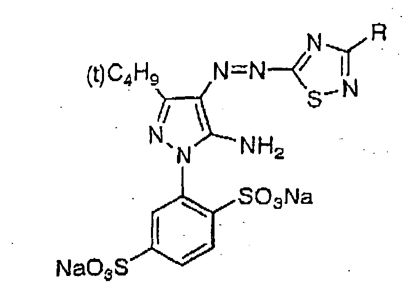

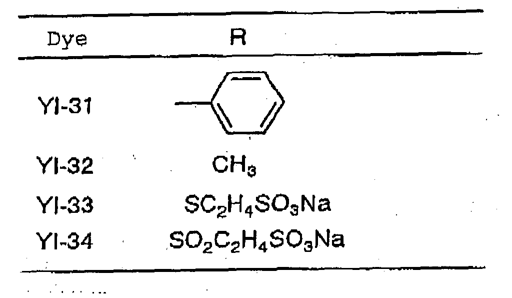

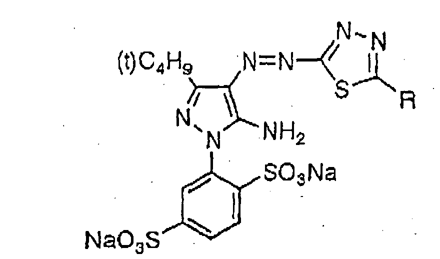

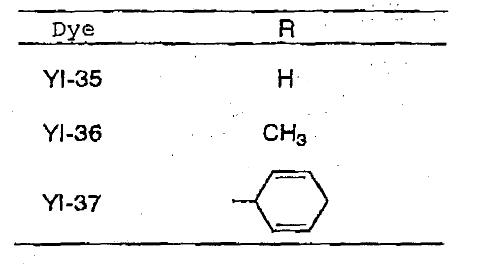

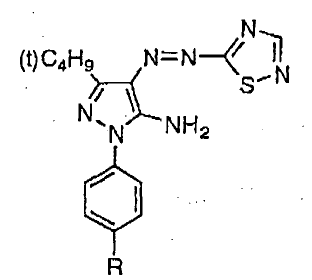

| Dye | R |
|---|---|
| Yl-38 | COOC₄H₉ |
| YI-39 | CON(C₄H₉)₂ |
| Yl-40 | SO₂NHC₁₂H₂₅ |
| YI-41 | OC₈H₁₇ |

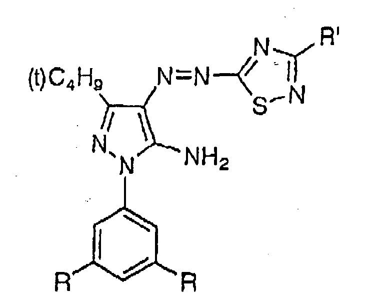

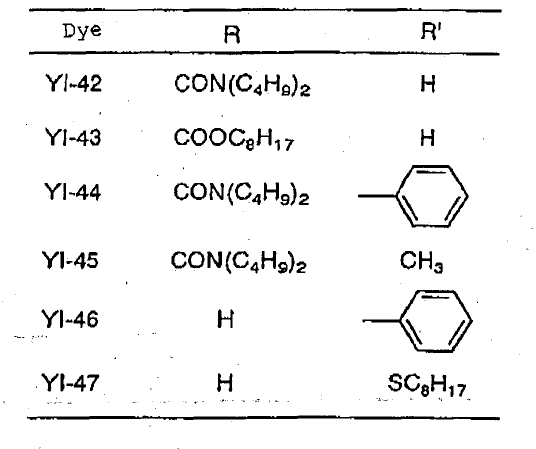

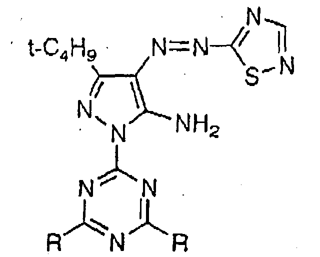

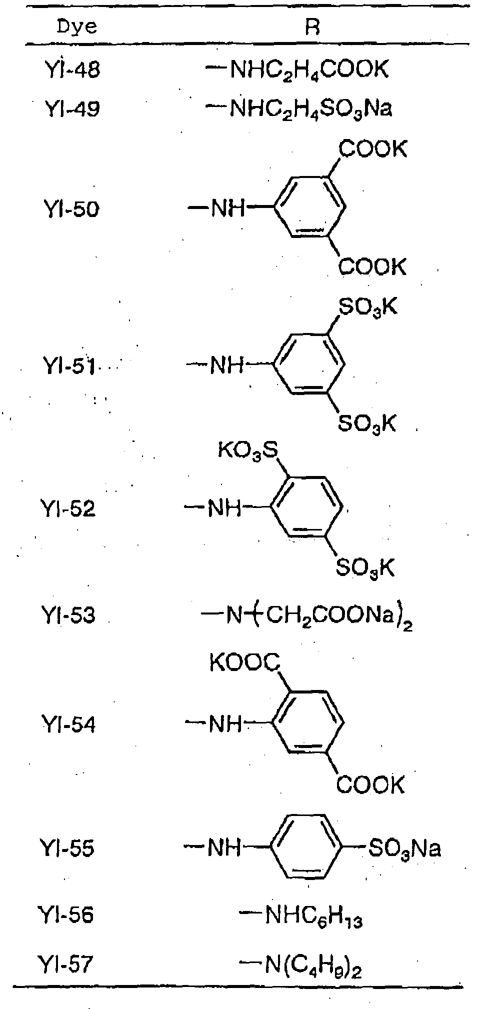

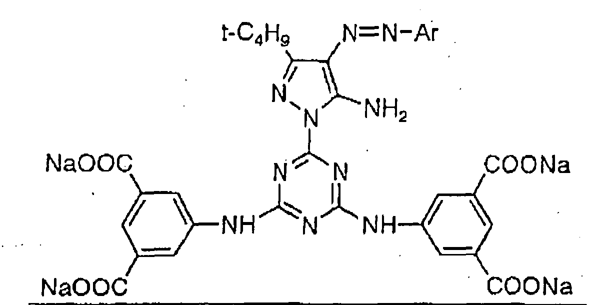

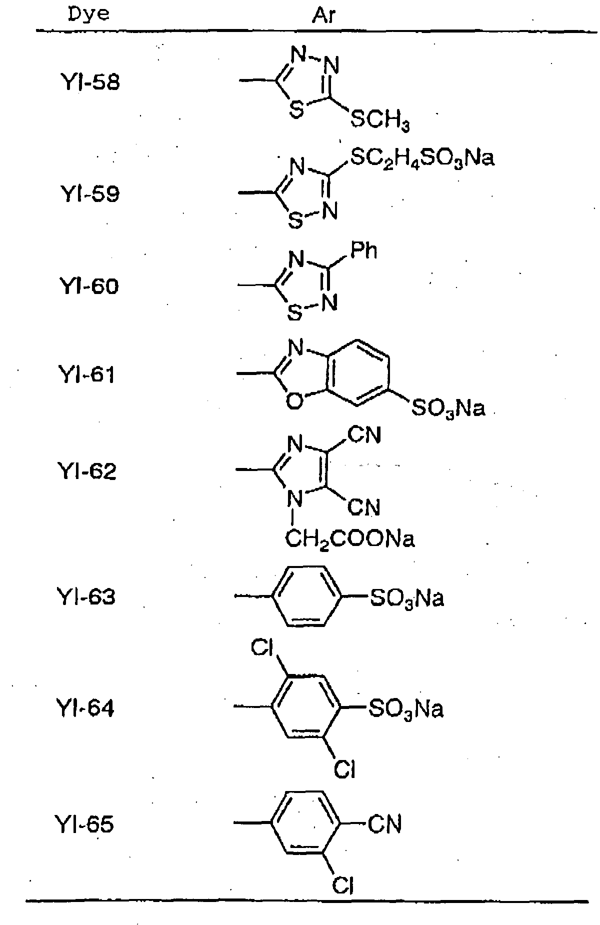

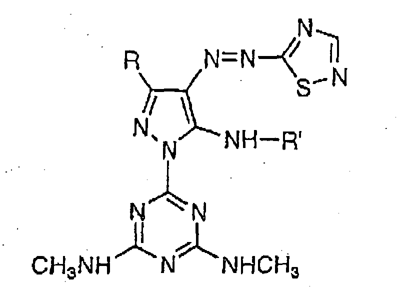

| Dye | R | R' |
|---|---|---|
| Yl-66 | Ph | H |
| Yl-67 | OC₂H₅ | C₂H₅ |
| YI-68 | CH₃ | H |
| YI-69 | t-C₄H₉ | H |
| YI-70 | t-C₄H₉ | -C₂H₄COOH |

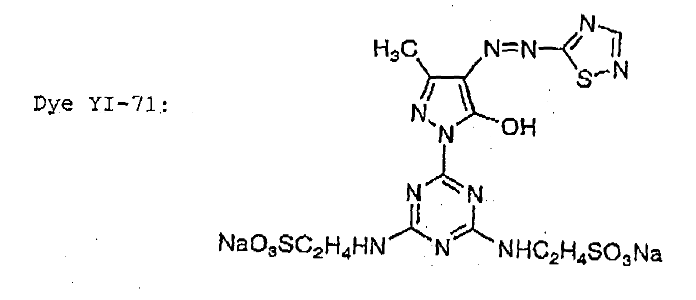

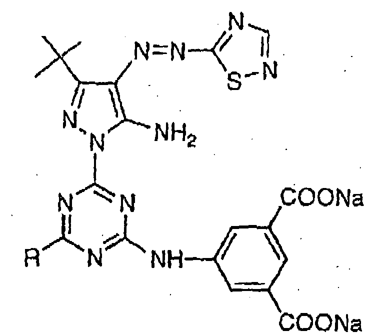

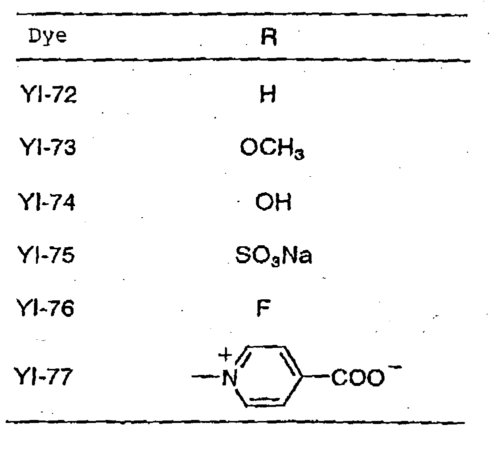

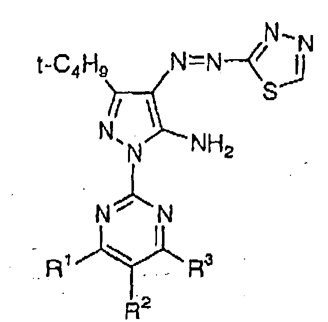

| Dye | R¹ | R² | R³ |
|---|---|---|---|
| Yl-78 | Cl | Cl | Cl |
| Yl-79 | Cl | Cl | F |
| YI-80 | Cl | -CONHPh | Cl |

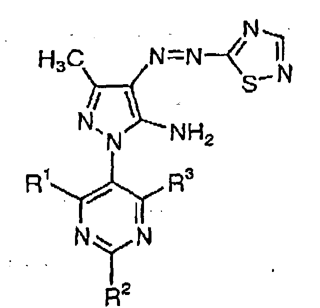

| Dye | R¹ | R² | R³ |
|---|---|---|---|
| YI-81 | F | H | H |
| YI-82 | Cl | H | F |

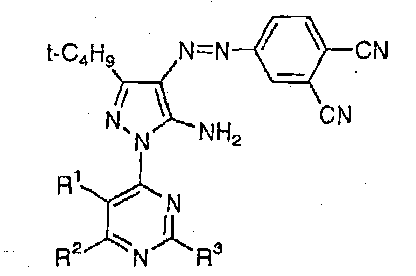

| Dye | R¹ | R² | R³ |
|---|---|---|---|
| Yl-83 | H | F | F |
| Yl-84 | F | F | H |

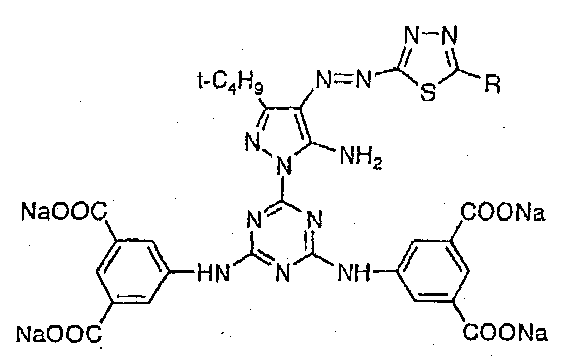

| Dye | R |
|---|---|
| YI-85 | H |
| Yl-86 | CH₃ |
| YI-87 | Ph |
| YI-88 | SCH₂COONa |
| Yl-89 | SC₂H₅ |
| Yl-90 | SC₄H₉-n |
| Yl-91 | SGH₂CHMe₂ |
| YI-92 | SCHMeEt |
| Yl-93 | SC₄H₈-t |
| YI-94 | SC₇H₁₅-n |
| YI-95 | SC₂H₄OC₂H₅ |
| YI-96 | SC₂H₄OG₄H₉-n |
| Yl-97 | SCH₂CF₃ |

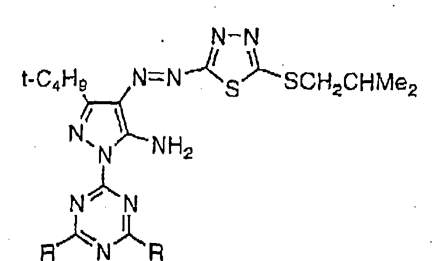

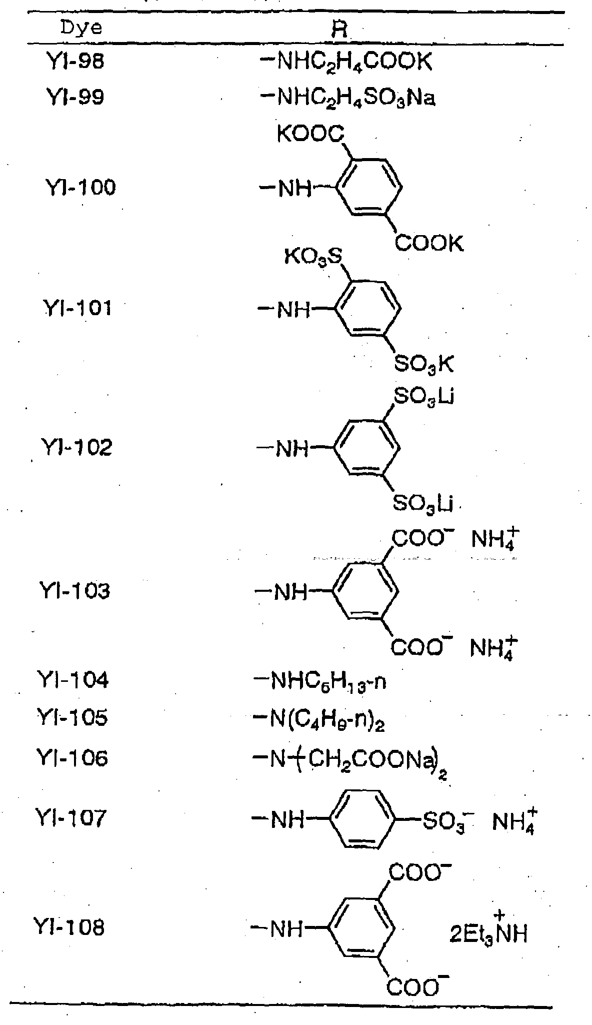

### [Cyan Dye]

The phthalocyanine dye for a cyanine dye is described in detail below.

The phthalocyanine dye for use in the invention is preferably excellent in both light fastness and ozone resistance and small in the change of color hue and surface state (less generation of bronze and less precipitation of dye).

With respect to the light fastness, a dye residual ratio (reflection density after irradiation/initial density×100) is preferably 90% or more, when a portion having a reflection density OD of 1.0 of an image printed on photographic image-receiving paper (for example, Epson PM Paper (trade name) supplied by Seiko Epson Corp.) is irradiated with continuous xenon light of 8,000 lx (ID65 condition of image fastness test method (International Standard ISO18909 through a TAC filter (ultraviolet light transmittable, for protection of print surface) for 3 days. Also, the dye residual ratio when irradiated for 14 days is preferably 85% or more.

With respect to the color hue and surface state, the amount of Cu ion changing into a phthalate as a result of decomposition of the phthalocyanine dye can be used as an index. An amount of the dye present in a print before discoloration is 20 mg/m² or less, preferably 10 mg/m² or less in terms of Cu ion. The amount of Cu ion flowed out from the print as a result of the decomposition of dye upon the action of an oxidizing gas, for example, ozone gas is determined by forming a solid image having the dye amount of 20 mg/m² or less in terms of Cu ion, storing the image in an ozone environment of 5 ppm for 24 hours to cause ozone discoloration and then washing the image with running water. The amount of Cu ion flowed out from the image into water is preferably 20% or less. Before the discoloration, all Cu compounds are trapped in the image-receiving material.

The phthalocyanine dye having such properties can be obtained, for example, by 1) elevating the oxidation potential, 2) enhancing the aggregation property, 3) introducing an aggregation accelerating group, intensifying the hydrogen bond at the time of π-π stacking or 4) not incorporating a substituent at the α-position, that is, facilitating the stacking.

Conventional phthalocyanine dyes used for ink are derived from an unsubstituted phthalocyanine through sulfonation and these are a mixture which cannot be specified in the number and positions of substituents. On the other hand, the phthalocyanine dye preferably used in the present invention is a phthalocyanine dye which can be specified in the number and positions of substituents. The first structural feature is that the dye is a phthalocyanine dye obtained by not passing through sulfonation of an unsubstituted phthalocyanine. The second structural feature is that the dye has an electron-withdrawing group at the β-position of a benzene ring of phthalocyanine, preferably at the β-positions of all benzene rings. Specifically, useful dyes are those where a sulfonyl group is substituted (see, JP-A-2002-249677 and JP-A-2003-119415), a sulfamoyl group is substituted (see, JP-A-2002-302623 and JP-A-2003-3109), a heterocyclic sulfamoyl group is substituted (see, JP-A-2002-294097 and JP-A-2003-3086), a heterocyclic sulfonyl group is substituted (see, JP-A-2002-275836 and JP-A-2003-3099), a specific sulfamoyl group is substituted (see, JP-A-2002-256167), a carbonyl group is substituted (see, JP-A-2003-213153), or a specific substituent for enhancing'the solubility or ink stability or preventing the bronze phenomenon, such as substituent having an asymmetric carbon (see, JP-A-2003-213168) or Li salt (see, JP-A-2003-213167), is substituted.

The first physical feature is to have a high oxidation potential (more positive than 1.0 V). The second physical feature is to have a strong aggregation property. Specifically, the dye having the property includes those where the aggregation of oil-soluble dyes is specified (see, JP-A-2001-342373) or the aggregation of water-soluble dyes is specified (see, JP-A-2002-309118).

With respect to the relationship between the number of aggregating groups and the performance (light absorbance of ink), when the aggregating group is introduced, reduction of light absorbance or shifting of λmax to the shorter wave is liable to occur even in a dilute solution. With respect to the relationship between the number of aggregating groups and the performance (reflection density OD on Epson PM920 Image-Receiving Paper), as the number of aggregating groups increases, the reflection density OD at the same ion intensity more decreases. That is, the aggregation is considered to proceed on the image-receiving paper. With respect to the relationship between the number of aggregating groups and the performance (ozone resistance/light fastness), as the number of aggregating groups increases, the ozone resistance is more enhanced. A dye having a large number of aggregating groups is liable to be enhanced also in the light fastness. In order to impart the ozone resistance, a substituent must be present on the benzene ring of phthalocyanine. The reflection density OD and the fastness are in the trade-off relationship and therefore, it is necessary to enhance the light fastness without weakening the aggregation.

Preferred embodiments of the cyan ink using the phthalocyanine dye having these characteristic features are:
1) a cyan ink where after xenon light (Xe of 1.1 W/m (intermittent conditions)) is irradiated through a TAC filter on the portion having a reflection density OD of 1.0 of an image printed on Epson PM Photographic Image-Receiving Paper for 3 days, the dye residual ratio is 90% or more;
2) a cyan ink where after the portion having a reflection density of 0.9 to 1.1 in a Status A filter of a printed image is stored in an ozone environment of 5 ppm for 24 hours, the dye residual ratio is 60% or more (preferably 80% or more);
3) a cyan ink where after ozone discoloration under the same conditions as in 2), the amount of Cu ion flowed out into water is 20% or less of the amount of Cu ion of all dyes; and
4) a cyan ink which can be permeated into 30% or more of the upper portion of the image-receiving layer of a specific image-receiving paper. Judgment of the permeation is conducted by visual observation of a microscopic photography of a section of the image-receiving paper having an image printed having reflection density of 1.0 cut by a microtome.

Examples of the dye having the above-described characteristic features include a phthalocyanine dye represented by the following formula (2): 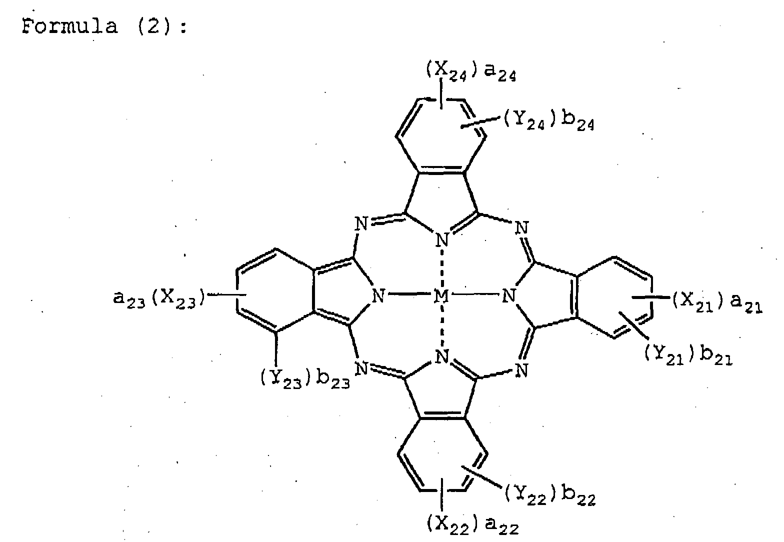 wherein X₂₁, X₂₂, X₂₃ and X₂₄ each independently represents -SO-Z₂, -SO₂-Z₂, -SO₂NR₂₁R₂₂, a sulfo group, -CONR₂₁R₂₂ or -COOR₂₁,
Z₂ represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group,
R₂₁ and R₂₂ each independently represents a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group,
Y₂₁, Y₂₂, Y₂₃ and Y₂₄ each independently represents a monovalent substituent,
a₂₁ to a₂₄ and b₂₁ to b₂₄ represent the number of substituents X₂₁ to X₂₄ and Y₂₁ to Y₂₄, respectively, a₂₁ to a₂₄ each independently represents an integer of 0 to 4, provided that all of them are not 0 at the same time, and b₂₁ to b₂₄ each independently represents an integer of 0 to 4, provided that when a₂₁ to a₂₄ and b₂₁ to b₂₄ each represents a number of 2 or more, the plurality of X₂₁s, X₂₂s, X₃₃s, X₂₄s, Y₂₁s, Y₂₂s, Y₂₃s or Y₂₄s may be the same or different, and
M represents a hydrogen atom, a metal atom or an oxide, hydroxide or halide thereof.

It is known that phthalocyanine dyes have fastness but they are inferior in the fastness to ozone gas when used as a dye for inkjet recording.

In the present invention, as described above, an electron-withdrawing group is preferably introduced into the phthalocyanine skeleton to render the oxidation potential more positive than 1.0 V (vs SCE). The oxidation potential can be rendered more positive by introducing a substituent having a large Hammett's substituent constant σp value (a measure for the electron-withdrawing property or electron-donating property), for example, a sulfinyl group, sulfonyl group or sulfamoyl group.

For the purpose of controlling the oxidation potential, the phthalocyanine dye represented by formula (2) is also preferably used.

The phthalocyanine dye represented by formula (2) is described in detail below.

In formula (2), X₂₁, X₂₂, X₂₃ and X₂₄ each independently represents -SO-Z₂ -SO₂-Z₂, -SO₂NR₂₁R₂₂, a sulfo group, -CONR₂₁R₂₂ or -CO₂R₂₁. Among these substituents, preferred are -SO-Z₂, -SO₂-Z₂, -SO₂NR₂₁R₂₂ and -CONR₂₁R₂₂, more preferred are -SO₂-Z₂ and -SO₂NR₂₁R₂₂, and most preferred is -SO₂-Z₂. In the case where a₂₁ to a₂₄ each showing the number of substituents each represents a number of 2 or more, the plurality of X₂₁s, X₂₂s, X₂₃s or X₂₄s may be the same or different and each independently represents any one of the above-described groups. X₂₁, X₂₂, X₂₃ and X₂₄ may be completely the same substituents, may be substituents of the same kind but partially different as in the case, for example, where X₂₁, X₂₂, X₂₃ and X₂₄ all are -SO₂-Z₂ and Z₂s are different from each other, or may include substituents different from each other (for example, -SO₂-Z₂ and -SO₂NR₂₁R₂₂) .

Each Z₂ independently represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group, preferably a substituted or unsubstituted alkyl group, a substituted or unsubstituted aryl group or a substituted or unsubstituted heterocyclic group, and most preferably a substituted alkyl group, a substituted aryl group or a substituted heterocyclic group.

R₂₁ and R₂₂ each independently represents a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group, preferably a hydrogen atom, a substituted or unsubstituted alkyl group, a substituted or unsubstituted aryl group, or a substituted or unsubstituted heterocyclic group, more preferably a hydrogen atom, a substituted alkyl group, a substituted aryl group or a substituted heterocyclic group. However, it is not preferred that both R₂₁ and R₂₂ are hydrogen atoms.

The substituted or unsubstituted alkyl group represented by R₂₁, R₂₂ or Z₂ is preferably an alkyl group having from 1 to 30 carbon atoms, more preferably a branched alkyl group because the solubility of dye and the stability of ink are improved, and still more preferably an alkyl group having an asymmetric carbon (use in the racemic form). Examples of the substituent include those described later as the substituent when Z₂, R₂₁, R₂₂, Y₂₁, Y₂₂, Y₂₃ and Y₂₄ further have a substituent. In particular, a hydroxyl group, an ether group, an ester group, a cyano group, an amido group and a sulfonamido group are preferred because the aggregation property and fastness of dye are enhanced. Further, the alkyl group may be substituted by a halogen atom or an ionic hydrophilic group. The number of carbon atoms in the alkyl group does not contain carbon atoms of substituents and this applies to other groups also.

The substituted or unsubstituted cycloalkyl- group represented by R₂₁, R₂₂ or Z₂ is preferably a cycloalkyl group having from 5 to 30 carbon atoms, more preferably a cycloalkyl group having an asymmetric carbon (use in the racemic form) because the solubility of dye and the stability of ink are improved. Examples of the substituent include those described later as the substituent when Z₂, R₂₁, R₂₂, Y₂₁, Y₂₂, Y₂₃ and Y₂₄ further have a substituent. In particular, a hydroxyl group, an ether group, an ester group, a cyano group, an amido group and a sulfonamido group are preferred because the aggregation property and fastness of dye are enhanced. Further, the cycloalkyl group may be substituted by a halogen atom or an ionic hydrophilic group.

The substituted or unsubstituted alkenyl group represented by R₂₁, R₂₂ or Z₂ is preferably an alkenyl group having from 2 to 30 carbon atoms, more preferably a branched alkenyl group because the solubility of dye and the stability of ink are improved, and still more preferably an alkenyl group having an asymmetric carbon (use in the racemic form). Examples of the substituent include those described later as the substituent when Z₂, R₂₁, R₂₂, Y₂₁, Y₂₂, Y₂₃ and Y₂₄ further have a substituent. In particular, a hydroxyl group, an ether group, an ester group, a cyano group, an amido group and a sulfbnamido group are preferred because the aggregation property and fastness of dye are enhanced. Further, the alkenyl group may be substituted by a halogen atom or an ionic hydrophilic group.

The substituted or unsubstituted aralkyl group represented by R₂₁, R₂₂ or Z₂ is preferably an aralkyl group having from 7 to 30 carbon atoms, more preferably a branched aralkyl group because the solubility of dye and the stability of ink are improved, and still more preferably an aralkyl group having an asymmetric carbon (use in the racemic form). Examples of the substituent include those described later as the substituent when Z₂, R₂₁, R₂₂, Y₂₁, Y₂₂, Y₂₃ and Y₂₄ further have a substituent. In particular, a hydroxyl group, an ether group, an ester group, a cyano group, an amido group and a sulfonamido group are preferred because the aggregation property and fastness of dye are enhanced. Further, the aralkyl group may be substituted by a halogen atom or an ionic hydrophilic group.

The substituted or unsubstituted aryl group represented by R₂₁, R₂₂ or Z₂ is preferably an aryl group having from 6 to 30 carbon atoms. Examples of the substituent include those described later as the substituent when Z₂, R₂₁, R₂₂, Y₂₁, Y₂₂, Y₂₃ and Y₂₄ further have a substituent. In particular, an electron-withdrawing group is preferred because the dye can have a noble oxidation potential and be improved in the fastness. Examples of the electron-withdrawing group include those having a positive Hammett's substituent constant σp value. Among these, preferred are a halogen atom, a heterocyclic group, a cyano group, a carboxyl group, an acylamino group, a sulfonamido group, a sulfamoyl group, a carbamoyl group, a sulfonyl group, an imido group, an acyl group, a sulfo group and a quaternary ammonium group, more preferred are a cyano group, a carboxyl group, a sulfamoyl group, a carbamoyl group, a sulfonyl group, an imido group, an acyl group, a sulfo group and a quaternary ammonium group.

The heterocyclic group represented by R₂₁, R₂₂ ord Z₂ is preferably a 5- or 6-membered ring and the ring may be further condensed. Also, the ring may be an aromatic heterocyclic ring or a non-aromatic heterocyclic ring. Examples of the heterocyclic group represented by R₂₁, R₂₂ and Z₂ are shown below in the form of a heterocyclic ring by omitting the substitution site. The substitution site is not limited and, for example, in the case of pyridine, the 2-position, 3-position and 4-position can be substituted. Examples of the heterocyclic ring include pyridine, pyrazine, pyrimidine, pyridazine, triazine; quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazole, benzisoxazole, pyrrolidine, piperidine, piperazine, imidazolidine and thiazoline. In particular, an aromatic heterocyclic group is preferred. Preferred examples thereof include, shown in the same manner as above, pyridine, pyrazine, pyrimidine, pyridazine, triazine, pyrazole, imidazole, benzimidazole, triazole, thiazole, benzothiazole, isothiazole, benzisothiazole and thiadiazole. The groups each may have a substituent and examples of the substituent include those described later as the substituent when Z₂, R₂₁, R₂₂, Y₂₁, Y₂₂, X₂₃ and Y₂₄ can further have a substituent. Preferred substituents are the same as the above-described substituents of the aryl group and more preferred substituents are the same as the above-described more preferred substituents of the aryl group.

Y₂₁, Y₂₂ Y₂₃ and Y₂₄ each independently represents a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an acylamino group, an arylamino group, a ureido group, a sulfamoylamino group, an alkylthio group, an arylthio group, an alkoxycarbonylamino group, a sulfonamido group, a carbamoyl group, a sulfamoyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a phosphoryl group, an acyl group, a carboxyl group or a sulfo group. The groups each may further have a substituent.

Y₂₁, Y₂₂, Y₂₃ and Y₂₄ each is preferably a hydrogen atom, a halogen atom, an alkyl group, an aryl group, a cyano group, an alkoxy group, an amido group, a ureido group, a sulfonamido group, a carbamoyl group, a sulfamoyl group, an alkoxycarbonyl group, a carboxyl group or a sulfo group, more preferably a hydrogen atom, a halogen atom, a cyano group, a carboxyl group or a sulfo group, and most preferably a hydrogen atom.

When R₂₁, R₂₂, Z₂, Y₂₁, Y₂₂, Y₂₃ and Y₂₄ each is a group which can further have a substituent, the group may further have the following substituent.

Examples of the substituent include a linear or branched alkyl group having from 1 to 12 carbon atoms, a linear or branched aralkyl group having from 7 to 18 carbon atoms, a linear or branched alkenyl group having from 2 to 12 carbon atoms, a linear or branched alkynyl group having from 2 to 12 carbon atoms, a linear or branched cycloalkyl group having from 3 to 12 carbon atoms, a linear or branched cycloalkenyl group having from 3 to 12 carbon atoms (these groups each is preferably a group having a branched chain because the solubility of dye and the stability of ink are improved, more preferably a group having an asymmetric carbon; specific examples of the groups include a methyl group, an ethyl group, a propyl group, an isopropyl group, a sec-butyl group, a tert-butyl group, a 2-ethylhexyl group, a 2-methylsulfonylethyl group, a 3-phenoxypropyl group, a trifluoromethyl group, a cyclopentyl group, a halogen atom (e.g., chlorine, bromine), an aryl group (e.g., phenyl, 4-tert-butylphenyl, 2,4-di-tert-amylphenyl), a heterocyclic group (e.g., imidazolyl, pyrazolyl, triazolyl, 2-furyl, 2-thienyl, 2-pyrimidinyl, 2-benzothiazolyl), a cyano group, a hydroxyl group, a nitro group, a carboxy group, an amino group, an alkyloxy group (e.g., methoxy, ethoxy, 2-methoxyethoxy, 2-methanesulfonylethoxy), an aryloxy group (e.g., phenoxy, 2-methylphenoxy, 4-tert-butylphenoxy, 3-nitrophenoxy, 3-tert-butyloxycarbamoylphenoxy, 3-methoxycarbamoyl), an acylamino group (e.g., acetamido, benzamido, 4-(3-tert-butyl-4-hydroxyphenoxy)butanamido), an alkylamino group (e.g., methylamino, butylamino, diethylamino, methylbutylamino), an anilino group (e.g., phenylamino, 2-chloroanilino), a ureido group (e.g., phenylureido, methylureido, N, N-dibutylureido), a sulfamoylamino group (e.g., N,N-dipropylsulfamoylamino), an alkylthio group (e.g., methylthio, octylthio, 2-phenoxyethylthio), an arylthio group (e.g., phenylthio, 2-butoxy-5-tert-octylphenylthio, 2-carboxyphenylthio), an alkyloxycarbonylamino group (e.g., methoxycarbonylamino), a sulfonamido group (e.g., methane-sulfonamido, benzenesulfonamido, p-toluenesulfonamido), a carbamoyl group (e.g., N-ethylcarbamoyl, N,N-dibutylcarbamoyl), a sulfamoyl group (e.g., N-ethylsulfamoyl, N,N-dipropylsulfamoyl, N-phenylsulfamoyl), a sulfonyl group (e.g., methanesulfonyl, octanesulfonyl, benzenesulfonyl, toluenesulfonyl), an alkyloxycarbonyl group (e.g., methoxycarbonyl, butyloxycarbonyl), a heterocyclic oxy group (e.g., 1-phenyltetrazol-5-oxy, 2-tetrahydropyranyloxy), an azo group (e.g., phenylazo, 4-methoxyphenylazo, 4-pivaloylaminophenylazo, 2-hydroxy-4-propanoylphenylazo), an acyloxy group (e.g., acetoxy), a carbamoyloxy group (e.g., N-methylcarbamoyloxy, N-phenylcarbamoyloxy), a silyloxy group (e.g., trimethylsilyloxy, dibutylmethylsilyloxy), an aryloxycarbonylamino group (e.g., phenoxycarbonylamino), an imido group (e.g., N-succinimido, N-phthalimido), a heterocyclic thio group (e.g., 2-benzothiazolylthio, 2,4-di-phenoxy-1, 3, 5-triazole-6-thio, 2-pyridylthio), a sulfinyl group (e.g., 3-phenoxypropylsulfinyl), a phosphonyl group (e.g., phenoxyphosphonyl, octyloxyphosphonyl, phenylphosphonyl), an aryloxycarbonyl group (e.g., phenoxycarbonyl), an acyl group (e.g., acetyl, 3-phenylpropanoyl, benzoyl), and an ionic hydrophilic group (e.g., carboxyl, sulfo, phosphono, quaternary ammonium).

In the case where the phthalocyanine dye represented by formula (2) is water-soluble, the dye preferably contains an ionic hydrophilic group. Examples of the ionic hydrophilic group include a sulfo group, a carboxyl group, a phosphono group and a quaternary ammonium group. Among the ionic hydrophilic groups, preferred are a carboxyl group, a phosphono group and a sulfo group, more preferred are a carboxyl group and a sulfo group. The carboxyl group, the phosphono group and the sulfo group each may be in a salt state and examples of the counter ion for forming the salt include ammonium ion, alkali metal ions (e.g., lithium ion, sodium ion, potassium ion) and organic cations (e.g., tetramethylammonium ion, tetramethylguanidium ion, tetramethylphosphonium). Among the counter ions, alkali metal salts are preferred and a lithium salt is more preferred because the solubility of dye and the stability of ink are improved.

As for the number of the ionic hydrophilic group, the phthalocyanine dye preferably contains at least two ionic hydrophilic groups, more preferably at least two sulfo groups and/or carboxyl groups, per molecule.

In formula (2), a₂₁ to a₂₄ and b₂₁ to b₂₄ represent numbers of substituents X₂₁, X₂₂, X₂₃ and X₂₄ and Y₂₁, Y₂₂, Y₂₃ and Y₂₄, respectively. a₂₁ to a₂₄ each independently represents an integer of 0 to 4 but all are not 0 at the same time. b₂₁ to b₂₄ each independently represents an integer of 0 to 4. When a₂₁ to a₂₄ and b₂₁ to b₂₄ each represents an integer of 2 or more, a plurality of substituents X₂₁, X₂₂, X₂₃, X₂₄, X₂₁, Y₂₂, Y₂₃ or Y₂₄ may be the same or different.
a₂₁ and b₂₁ satisfy the relationship of a₂₁+b₂₁=4. In particular, a combination that a₂₁ represents 1 or 2 and b₂₁ represents 3 or 2 is preferred, and a combination that a₂₁ represents 1 and b₂₁ represents 3 is most preferred.

The same relationship as that between a₂₁ and b₂₁ is present in each of the pairs a₂₂ and b₂₂, a₂₃ and b₂₃, and a₂₄ and b₂₄, and the preferred combination is also the same.

M represents a hydrogen atom, a metal element or an oxide, hydroxide or halide thereof.

M is preferably a hydrogen atom, a metal element such as Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb and Bi, an oxide such as VO and GeO, a hydroxide such as Si(OH)₂, Cr(OH)₂ and Sn(OH)₂, or a halide such as AlCl, SiCl₂, VCl, VCl₂, VOCl, FeCl, GaCl and ZrCl.

Among these, more preferred are Cu, Ni, Zn and Al, and most preferred is Cu.

In the phthalocyanine dye represented by formula (2), Pc (phthalocyanine ring) may also form a dimer (for example, Pc-M-L-M-Pc) or a trimer through L (divalent linking group). In such a case, Ms may be the same or different.

The divalent linking group represented by L is preferably an oxy group -O- a thio group -S-, a carbonyl group -CO-, a sulfonyl group -SO₂-, an imino group -NH-, a methylene group -CH₂- or a group formed by combining two or more of these groups.

As for the preferred combination of substituents in the compound represented by formula (2), a compound where at least one of various substituents is the preferred group is preferred, a compound where a larger number of various substituents are the preferred groups is more preferred, and a compound where all substituents are the preferred groups is most preferred.

Among the phthalocyanine dyes represented by formula (2), more preferred is a phthalocyanine dye having a structure represented by the following formula (5): 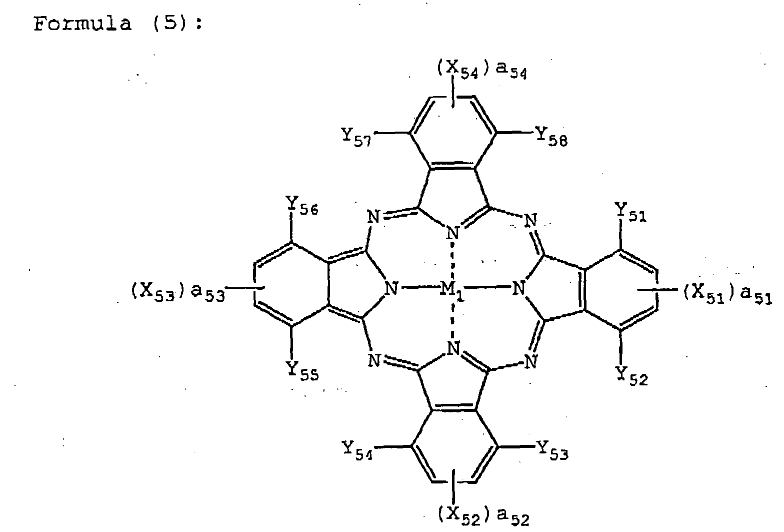 wherein X₅₁ to X₅₄, Y₅₁ to Y₅₈ and M₁ have the same meanings as X₂₁ to X₂₄, Y₂₁ to Y₂₄ and M in formula (2), respectively, and a₅₁ to a₅₄ each independently represents an integer of 1 or 2.

The phthalocyanine dye represented by formula (5) is described in detail below.

In formula (5), X₅₁ to X₅₄ and Y₅₁ to Y₅₈ have the same meanings as X₂₁ to X₂₄ and Y₂₁ to Y₂₄ in formula (2), respectively, and preferred examples are also the same. M₁ has the same meaning as M in formula (2) and preferred examples are also the same.

In formula (5), a₅₁ to a₅₄ each independently represents an integer of 1 or 2 and preferably satisfy 4≤a₅₁+a₅₂+a₅₃+a₅₄≤6, and a₅₁=a₅₂=a₅₃=a₅₄=1 is more preferred.

X₅₁, X₅₂, X₅₃ and X₅₄ may be completely the same substituents, may be substituents of the same kind but partially different as in the case, for example, where X₅₁, X₅₂, X₅₃ and X₅₄ all are -SO₂-Z₂ and Z₂s are different from each other, or may include substituents different from each other, for example, -SO₂-Z₂ and -SO₂NR₂₁R₂₂.

In the phthalocyanine dye represented by formula (5), the following combinations of substituents are particularly preferred.

X₅₁ to X₅₄ each independently represents preferably -SO-Z₂, -SO₂-Z₂, -SO₂NR₂₁R₂₂ or -CONR₂₁R₂₂, more preferably -SO₂-Z₂ or -SO₂NR₂₁R₂₂, and most preferably -SO₂-Z₂.

Z₂ is preferably a substituted or unsubstituted alkyl group, a substituted or unsubstituted aryl group or a substituted or unsubstituted heterocyclic group, and most preferably a substituted alkyl group, a substituted aryl group or a substituted heterocyclic group. In particular, the case where an asymmetric carbon is present in the substituent (use in the racemic form) is preferred because the solubility of dye and the stability of ink are enhanced. Also, the case where a hydroxyl group, an ether group, an ester group, a cyano group, an amido group or a sulfonamido group is present in the substituent is preferred because the aggregation property and fastness are improved.

R₂₁ and R₂₂ each independently represents preferably a hydrogen atom, a substituted or unsubstituted alkyl group, a substituted or unsubstituted aryl group or a substituted or unsubstituted heterocyclic group, more preferably a hydrogen atom, a substituted alkyl group, a substituted aryl group or a substituted heterocyclic group. However, it is not preferred that both R₂₁ and R₂₂ are hydrogen atoms. In particular, the case where an asymmetric carbon is present in the substituent (use in the racemic form) is preferred because the solubility of dye and the stability of ink are enhanced. Also, the case where a hydroxyl group, an ether group, an ester group, a cyano group, an amido group or a sulfonamido group is present in the substituent is preferred because the aggregation property and fastness are improved.

Y₅₁ to Y₅₈ each independently represents preferably a hydrogen atom, a halogen atom, an alkyl group, an aryl group, a cyano group, an alkoxy group, an amido group, a ureido group, a sulfonamido group, a carbamoyl group, a sulfamoyl group, an alkoxycarbonyl group, a carboxyl group or a sulfo group, more preferably a hydrogen atom, a halogen atom, a cyano group, a carboxyl group or a sulfo group, and most preferably a hydrogen atom.

a₅₁ to a₅₄ each independently represents preferably 1 or 2 and it is more preferred that all are 1.

M₁ represents a hydrogen atom, a metal element or an oxide, hydroxide or halide thereof, preferably Cu, Ni, Zn or A1, and most preferably Cu.

In the case where the phthalocyanine dye represented by formula (5) is water-soluble, the dye preferably contains an ionic hydrophilic group. Examples of the ionic hydrophilic group include a sulfo group, a carboxyl group, a phosphono group and a quaternary ammonium group. Among these ionic hydrophilic groups, preferred are a carboxyl group, a phosphono group and a sulfo group, more preferred are a carboxyl group and a sulfo group. The carboxyl group, the phosphono group and the sulfo group each may be in a salt state and examples of the counter ion for forming the salt include ammonium ion, alkali metal ions (e.g., lithium ion, sodium ion, potassium ion) and organic cations (e.g., tetramethylammonium ion, tetramethylguanidium ion, tetramethylphosphonium). Among these counter ions, alkali metal salts are preferred and a lithium salt is more preferred because the solubility of dye and the stability of ink are improved.

As for the number of the ionic hydrophilic group, the phthalocyanine-base dye preferably contains at least two ionic hydrophilic groups, more preferably at least two sulfo groups and/or carboxyl groups, per molecule.

As for the preferred combination of substituents in the compound represented by formula (5), a compound where at least one of various substituents is the preferred group is preferred, a compound where a larger number of various substituents are the preferred groups is more preferred, and a compound where all substituents are the preferred groups is most preferred.

As for the chemical structure of the phthalocyanine dye represented by formula (5), at least one electron-withdrawing group such as sulfinyl group, sulfonyl group and sulfamoyl group is preferably introduced into respective four benzene rings of phthalocyanine such that the total of σp values of the substituents in the entire phthalocyanine skeleton becomes 1.6 or more.

The Hammett's substituent constant σp value is briefly described. The Hammett's rule is an empirical rule advocated by L.P. Hammett in 1935 so as to quantitatively discuss the effect of substituent on the reaction or equilibrium of benzene derivatives and its propriety is widely admitted at present. The substituent constant determined by the Hammett's rule includes a σp value and a σm value and these values can be found in a large number of ordinary publications and they are described in detail, for example, in J-A. Dean (compiler), Lange's Handbook of Chemistry, 12th ed., McGraw-Hill (1979), and Kagakuno Ryoiki (Chemistry Region), special number, No. 122, pp. 96-103, Nankodo (1979). In the present invention, each substituent is limited or described by using the Hammett's substituent constant σp but it does not mean that the substituent is limited only to that having a known value which can be found in the. above-described publications. Needless to say, the substituent includes a substituent σp value of which is not known in publication but when measured based on the Hammett's rule, falls within the range specified. Furthermore, although the dye for use in the present invention includes that which is not a benzene derivative, the σp value is used as a measure for showing the electron effect of the substituent irrespective of the substitution site. In the present invention, the σp value is used in such a meaning.

Inevitably in view of the synthesis method, the phthalocyanine dye represented by formula (2) is usually a mixture of analogues different in the site where the substituents Xn (n=1 to 4) and Ym (m=1 to 4) are introduced and in the number of the substituents introduced. Accordingly, these analogue mixtures are statistically averaged and represented by a formula in many cases. In the present invention, it has been found that when these analogue mixtures are classified into the following three types, a specific mixture is particularly preferred. The phthalocyanine dye analogue mixtures represented by formulae (2) and (5) are defined by classifying these into the following three types based on the substitution site. The positions of Y₅₁, Y₅₂, Y₅₃, Y₅₄, Y₅₅, Y₅₆, Y₅₇ and Y₅₈ in formula (5) are designated as 1, 4, 5, 8, 9, 12, 13 and 16, respectively.

### (1) β-Position substitution type:

A phthalocyanine dye having specific substituents at the 2- and/or 3-position, the 6- and/or 7-position, the 10-and/or 11-position, and the 14- and/or 15-position.

### (2) α-Position substitution type:

A phthalocyanine dye having specific substituents at the 1- and/or 4-position, the 5- and/or 8-position, the 9-and/or 12-position, and the 13- and/or 16-position.

### (3) α, β-Position mixed substitution type:

A phthalocyanine dye having specific substitutions at the 1- to 16-positions without any regularity.

In the invention, phthalocyanine dye derivatives different in the structure (particularly in the substitution site) are described by using the β-position substitution type, α-position substitution type and α,β-position mixed substitution type.

The phthalocyanine derivative for use in the present invention can be synthesized by combining the methods described or cited, for example, in Shirai and Kobayashi, Phthalocyanine -Kagaku to Kino- (Phthalocyanine -Chemistry and Function-), pp. 1-62, IPC, and C.C. Leznoff and A.B.P. Lever, Phthalocyanines - Properties and Applications, pp. 1-54, VCH, or methods analogous thereto.

The phthalocyanine dye represented by formula (2) of the invention can be synthesized, for example, through sulfonation, sulfonyl chloridation or amidation of an unsubstituted phthalocyanine compound as described in WO 00/17275, WO 00/08103, WO 00/08101, WO 98/41853 and JP-A-10-36471. In such a case, sulfonation may take place at any site of the phthalocyanine nucleus and the number of sites sulfonated is difficult to control. Accordingly, when a sulfo group is introduced under such reaction conditions, the positions and number of sulfo groups introduced into the product cannot be specified and a mixture of those different in the number of substituents or in the substitution site inevitably results. If the dye is synthesized starting from such a product, the phthalocyanine dye is obtained as an α,β-position mixed substitution type mixture containing several kinds of compounds different in the number of substituents or in the substitution site because the number of sulfamoyl groups substituted on the heterocyclic ring or their substitution sites cannot be specified.

As described above, for example, when many electron-withdrawing groups such as sulfamoyl group are introduced into the phthalocyanine nucleus, the oxidation potential becomes more positive and the ozone resistance is increased: However, according to the above-described synthesis method, a phthalocyanine dye where the number of electron-withdrawing groups introduced is small, namely, the oxidation potential is more negative, is inevitably mingled. Therefore, in order to improve the ozone resistance, it is preferred to use a synthesis method where the production of a compound having a more negative oxidation potential is suppressed.

The phthalocyanine compound represented by formula (5) for use in the present invention can be synthesized, for example, by reacting a phthalonitrile derivative (Compound P) shown below and/or a diiminoisoindoline derivative (Compound Q) shown below with a metal derivative represented by formula (6) or can be derived from a tetrasulfophthalocyanine compound obtained by reacting a 4-sulfophthalonitrile derivative (Compound R) shown below with a metal derivative represented by formula (6).

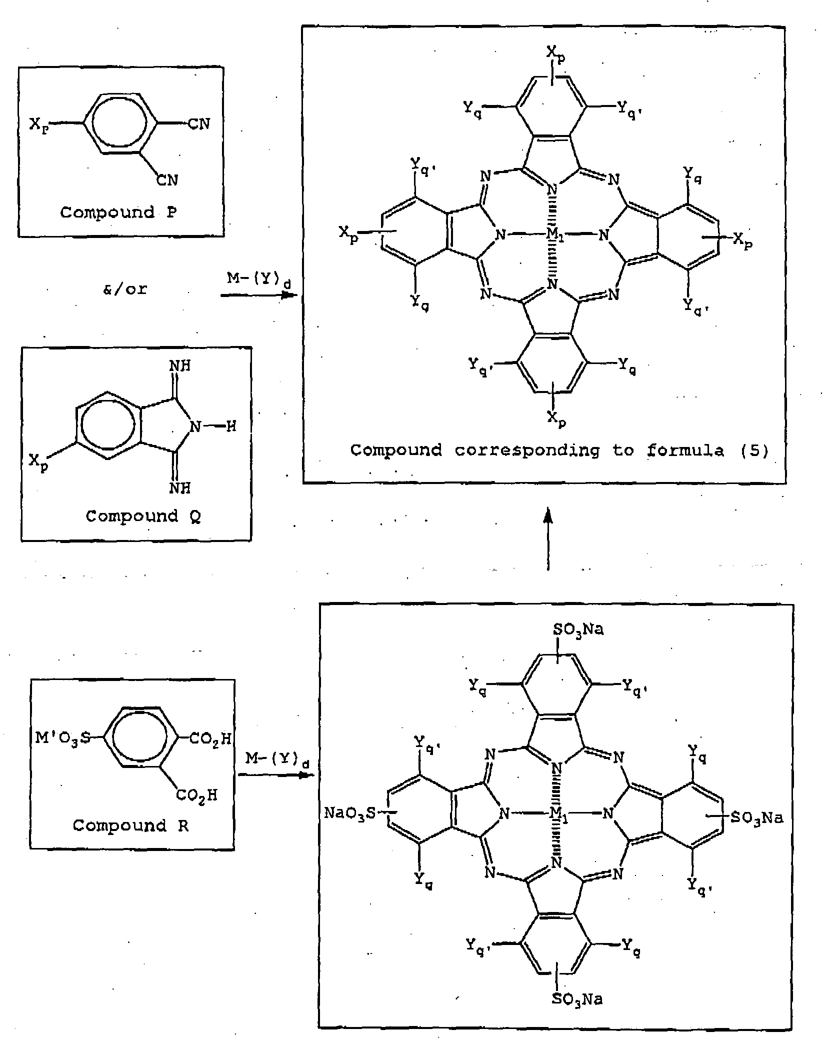

In the formulae above, Xₚ corresponds to X₅₁, X₅₂, X₅₃ or X₅₄ in formula (5) and Y_{q} and Y_{q'} each corresponds to Y₅₁, Y₅₂, Y₅₃, Y₅₄, Y₅₅, Y₅₆, Y₅₇ or Y₅₈ in formula (5). In Compound R, M' represents a cation.

Examples of the cation represented by M' include alkali metal ions such as Li, Na and K, and organic cations such as triethylammonium ion and pyridinium ion. $\text{Formula (6):} {\text{M-(Y)}}_{\text{d}}$wherein M has the same meaning as M₁ in formula (5), Y represents a monovalent or divalent ligand such as halogen atom, acetate anion, acetylacetonate and oxygen, and d represents an integer of 1 to 4.

That is, according to the synthesis method described above, a specific number of desired substituents can be introduced. Particularly, in the case of introducing a large number of electron-withdrawing groups so as to render the oxidation potential more positive as in the present invention, the synthesis method is very excellent as compared with the methods described above for synthesizing the phthalocyanine compound of formula (2).

The thus-obtained phthalocyanine compound represented by formula (5) is usually a mixture of compounds represented by the following formulae (a)-1 to (a)-4 which are isomers in respect to the substitution site of each substituent Xₚ, namely, the β-position substitution type.

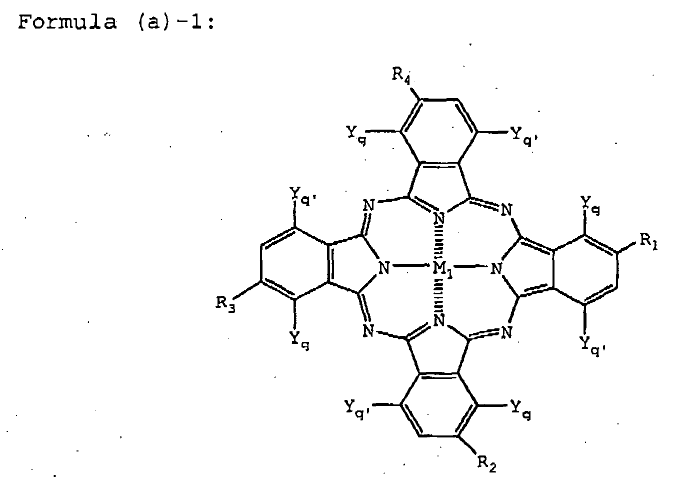

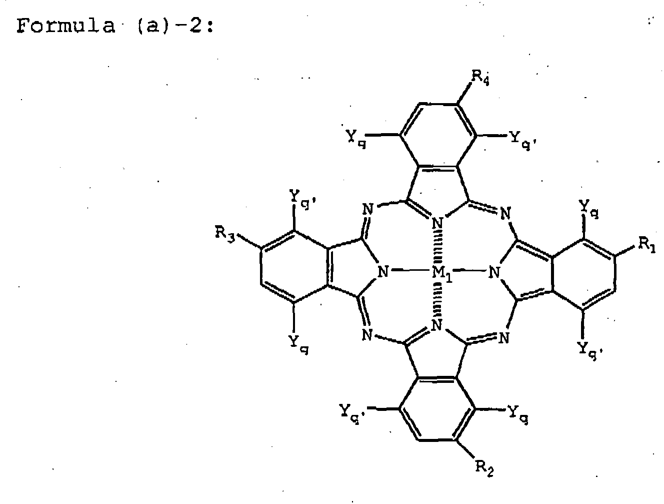

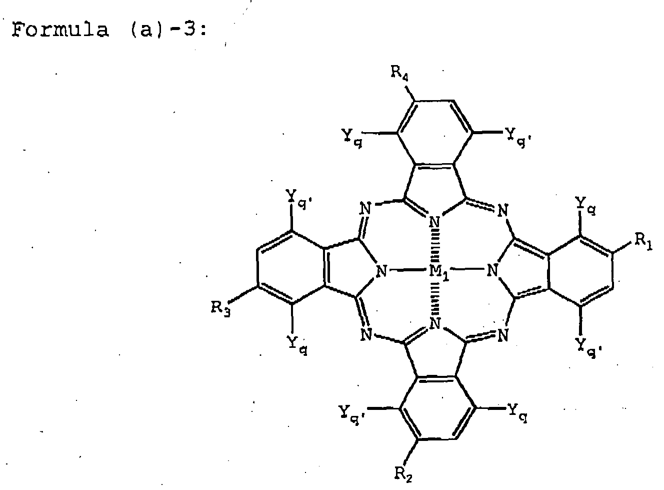

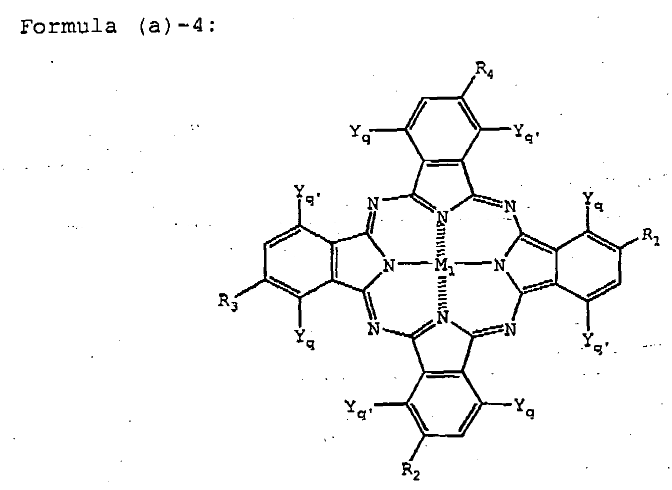

In the synthesis method above, when all Xps are the same, a β-position substitution type phthalocyanine dye where X₅₁, X₅₂, X₅₃ and X₅₄ are completely the same substituents can be obtained. On the other hand, when Xₚs are different, a dye having substituents of the same kind but partially different from each other or a dye having substituents different from each other can be synthesized. Among the dyes of formula (5), the dyes having electron-withdrawing substituents different from each other are particularly preferred, because the solubility and aggregation property of dye and the aging stability of ink can be controlled.

In the invention, it has been found to be very important for the improvement of fastness that in any substitution type, the oxidation potential is more positive than 1.0 V (vs SCE). Its great effect cannot be expected at all from the above-described known techniques. Furthermore, although the reason is not entirely clear, there is a tendency that the β-position substitution type is apparently more excellent in the color hue, light fastness, ozone gas resistance and the like than the α, β-position mixed substitution type.

Specific examples (Compounds I-1 to I-12 and Compounds 101 to 190) of the phthalocyanine dyes represented by formulae (2) and (5) are set forth below. The dyes of specific examples, which exhibit the above-described property regarding the dye concentration dependency of the molar extinction coefficient, are preferably used in the invention. However, the phthalocyanine dye for use in the present invention is not limited to the following examples.

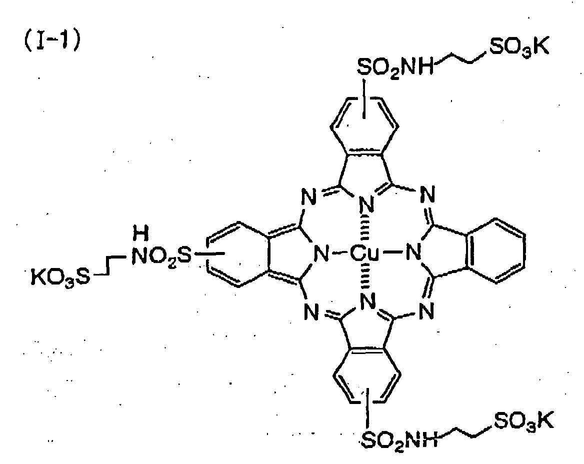

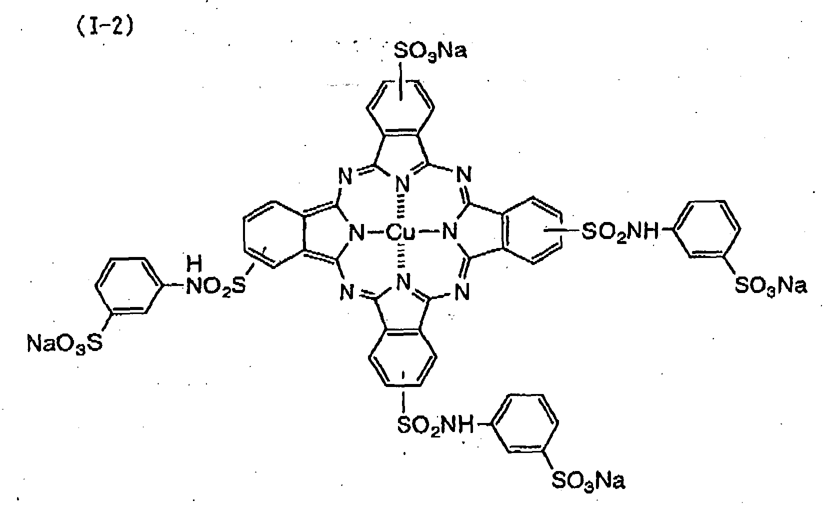

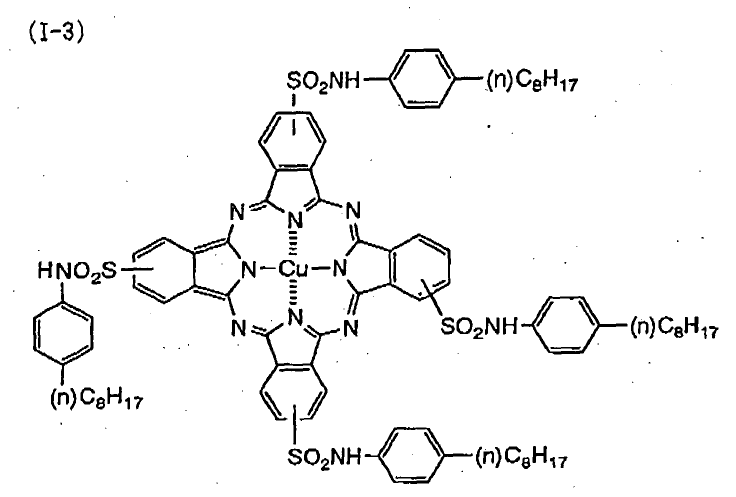

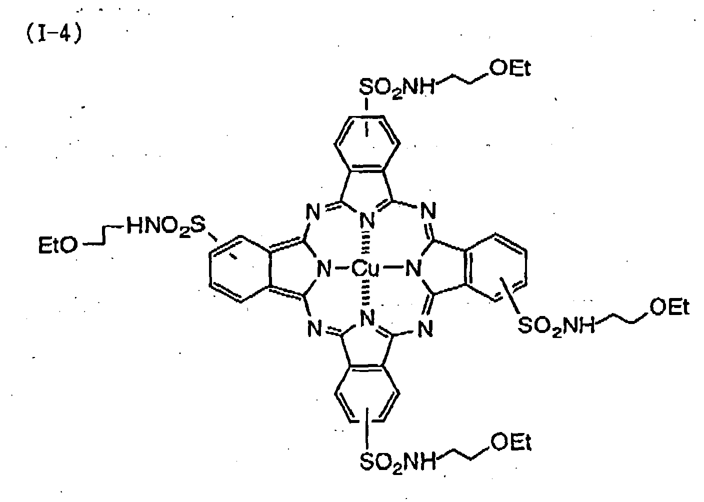

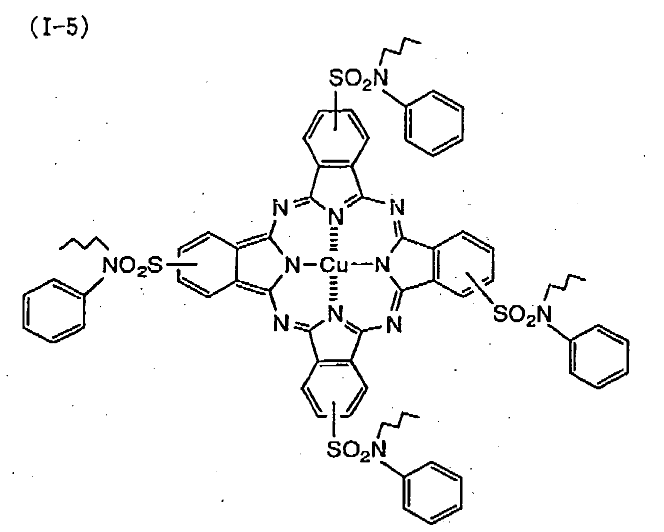

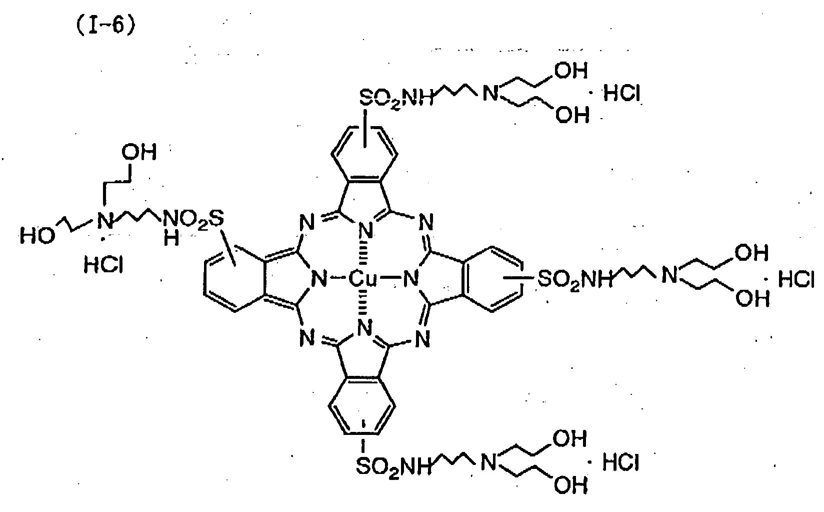

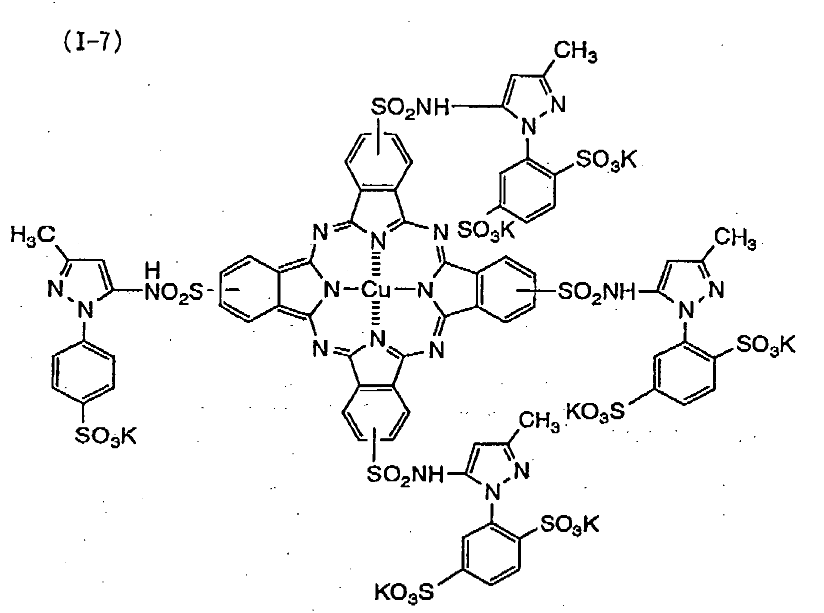

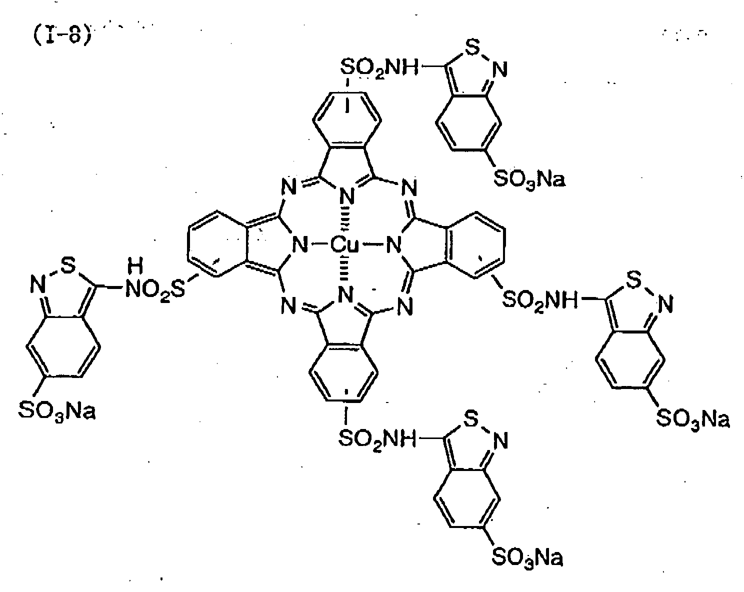

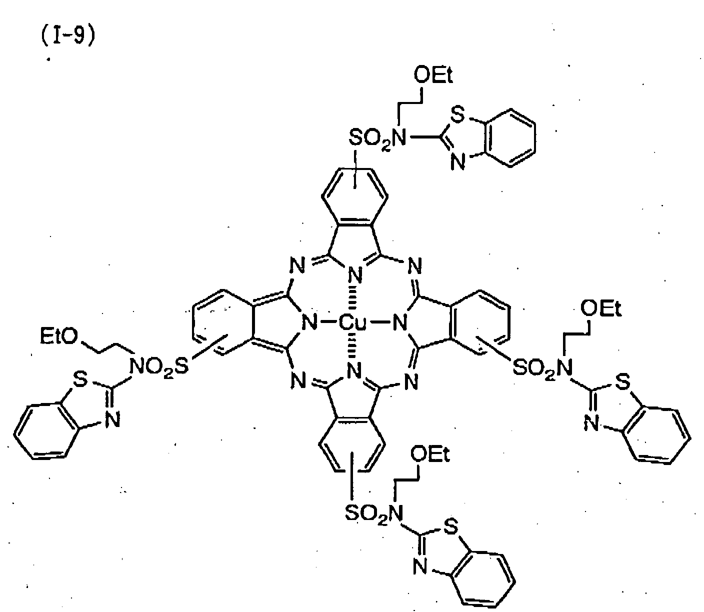

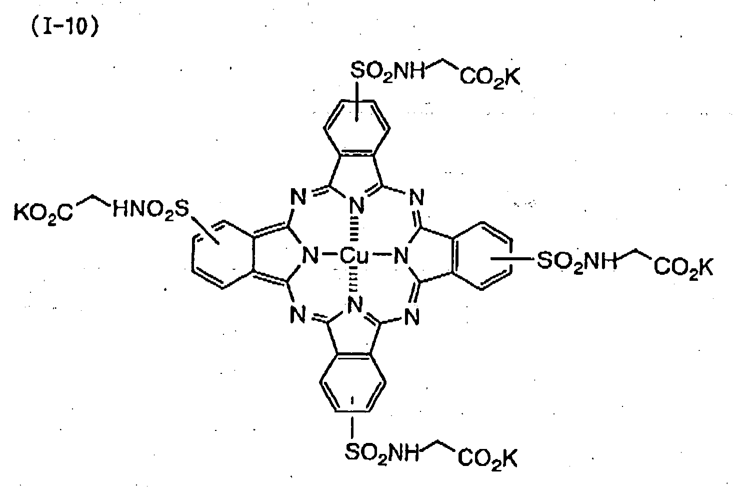

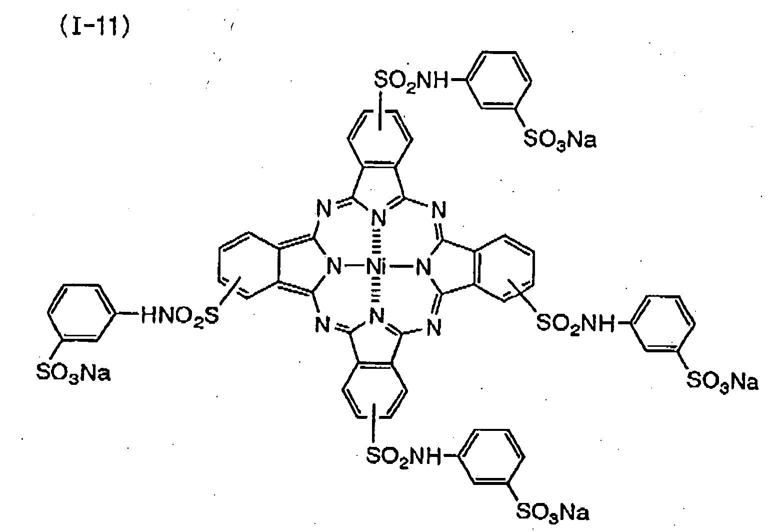

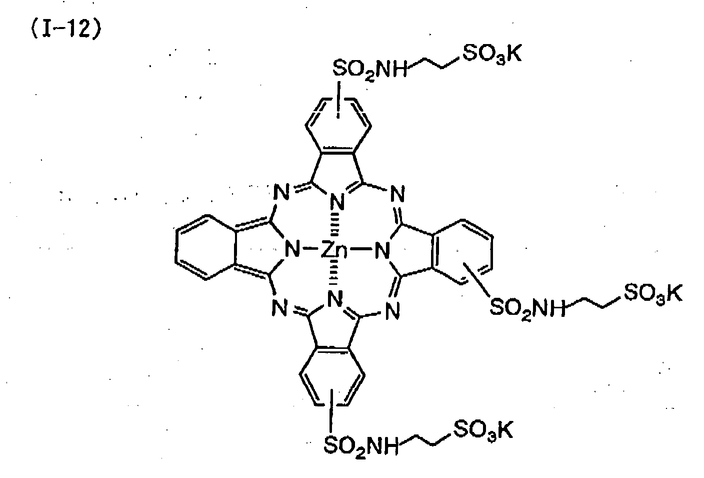

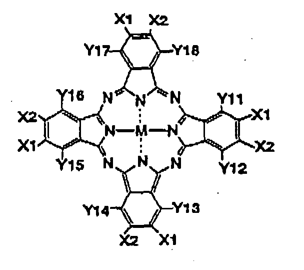

In the following tables, in the specific examples such as pairs (X1, X2), (Y11, Y12), (Y13, Y14), (Y15, Y16) and (Y17, Y18), the positions of each of members of the given pair are exchangeable with each other. For example, the position of X1 can be exchanged with the position of X2.

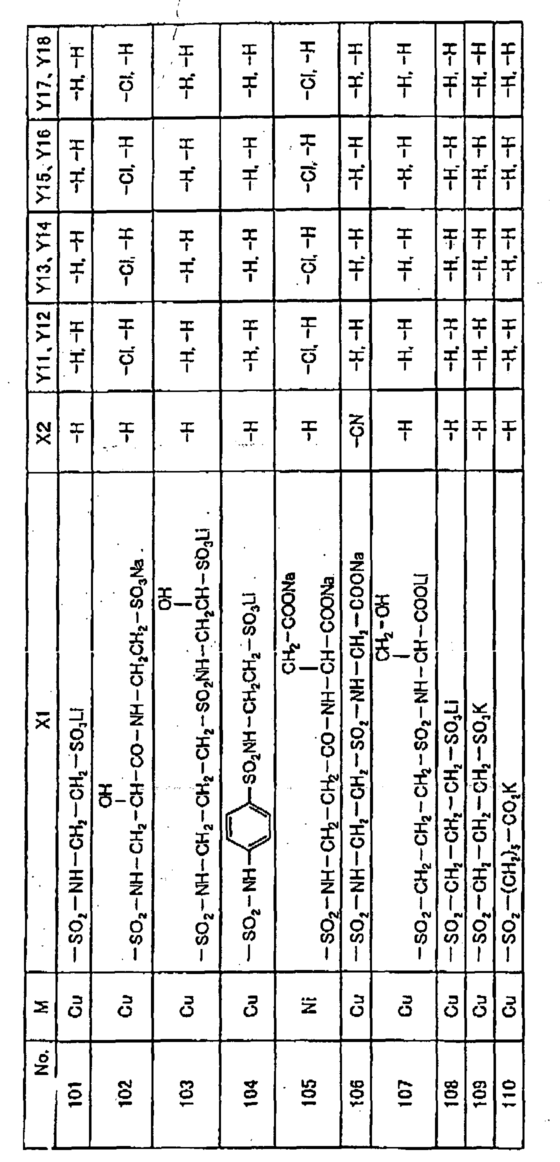

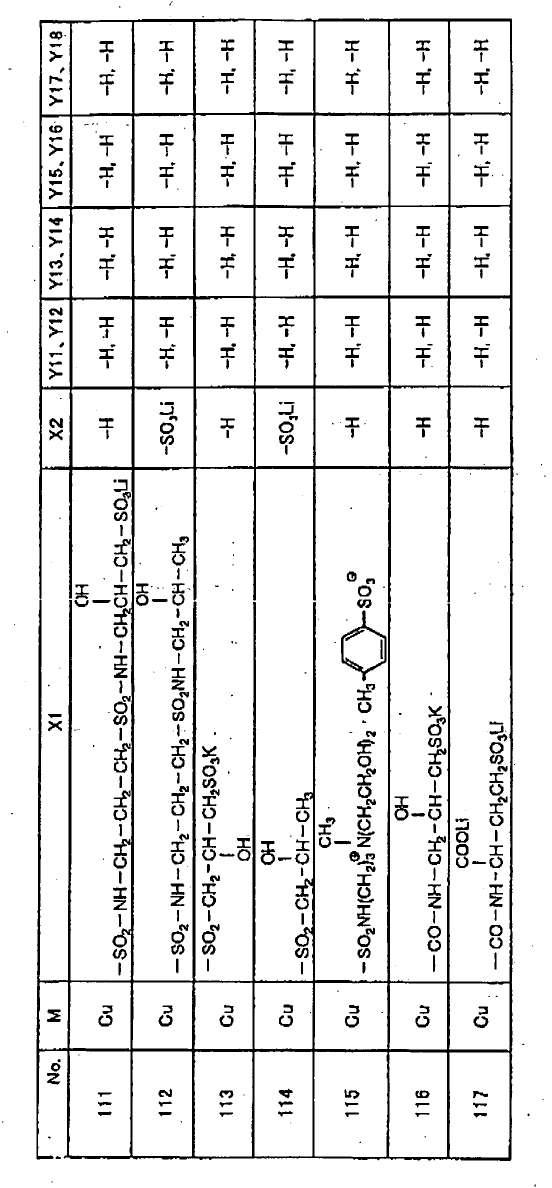

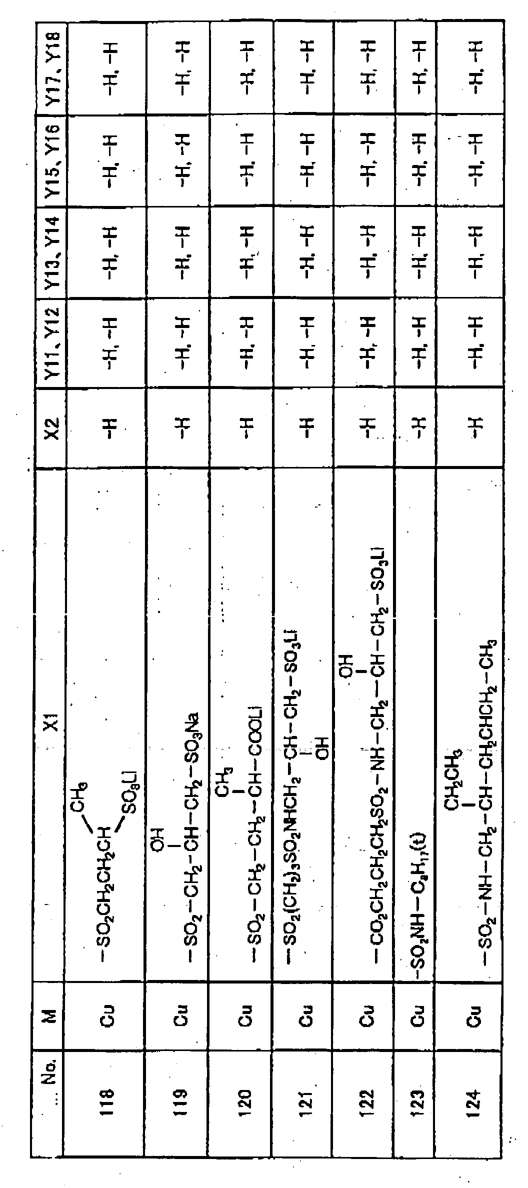

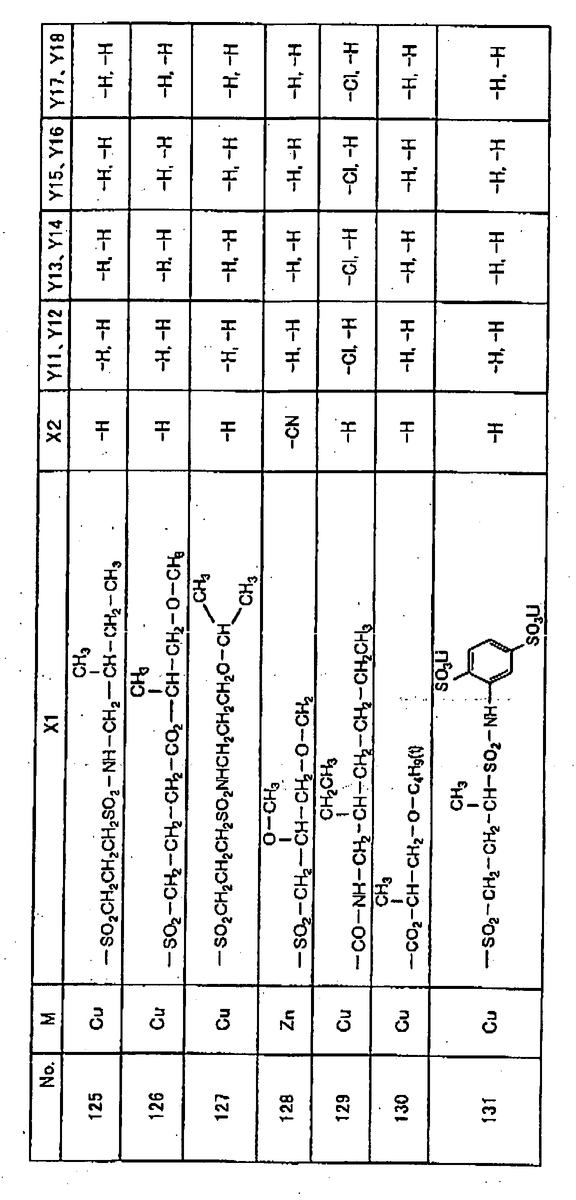

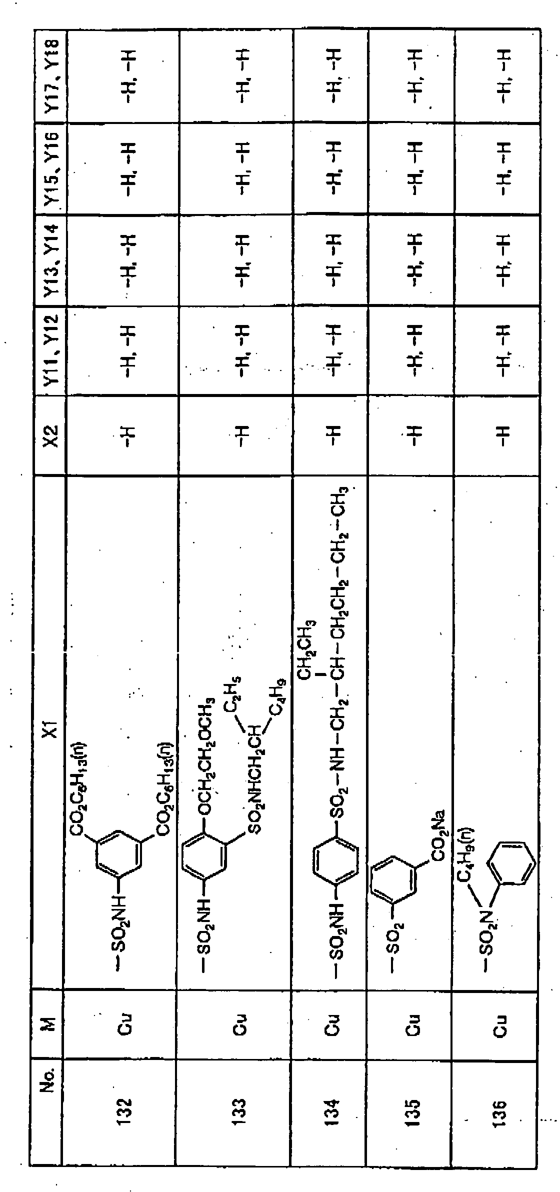

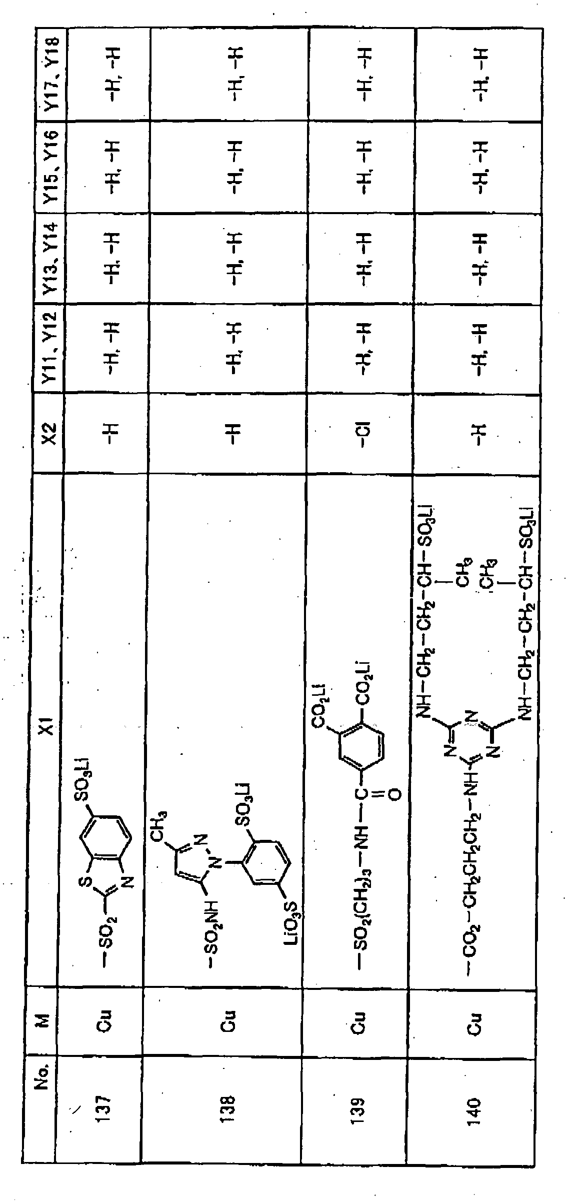

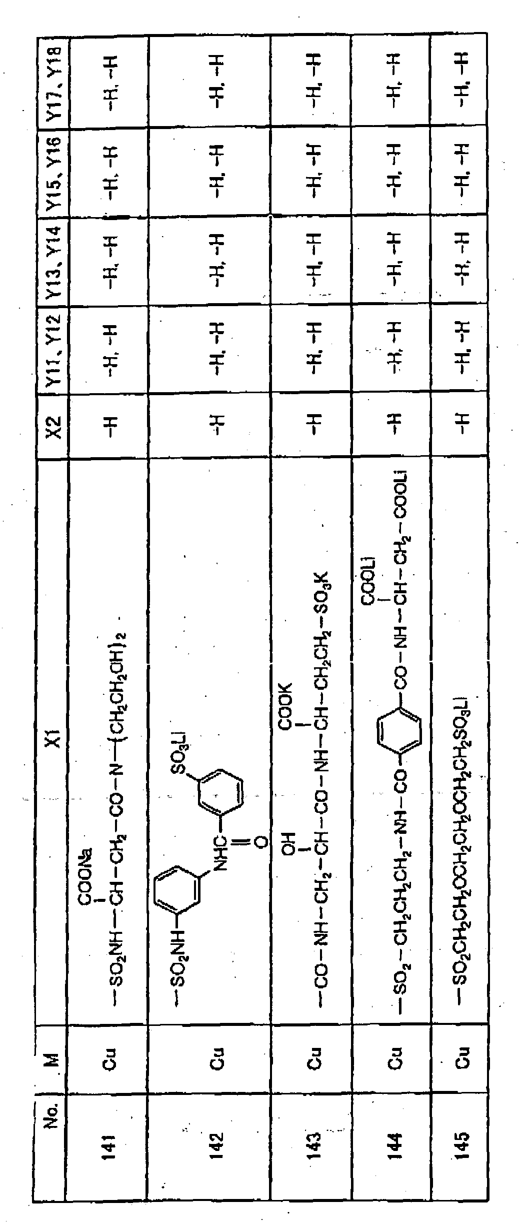

M-Pc (Xₚ₁)ₘ(Xₚ₂)ₙ

In the following tables, the introduction positions of the substituents (Xₚ₁) and (Xₚ₂) in each compound are exchangeable with each other in the β-position substitution type phthalocyanine dye.

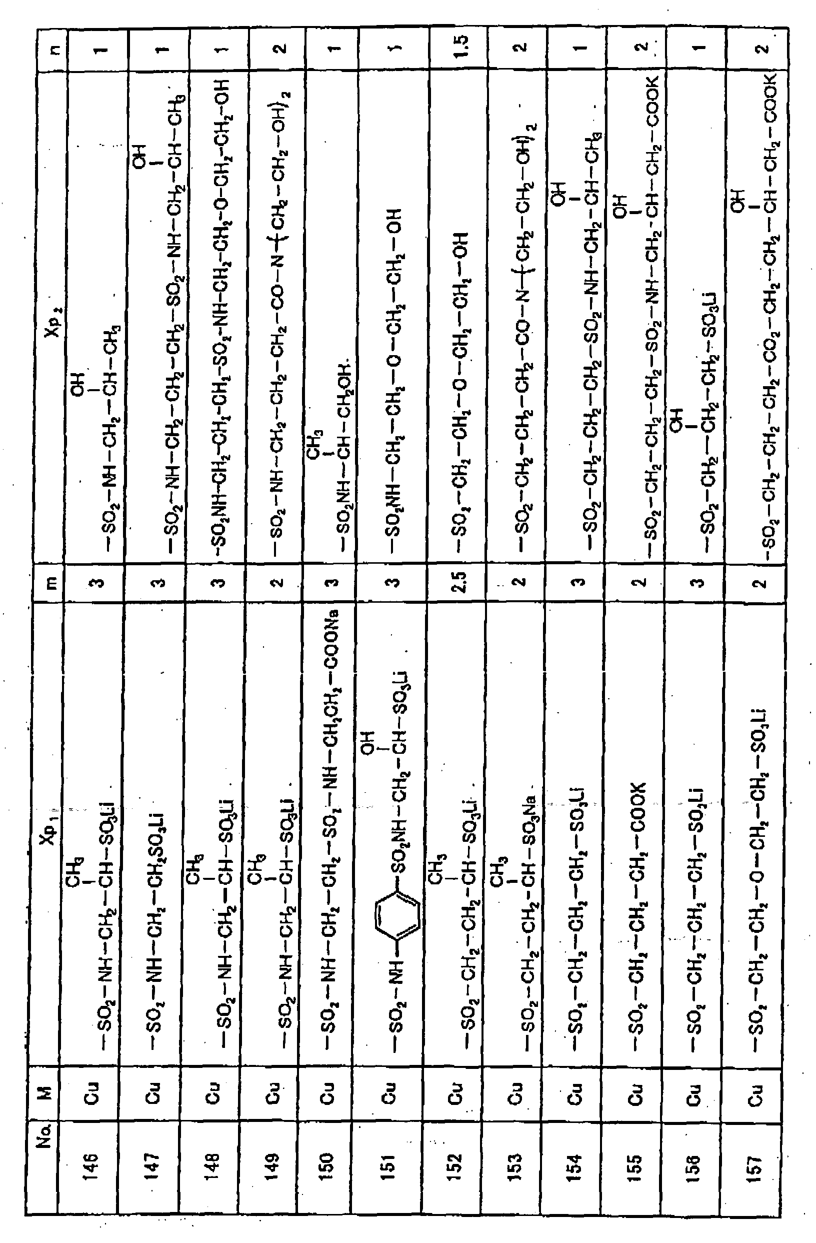

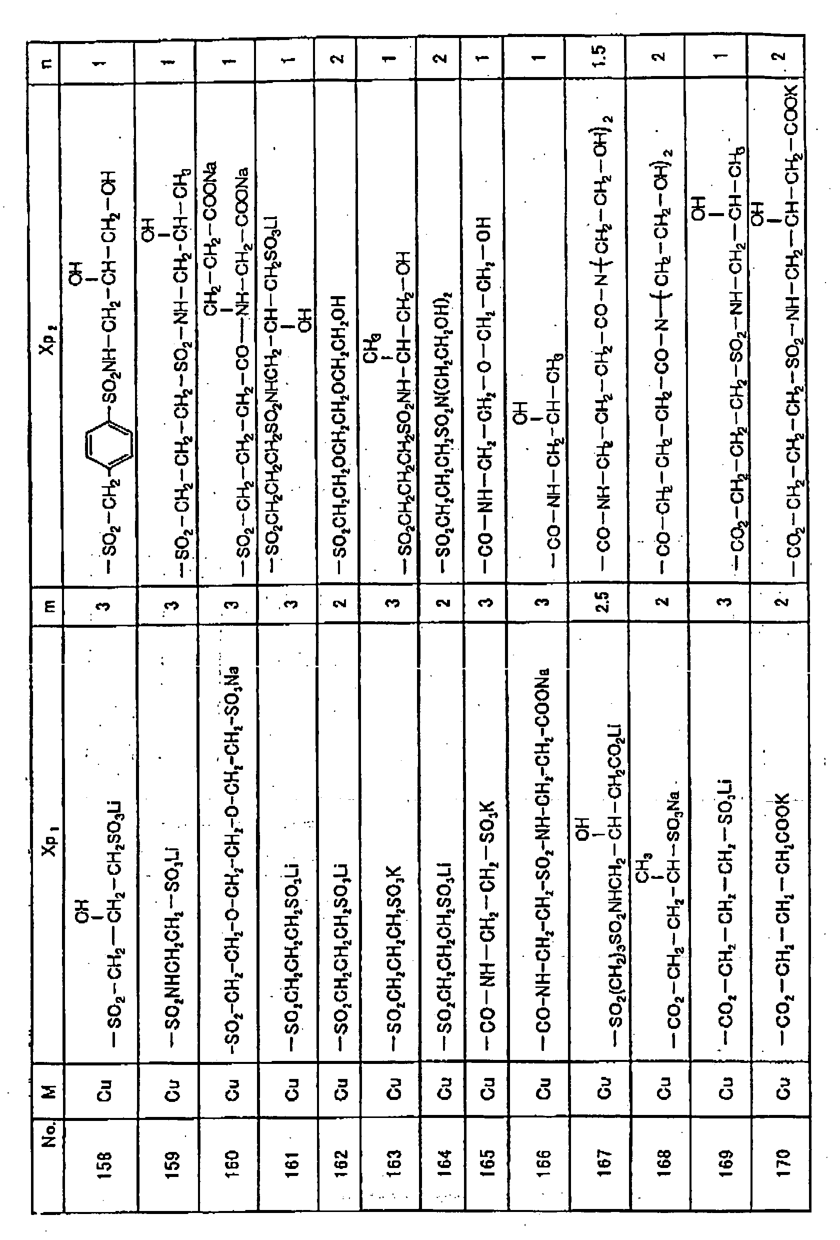

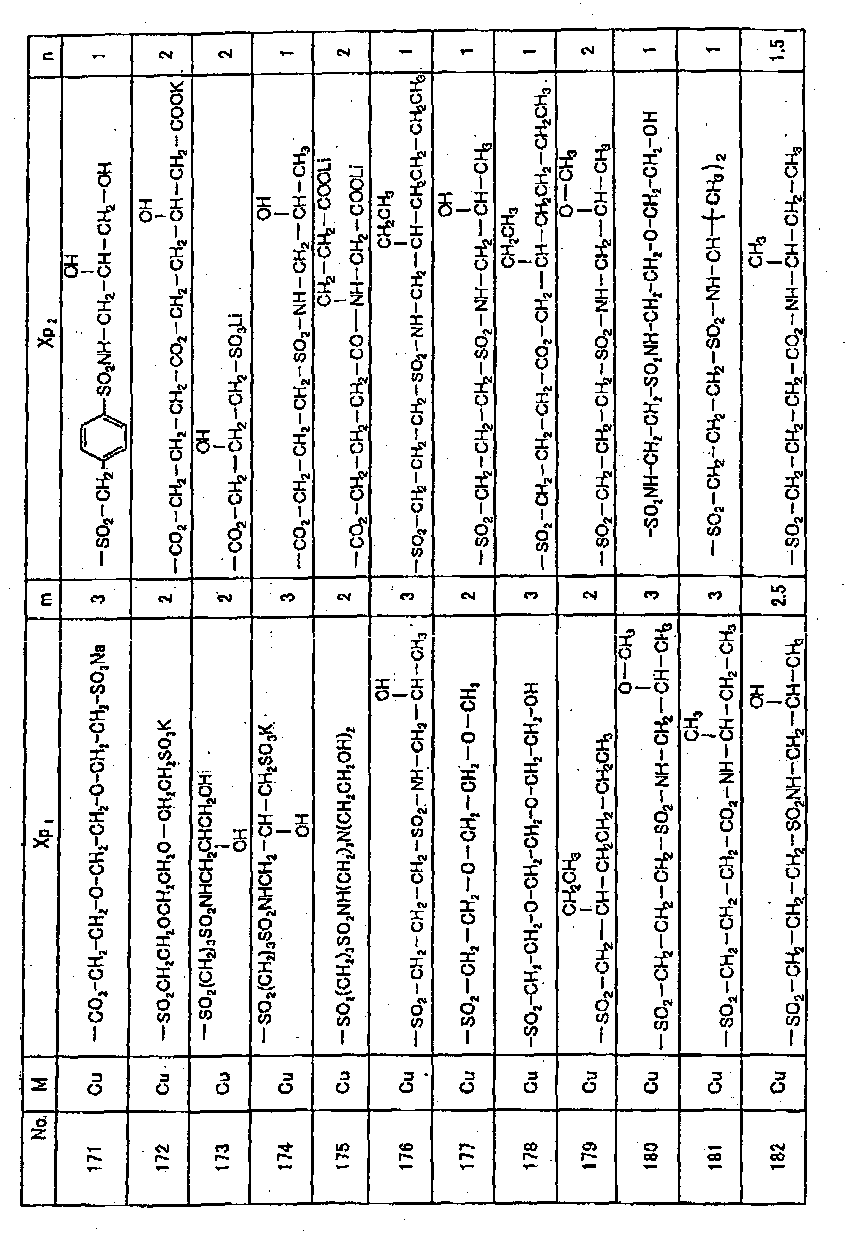

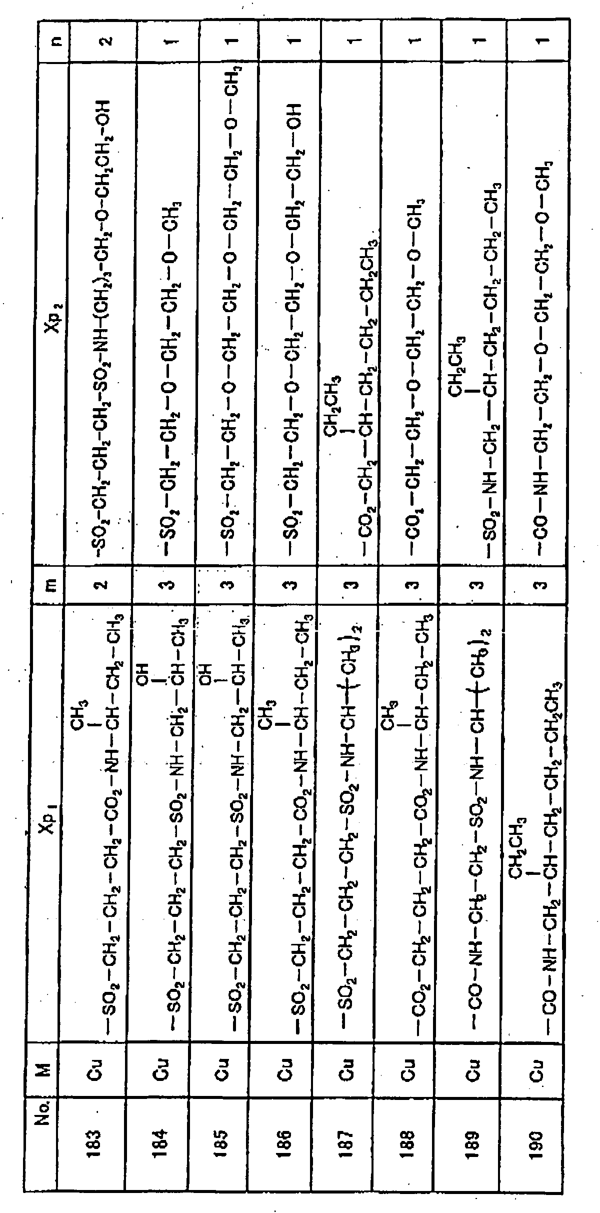

The structure of the phthalocyanine compound represented by the formula of M-Pc(Xₚ₁)ₘ(Xₚ₂)ₙ with respect to Compound Nos. 146 to 190 is shown below: 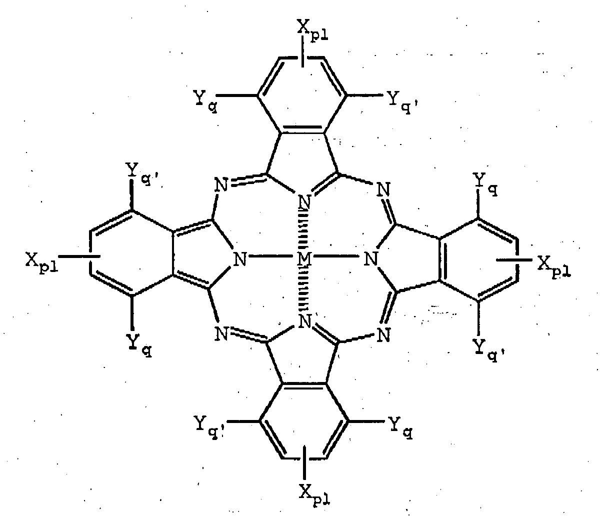 (wherein each Xₚ1 represents Xₚ₁ or Xₚ₂ as described in the tables above)

The phthalocyanine dye represented by formula (2) can be synthesized according to the patent publications described above. Furthermore, the phthalocyanine dye represented by formula (5) can be synthesized by the methods described in JP-A-2001-226275, JP-A-2001-96610, JP-A-2001-47013 and JP-A-2001-193638, in addition to the synthesis method described above. The starting material, dye intermediate and synthesis route are not limited to those described in the patent publications.

### [Magenta Dye]

The magenta dye for use in the present invention is preferably an azo dye having absorption maximum in the spectral region from 500 to 580 nm in an aqueous medium and having an oxidation potential more positive than 1.0 V (vs SCE).

The first preferred structural feature of the azo dye for this magenta dye is that the dye has a chromophore represented by the formula: (heterocyclic ring A)-N=N-(heterocyclic ring B). In such a case, the heterocyclic rings A and B may have the same structure. Specifically, the heterocyclic rings A and B each is a 5- or 6-membered heterocyclic ring selected from pyrazole, imidazole, triazole, oxazole, thiazole, selenazole, pyridone, pyrazine, pyrimidine and pyridine. These are specifically described, for example, in JP-A-2001-29154, JP-A-2002-30916 and JP-A-2003-12650.

The second preferred structural feature of the azo dye is that an aromatic nitrogen-containing 6-membered heterocyclic ring is bonded as the coupling component directly to at least one side of the azo group. Specific examples thereof are described in JP-A-2001-110457.

The third preferred structural feature is that the auxochrome has an aromatic ring amino group or heterocyclic amino group structure, specifically, an anilino group or a heterylamino group.

The fourth preferred structural feature is that the dye has a steric structure. This is specifically described in JP-A-2002-371214.

By having these structural features, the azo dye can be elevated in the oxidation potential and enhanced in the ozone resistance. The oxidation potential can be elevated, for example, by removing the α hydrogen of the azo dye. The azo dye represented by formula (3) is preferred also for the purpose of elevating the oxidation potential. The method for elevating the oxidation potential of azo dyes is specifically described in JP-A-2003-64275.

The magenta ink of the present invention using the azo dye having the above-described characteristic features preferably has λmax (absorption maximum wavelength) of 500 to 580 nm because excellent color hue can be obtained, and preferably has a small half-value width on the long-wave and short-wave sides of the maximum absorption wavelength, namely, sharp absorption. Such dyes are specifically described in JP-A-2002-309133. The sharp absorption can be also realized by introducing a methyl group into the α position of the azo dye of formula (3).

The magenta ink using the azo dye preferably has an ozone gas accelerated fading rate constant of 5.0×10⁻² [hour⁻¹] or less, more preferably 3.0×10⁻² [hour⁻¹] or less, particularly preferably 1.5×10⁻² [hour⁻¹] or less.

The ozone gas accelerated fading rate constant is determined as follows. An image is printed on a reflective image-receiving medium by using only the magenta ink and the colored region having a color in the main spectral absorption region of the ink and having a reflection density of 0.90 to 1.10 as measured through a Status A filter is selected as the initial density point. The initial density is defined as the starting density (=100%). Then, the image is discolored by using an ozone discoloration tester capable of always keeping an ozone concentration of 5 mg/liter, the time period until the density becomes 80% of the initial density is measured, a reciprocal [hour⁻¹] of the time period is determined and on the assumption that the relationship between the discoloration density and the time period follows the primary chemical kinetics, the value is used as the accelerated fading rate constant.

The test print patch may be a patch obtained by printing a black square symbol of JIS Code 2223, a stepwise color patch of Macbeth chart, or an appropriate stepwise density patch where the measured area can be obtained.

The reflection density of the reflection image (stepwise color patch) printed for measurement is a density determined with measurement light through a Status A filter by a densitometer satisfying the International Standard ISO5-4 (geometrical conditions of reflection density).

In the test chamber for the measurement of ozone gas accelerated fading rate constant, an ozone generator (for example, a high-voltage discharge system of applying an a.c. voltage to dry air) capable of constantly maintaining an internal ozone gas concentration of 5 mg/liter is provided and the exposure temperature is controlled to 25°C.

The accelerated fading rate constant is an index for showing the susceptibility to oxidation due to oxidative atmosphere in the environment, for example, photochemical smog, exhaust gas of automobiles, organic vapor from painted furniture surface or carpet, or gas generated from the frame interior in a bright room, and it is an index using ozone gas as a representative of such oxidative atmosphere.

The dye represented by formula (3), which is an azo dye having the above-described characteristic features and used in the invention, is described below. 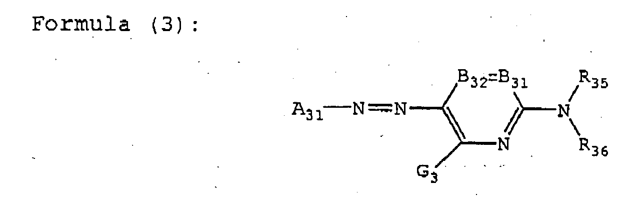 wherein A₃₁ represents a 5-membered heterocyclic group;
B₃₁ and B₃₂ each represents =CR₃₁- or -CR₃₂=, or either one of B₃₁ and B₃₂ represents a nitrogen atom and the other represents =CR₃₁- or -CR₃₂=;
R₃₅ and R₃₆ each independently represents a hydrogen atom or a substituent, the substituent is an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group, and the hydrogen atom of each substituent may be substituted;
G₃, R₃₁ and R₃₂ each independently represents a hydrogen atom or a substituent, the substituent is a halogen atom, an aliphatic group, an aromatic group, a heterocyclic group, a cyano group, a carboxyl group, a carbamoyl group, an alkoxycarbonyl group, an aryloxycarbonyl group, a heterocyclic oxycarbonyl group, an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group, an acylamino group, a ureido group, a sulfamoylamino group, an alkoxycarbonylamino group, an aryloxycarbonylamino group, an alkylsulfonylamino group, an arylsulfonylamino group, a heterocyclic sulfonylamino group, a nitro group, an alkylthio group, an arylthio group, a heterocyclic thio group, an alkylsulfonyl group, an arylsulfonyl group, a heterocyclic sulfonyl group, an alkylsulfinyl group, an arylsulfinyl group, a heterocyclic sulfinyl group, a sulfamoyl group or a sulfo group, and the hydrogen atom of each substituent may be substituted; and
R₃₁ and R₃₅, or R₃₅ and R₃₆ may combine to form a 5- or 6-membered ring.

In formula (3), A₃₁ represents a 5-membered heterocyclic group. Examples of the heteroatom of the heterocyclic ring include N, O and S. A₃₁ is preferably a nitrogen-containing 5-membered heterocyclic ring and the heterocyclic ring may be condensed with an aliphatic ring, an aromatic ring or other heterocyclic ring. Preferred examples of the heterocyclic ring represented by A₃₁ include a pyrazole ring, an imidazole ring, a thiazole ring, an isothiazole ring, a thiadiazole ring, a benzothiazole ring, a benzoxazole ring and a benzisothiazole ring. Each heterocyclic group may further have a substituent. Among these rings, more preferred are a pyrazole ring, an imidazole ring, an isothiazole ring, a thiadiazole ring and a benzothiazole ring represented by the following formulae (a) to (f).

In formulae (a) to (f), R₃₀₇ to R₃₂₀ each represents the same substituent as G₃, R₃₁ and R₃₂ in formula (3).

Among formulae (a) to (f), preferred are a pyrazole ring and an isothiazole ring represented by formulae (a) and (b), and most preferred is a pyrazole ring represented by formula (a).

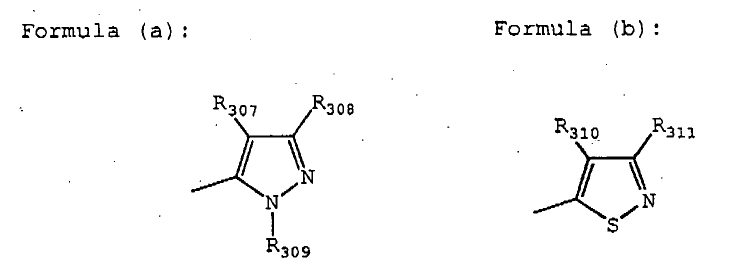

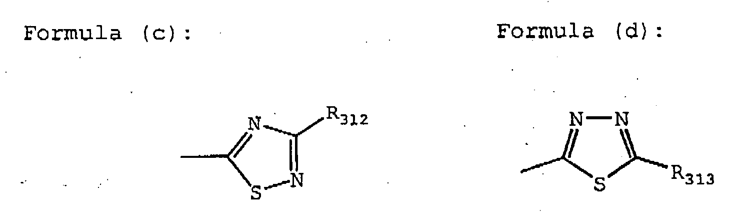

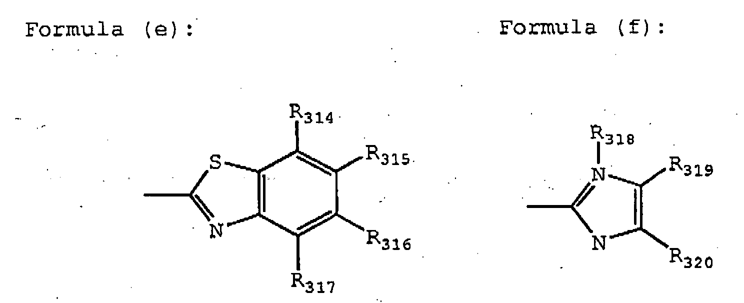

In formula (3), B₃₁ and B₃₂ each represents =CR₃₁- or -CR₃₂=, or either one of B₃₁ and B₃₂ represents a nitrogen atom and the other represents =CR₃₁- or -CR₃₂=. B₃₁ and B₃₂ each preferably represents =CR₃₁- or -CR₃₂=.

R₃₅ and R₃₆ each is preferably a hydrogen atom, an aliphatic group, an aromatic group, a heterocyclic group, an acyl group, an alkylsulfonyl group or an arylsulfonyl group, more preferably a hydrogen atom, an aromatic group, a heterocyclic group, an acyl group, an alkylsulfonyl group or an arylsulfonyl group, and most preferably a hydrogen atom, an aryl group or a heterocyclic group, and the hydrogen atom of each substituent may be substituted, but R⁵ and R⁶ are not hydrogen atoms at the same time.

G₃ is preferably a hydrogen atom, a halogen atom, an aliphatic group, an aromatic group, a hydroxy group, an alkoxy group, an aryloxy group, an acyloxy group, a heterocyclic oxy group, an amino group, an acylamino group, a ureido group, a sulfamoylamino group, an alkoxycarbonylamino group, an aryloxycarbonylamino group, an alkylthio group, an arylthio group or a heterocyclic thio group, more preferably a hydrogen atom, a halogen atom, an alkyl group, a hydroxy group, an alkoxy group, an aryloxy group, an acyloxy group, an amino group or an acylamino group, and most preferably a hydrogen atom, an amino group (preferably an anilino group) or an acylamino group, and the hydrogen atom of each substituent may be substituted.

R₃₁ and R₃₂ each is preferably a hydrogen atom, an alkyl group, a halogen atom, an alkoxycarbonyl group, a carboxyl group, a carbamoyl group, a hydroxy group, an alkoxy group or a cyano group, and the hydrogen atom of each substituent may be substituted.

R₃₁ and R₃₅, or R₃₅ and R₃₆ may combine to form a 5- or 6-membered ring.

When A₃₁ has a substituent or when the substituent R₃₁, R₃₂, R₃₅, R₃₆ or G₃ further has a substituent, examples of the substituent include the substituents described above for G₃, R₃₁ and R₃₂.

The dye represented by formula (3) preferably has further an ionic hydrophilic group as a substituent on any position of A₃₁, R₃₁, R₃₂, R₃₅, R₃₆ and G₃ in order to impart or increase water solubility. Examples of the ionic hydrophilic group as a substituent include a sulfo group, a carboxyl group, a phosphono group and a quaternary ammonium group. Among the ionic hydrophilic groups, preferred are a carboxyl group, a phosphono group and a sulfo group, more preferred are a carboxyl group and a sulfo group. The carboxyl group, the phosphono group and the sulfo group each may be in a salt state and examples of the counter ion for forming the salt include ammonium ion, alkali metal ions (e.g., lithium ion, sodium ion, potassium ion) and organic cations (e.g., tetramethylammonium ion, tetramethylguanidium ion, tetramethylphosphonium).

The term "substituent" as used in the description of formula (3) is described below. The term is common in formula (3) and also in formula (3-A) shown later.

The halogen atom includes a fluorine atom, a chlorine atom and a bromine atom.

The aliphatic group means an alkyl group, a substituted alkyl group, an alkenyl group, a substituted alkenyl group, an alkynyl group, a substituted alkynyl group, an aralkyl group and a substituted aralkyl group. The term "substituted" as used for the "substituted alkyl group" and the like means that the hydrogen atom present in an "alkyl group" or the like is substituted, for example, by the substituent described above for G₃, R₃₁ and R₃₂.

The aliphatic group may be branched or may form a ring. The number of carbon atoms in the aliphatic group is preferably from 1 to 20, more preferably from 1 to 16. The aryl moiety in the aralkyl group and the substituted aralkyl group is preferably a phenyl group or a naphthyl group, more preferably a phenyl group. Examples of the aliphatic group- include a methyl group, an ethyl group, a butyl group, an isopropyl group, a tert-butyl group, a hydroxyethyl group, a methoxyethyl group, a cyanoethyl group, a trifluoromethyl group, a 3-sulfopropyl group, a 4-sulfobutyl group, a cyclohexyl group, a benzyl group, a 2-phenethyl group, a vinyl group and an allyl group.

The aromatic group means an aryl group and a substituted aryl group. The aryl group is preferably a phenyl group or a naphthyl group, more preferably a phenyl group. The number of carbon atoms in the aromatic group is preferably from 6 to 20, more preferably from 6 to 16.

Examples of the aromatic group include a phenyl group, a p-tolyl group, a p-methoxyphenyl group, an o-chlorophenyl group and an m-(3-sulfopropylamino)phenyl group.

The heterocyclic group includes a substituted heterocyclic group. In the heterocyclic group, the heterocyclic ring may be condensed with an aliphatic ring, an aromatic ring or other heterocyclic ring. The heterocyclic group is preferably a 5- or 6-membered heterocyclic group. Examples of the substituent include an aliphatic group, a halogen atom, an alkylsulfonyl group, an arylsulfonyl group, an acyl group, an acylamino group, a sulfamoyl group, a carbamoyl group and an ionic hydrophilic group. Examples of the heterocyclic group include a 2-pyridyl group, a 2-thienyl group, a 2-thiazolyl group, a 2-benzothiazolyl group, a 2-benzoxazolyl group and a 2-furyl group.

The carbamoyl group includes a substituted carbamoyl group. Examples of the substituent include an alkyl group. Examples of the carbamoyl group include a methylcarbamoyl group and a dimethylcarbamoyl group.

The alkoxycarbonyl group includes a substituted alkoxycarbonyl group. The alkoxycarbonyl group is preferably an alkoxycarbonyl group having from 2 to 20 carbon atoms. Examples of the substituent include an ionic hydrophilic group. Examples of the alkoxycarbonyl group include a methoxycarbonyl group and an ethoxycarbonyl group.

The aryloxycarbonyl group includes a substituted aryloxycarbonyl group. The aryloxycarbonyl group is preferably an aryloxycarbonyl group having from 7 to 20 carbon atoms. Examples of the substituent include an ionic hydrophilic group. Examples of the aryloxycarbonyl group include a phenoxycarbonyl group.

The heterocyclic oxycarbonyl group includes a substituted heterocyclic oxycarbonyl group. Examples of the heterocyclic ring include the heterocyclic rings described above for the heterocyclic group. The heterocyclic oxycarbonyl group is preferably a heterocyclic oxycarbonyl group having from 2 to 20 carbon atoms. Examples of the substituent include an ionic hydrophilic group. Examples of the heterocyclic oxycarbonyl group include a 2-pyridyloxycarbonyl group.

The acyl group includes a substituted acyl group. The acyl group is preferably an acyl group having from 1 to 20 carbon atoms. Examples of the substituent include an ionic hydrophilic group. Examples of the acyl group include an acetyl group and a benzoyl group.

The alkoxy group includes a substituted alkoxy group. The alkoxy group is preferably an alkoxy group having from 1 to 20 carbon atoms. Examples of the substituent include an alkoxy group, a hydroxyl group and an ionic hydrophilic group. Examples of the alkoxy group include a methoxy group, an ethoxy group, an isopropoxy group, a methoxyethoxy group, a hydroxyethoxy group and a 3-carboxypropoxy group.

The aryloxy group includes a substituted aryloxy group. The aryloxy group is preferably an aryloxy group having from 6 to 20 carbon atoms. Examples of the substituent include an alkoxy group and an ionic hydrophilic group. Examples of the aryloxy group include a phenoxy group, a p-methoxyphenoxy group and an o-methoxyphenoxy group.

The heterocyclic oxy group includes a substituted heterocyclic oxy group. Examples of the heterocyclic ring include the heterocyclic rings described above for the heterocyclic group. The heterocyclic oxy group is preferably a heterocyclic oxy group having from 2 to 20 carbon atoms. Examples of the substituent include an alkyl group, an alkoxy group and an ionic hydrophilic group. Examples of the heterocyclic oxy group include a 3-pyridyloxy group and a 3-thienyloxy group.

The silyloxy group is preferably a silyloxy group substituted by an aliphatic or aromatic group having from 1 to 20 carbon atoms. Examples of the silyloxy group include a trimethylsilyloxy group and a diphenylmethylsilyloxy group.

The acyloxy group includes a substituted acyloxy group. The acyloxy group is preferably an acyloxy group having from 1 to 20 carbon atoms. Examples of the substituent include an ionic hydrophilic group. Examples of the acyloxy group include an acetoxy group and a benzoyloxy group.

The carbamoyloxy group includes a substituted carbamoyloxy group. Examples of the substituent include an alkyl group. Examples of the carbamoyloxy group include an N-methylcarbamoyloxy group.

The alkoxycarbonyloxy group includes a substituted alkoxycarbonyloxy group. The alkoxycarbonyloxy group is preferably an alkoxycarbonyloxy group having from 2 to 20 carbon atoms. Examples of the alkoxycarbonyloxy group include a methoxycarbonyloxy group and an isopropoxycarbonyloxy group.

The aryloxycarbonyloxy group includes a substituted aryloxycarbonyloxy group. The aryloxycarbonyloxy group is preferably an aryloxycarbonyloxy group having from 7 to 20 carbon atoms. Examples of the aryloxycarbonyloxy group include a phenoxycarbonyloxy group.

The amino group includes a substituted amino group. Examples of the substituent include an alkyl group, an aryl group and a heterocyclic group, and the alkyl group, the aryl group and the heterocyclic group each may further have a substituent. The alkylamino group includes a substituted alkylamino group. The alkylamino group is preferably an alkylamino group having from 1 to 20 carbon atoms. Examples of the substituent include an ionic hydrophilic group. Examples of the alkylamino group include a methylamino group and a diethylamino group.

The arylamino group includes a substituted arylamino group. The arylamino group is preferably an arylamino group having from 6 to 20 carbon atoms. Examples of the substituent include a halogen atom and an ionic hydrophilic group. Examples of the arylamino group include a phenylamino group and a 2-chlorophenylamino group.

The heterocyclic amino group includes a substituted heterocyclic amino group. Examples of the heterocyclic ring include the heterocyclic rings described above for the heterocyclic group. The heterocyclic amino group is preferably a heterocyclic amino group having from 2 to 20 carbon atoms. Examples of the substituent include an alkyl group, a halogen atom and an ionic hydrophilic group.

The acylamino group includes a substituted acylamino group. The acylamino group is preferably an acylamino group having from 2 to 20 carbon atoms. Examples of the substituent include an ionic hydrophilic group. Examples of the acylamino group include an acetylamino group, a propionylamino group, a benzoylamino group, an N-phenylacetylamino group and a 3,5-disulfobenzoylamino group.

The ureido group includes a substituted ureido group. The ureido group is preferably a ureido group having from 1 to 20 carbon atoms. Examples of the substituent include an alkyl group and an aryl group. Examples of the ureido group include a 3-methylureido group, a 3,3-dimethylureido group and a 3-phenylureido group.

The sulfamoylamino group includes a substituted sulfamoylamino group. Examples of the substituent include an alkyl group. Examples of the sulfamoylamino group include an N,N-dipropylsulfamoylamino group.

The alkoxycarbonylamino group includes a substituted alkoxycarbonylamino group. The alkoxycarbonylamino group is preferably an alkoxycarbonylamino group having from 2 to 20 carbon atoms. Examples of the substituent include an ionic hydrophilic group. Examples of the alkoxycarbonylamino group include an ethoxycarbonylamino group.

The aryloxycarbonylamino group includes a substituted aryloxycarbonylamino group. The aryloxycarbonylamino group is preferably an aryloxycarbonylamino group having from 7 to 20 carbon atoms. Examples of the substituent include an ionic hydrophilic group. Examples of the aryloxycarbonylamino group include a phenoxycarbonylamino group.

The alkylsulfonylamino group and the arylsulfonylamino group include a substituted alkylsulfonylamino group and a substituted arylsulfonylamino group, respectively. The alkylsulfonylamino group and the arylsulfonylamino group are preferably an alkylsulfonylamino group having from 1 to 20 carbon atoms and an arylsulfonylamino group having from 1 to 20 carbon atoms, respectively. Examples of the substituent include an ionic hydrophilic group. Examples of the alkylsulfonylamino group and arylsulfonylamino group include a methylsulfonylamino group, an N-phenyl-methylsulfonylamino group, a phenylsulfonylamino group and a 3-carboxyphenylsulfonylamino group.

The heterocyclic sulfonylamino group includes a substituted heterocyclic sulfonylamino group. Examples of the heterocyclic ring include the heterocyclic rings described above for the heterocyclic group. The heterocyclic sulfonylamino group is preferably a heterocyclic sulfonylamino group having from 1 to 12 carbon atoms. Examples of the substituent include an ionic hydrophilic group. Examples of the heterocyclic sulfonylamino group include a 2-thienylsulfonylamino group and a 3-pyridylsulfonylamino group.

The alkylthio group, the arylthio group and the heterocyclic thio group include a substituted alkylthio group, a substituted arylthio group and a substituted heterocyclic thio group, respectively. Examples of the heterocyclic ring include the heterocyclic rings described above for the heterocyclic group. The alkylthio group, the arylthio group and the heterocyclic thio group are preferably an alkylthio group having from 1 to 20 carbon atoms, an arylthio group having from 1 to 20 carbon atoms and a heterocyclic thio group having from 1 to 20 carbon atoms, respectively. Examples of the substituent include an ionic hydrophilic group. Examples of the alkylthio group, arylthio group and heterocyclic thio group include a methylthio group, a phenylthio group and a 2-pyridylthio group.

The alkylsulfonyl group and the arylsulfonyl group include a substituted alkylsulfonyl group and a substituted arylsulfonyl group, respectively. Examples of the alkylsulfonyl group and arylsulfonyl group include a methylsulfonyl group and a phenylsulfonyl group.

The heterocyclic sulfonyl group includes a substituted heterocyclic sulfonyl group. Examples of the heterocyclic ring include the heterocyclic rings described above for the heterocyclic group. The heterocyclic sulfonyl group is preferably a heterocyclic sulfonyl group having from 1 to 20 carbon atoms. Examples of the substituent include an ionic hydrophilic group. Examples of the heterocyclic sulfonyl group include a 2-thienylsulfonyl group and a 3-pyridylsulfonyl group.

The alkylsulfinyl group and the arylsulfinyl group include a substituted alkylsulfinyl group and a substituted arylsulfinyl group, respectively. Examples of the alkylsulfinyl group and arylsulfinyl group include a methylsulfinyl group and a phenylsulfinyl group.

The heterocyclic sulfinyl group includes a substituted heterocyclic sulfinyl group. Examples of the heterocyclic ring include the heterocyclic rings described above for the heterocyclic group. The heterocyclic sulfinyl group is preferably a heterocyclic sulfinyl group having from 1 to 20 carbon atoms. Examples of the substituent include an ionic hydrophilic group. Examples of the heterocyclic sulfinyl group include a 4-pyridylsulfinyl group.

The sulfamoyl group includes a substituted sulfamoyl group. Examples of the substituent include an alkyl group. Examples of the sulfamoyl group include a dimethylsulfamoyl group and a di-(2-hydroxyethyl)sulfamoyl group.

Among the dyes represented by formula (3), preferred is a dye having a structure represented by the following formula (3-A):

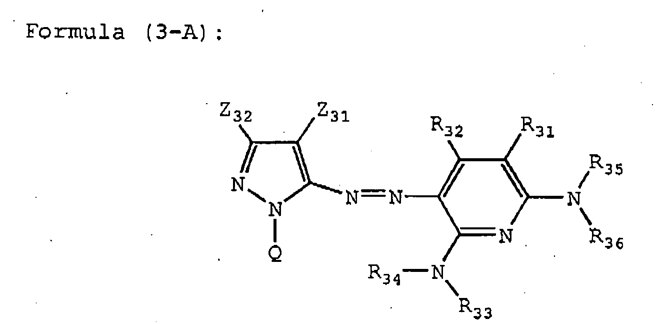

In formula (3-A), R₃₁, R₃₂, R₃₅ and R₃₆ have the same meanings as defined in formula (3), respectively.

R₃₃ and R₃₄ each independently represents a hydrogen atom or a substituent and the substituent is an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group. R₃₃ and R₃₄ each is preferably a hydrogen atom, an aromatic group, a heterocyclic group, an acyl group, an alkylsulfonyl group or an arylsulfonyl group, more preferably a hydrogen atom, an aromatic group or a heterocyclic group.

Z₃₁ represents an electron-withdrawing group having a Hammett's substituent constant σp value of 0.20 or more. Z₃₁ is preferably an electron-withdrawing group having a σp value of 0.30 or more, more preferably 0.45 or more, still more preferably 0.60 to more, but the σp value preferably does not exceed 1.0.

Specific examples of the electron-withdrawing group having a Hammett's substituent constant σp value of 0.60 or more include a cyano group, a nitro group, an alkylsulfonyl group (e.g., methylsulfonyl) and an arylsulfonyl group (e.g., phenylsulfonyl).

Specific examples of the electron-withdrawing group having a Hammett's substituent constant σp value of 0.45 or more include, in addition to those described above, an acyl group (e.g., acetyl), an alkoxycarbonyl group (e.g., dodecyloxycarbonyl), an aryloxycarbonyl group (e.g., m-chlorophenoxycarbonyl), an alkylsulfinyl group (e.g., n-propylsulfinyl), an arylsulfinyl group (e.g., phenylsulfinyl), a sulfamoyl group (e.g., N-ethylsulfamoyl, N,N-dimethylsulfamoyl) and a halogenated alkyl group (e.g., trifluoromethyl).

Specific examples of the electron-withdrawing group having a Hammett's substituent constant σp value of 0.30 or more include, in addition to those described above, an acyloxy group (e.g., acetoxy), a carbamoyl group (e.g., N-ethylcarbamoyl, N,N-dibutylcarbamoyl), a halogenated alkoxy group (e.g., trifluoromethyloxy), a halogenated aryloxy group (e.g., pentafluorophenyloxy), a sulfonyloxy group (e.g., methylsulfonyloxy), a halogenated alkylthio group (e.g., difluoromethylthio), an aryl group substituted by two or more electron-withdrawing groups having a σp value of 0.15 or more (e.g., 2,4-dinitrophenyl, pentachlorophenyl) and a heterocyclic ring (e.g., 2-benzoxazolyl, 2-benzothiazolyl, 1-phenyl-2-benzimidazolyl).

Specific examples of the electron-withdrawing group having a Hammett's substituent constant σp value of 0.20 or more include, in addition to those described above, a halogen atom.

Among these, Z₃₁ is preferably an acyl group having from 2 to 20 carbon atoms, an alkyloxycarbonyl group having from 2 to 20 carbon atoms, a nitro group, a cyano group, an alkylsulfonyl group having from 1 to 20 carbon atoms, an arylsulfonyl group having from 6 to 20 carbon atoms, a carbamoyl group having from 1 to 20 carbon atoms or a halogenated alkyl group having from 1 to 20 carbon atoms, more preferably a cyano group, an alkylsulfonyl group having from 1 to 20 carbon atoms or an arylsulfonyl group having from 6 to 20 carbon atoms, and most preferably a cyano group.

Z₃₂ represents a hydrogen atom or a substituent and the substituent is an aliphatic group, an aromatic group or a heterocyclic group. Z₃₂ is preferably an aliphatic group, more preferably an alkyl group having from 1 to 6 carbon atoms.

Q represents a hydrogen atom or a substituent and the substituent is an aliphatic group, an aromatic group or a heterocyclic group. Q is preferably a group comprising a nonmetallic atom group necessary for forming a 5-, 6-, 7-or 8-membered ring. The 5-, 6-, 7- or 8-membered ring may be substituted, may be a saturated ring or may have an unsaturated bond. Q is more preferably an aromatic group or a heterocyclic group. Preferred examples of the nonmetallic atom include a nitrogen atom, an oxygen atom, a sulfur atom and a carbon atom. Specific examples of the ring structure include a benzene ring, a cyclopentane ring, a cyclohexane ring, a cycloheptane ring, a cyclooctane ring, a cyclohexene ring, a pyridine ring, a pyrimidine ring, a pyrazine ring, a pyridazine ring, a triazine ring, an imidazole ring, a benzimidazole ring, an oxazole ring, a benzoxazole ring, a thiazole ring, a benzothiazole ring, an oxane ring, a sulfolane ring and a thiane ring.

The hydrogen atom of each substituent described in regard to formula (3-A) may be substituted. Examples of the substituent include the substituents described in regard to formula (3), the groups described as examples for G₃, R₃₁ and R₃₂, and an ionic hydrophilic group.

The preferred combination of substituents in the azo dye represented by formula (3) is described below. R₃₅ and R₃₆ each is preferably a hydrogen atom, an alkyl group, an aryl group, a heterocyclic group, a sulfonyl group or an acyl group, more preferably a hydrogen atom, an aryl group, a heterocyclic group or a sulfonyl group, and most preferably a hydrogen atom, an aryl group or a heterocyclic group. However, R₃₅ and R₃₆ are not hydrogen atoms at the same time.

G₃ is preferably a hydrogen atom, a halogen atom, an alkyl group, a hydroxyl group, an amino group or an acylamino group, more preferably a hydrogen atom, a halogen atom, an amino group or an acylamino group, and most preferably a hydrogen atom, an amino group or an acylamino group.

A₃₁ is preferably a pyrazole ring, an imidazole ring, an isothiazole ring, a thiadiazole ring or a benzothiazole ring, more preferably a pyrazole ring or an isothiazole ring, and most preferably a pyrazole ring.

B₃₁ and B₃₂ each is =CR₃₁- or -CR₃₂=, and R₃₁ and R₃₂ each is preferably a hydrogen atom, an alkyl group, a halogen atom, a cyano group, a carbamoyl group, a carboxyl group, a hydroxyl group, an alkoxy group or an alkoxycarbonyl group, more preferably a hydrogen atom, an alkyl group, a carboxyl group, a cyano group or a carbamoyl group.

As for the preferred combination of substituents in the compound represented by formula (3), a compound where at least one of various substituents is the preferred group is preferred, a compound where a larger number of various substituents are the preferred groups is more preferred, and a compound where all substituents are the preferred groups is most preferred.

Specific examples of the azo dye represented by formula (3) are set forth below. The dyes of specific examples, which exhibit the above-described property regarding the dye concentration dependency of the molar extinction coefficient, are preferably used in the invention. However, the invention is not limited to the dyes set forth below.

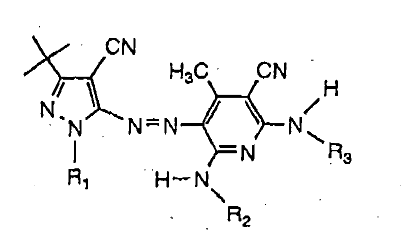

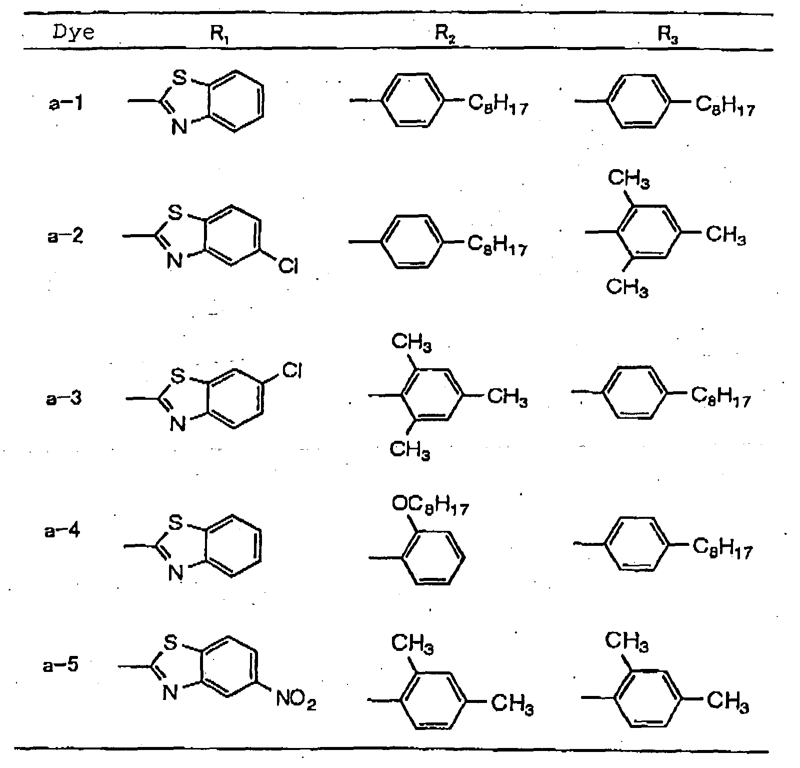

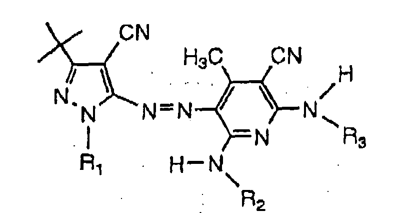

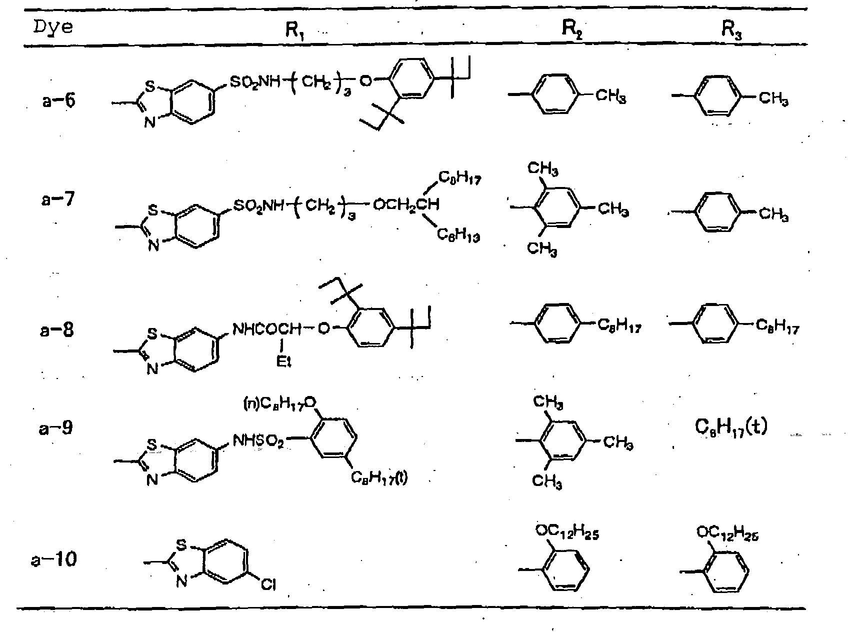

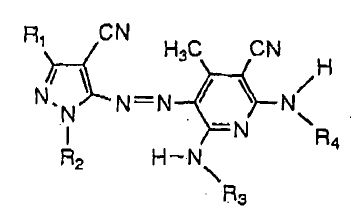

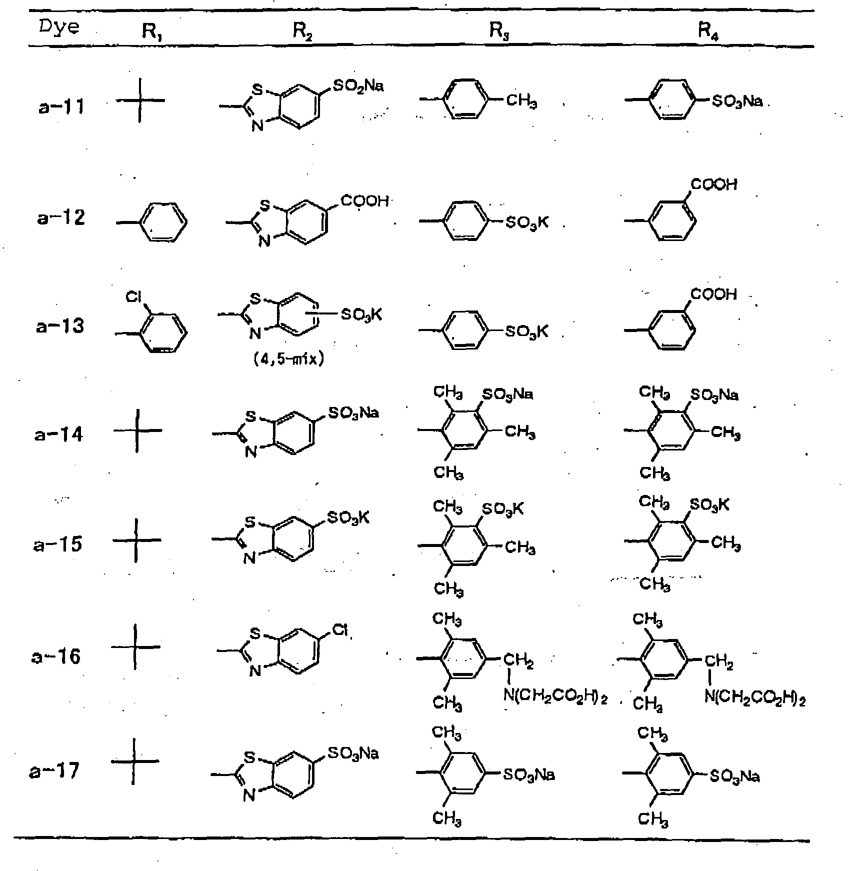

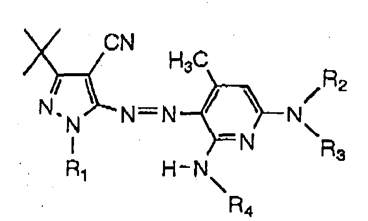

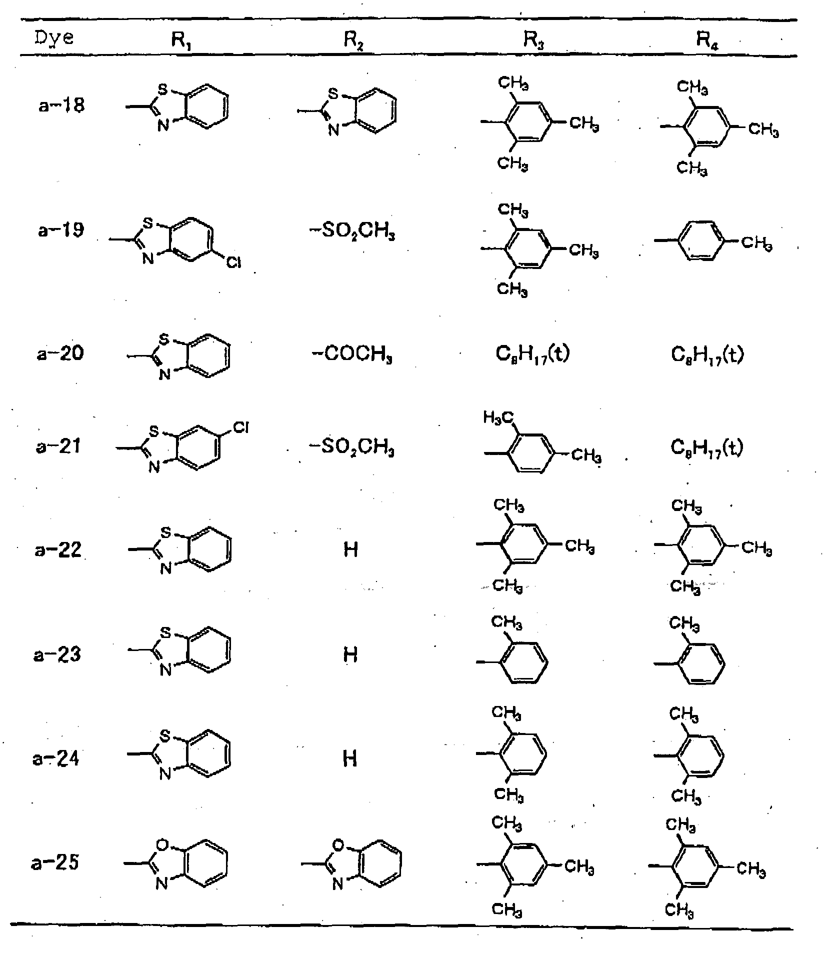

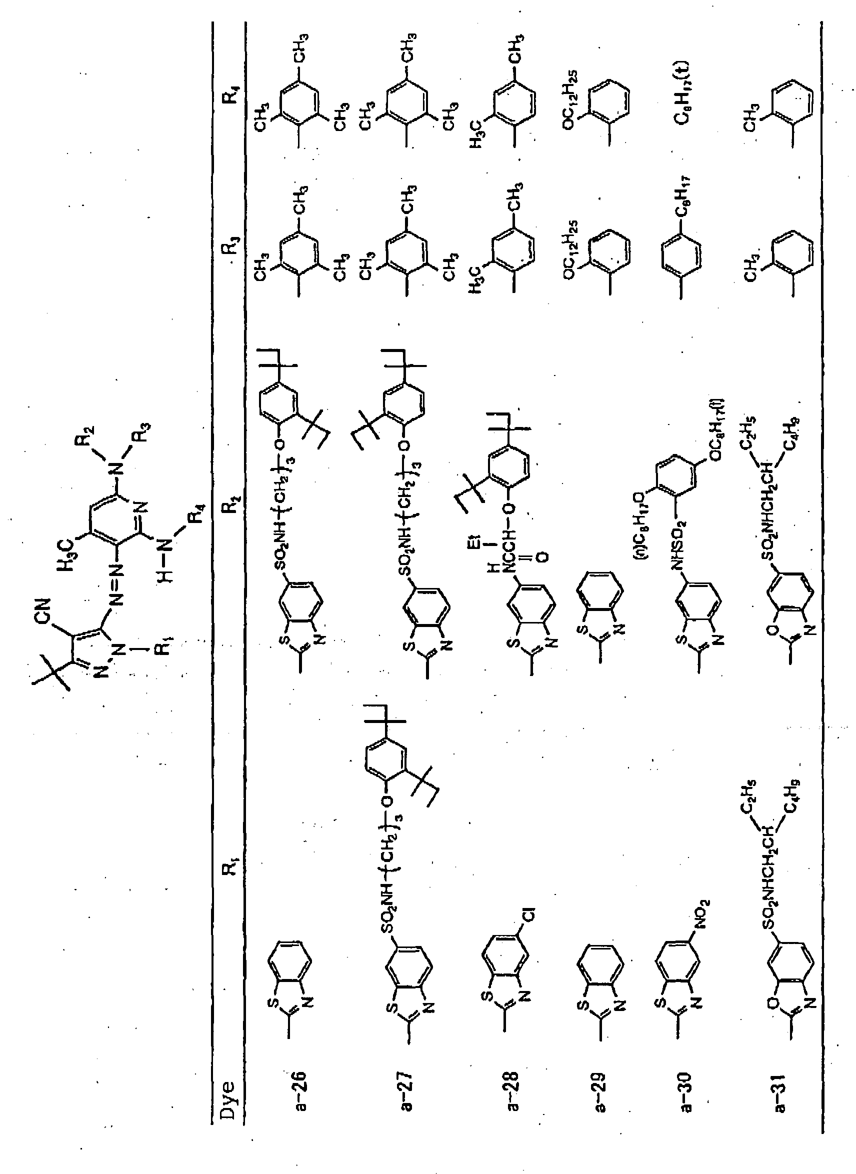

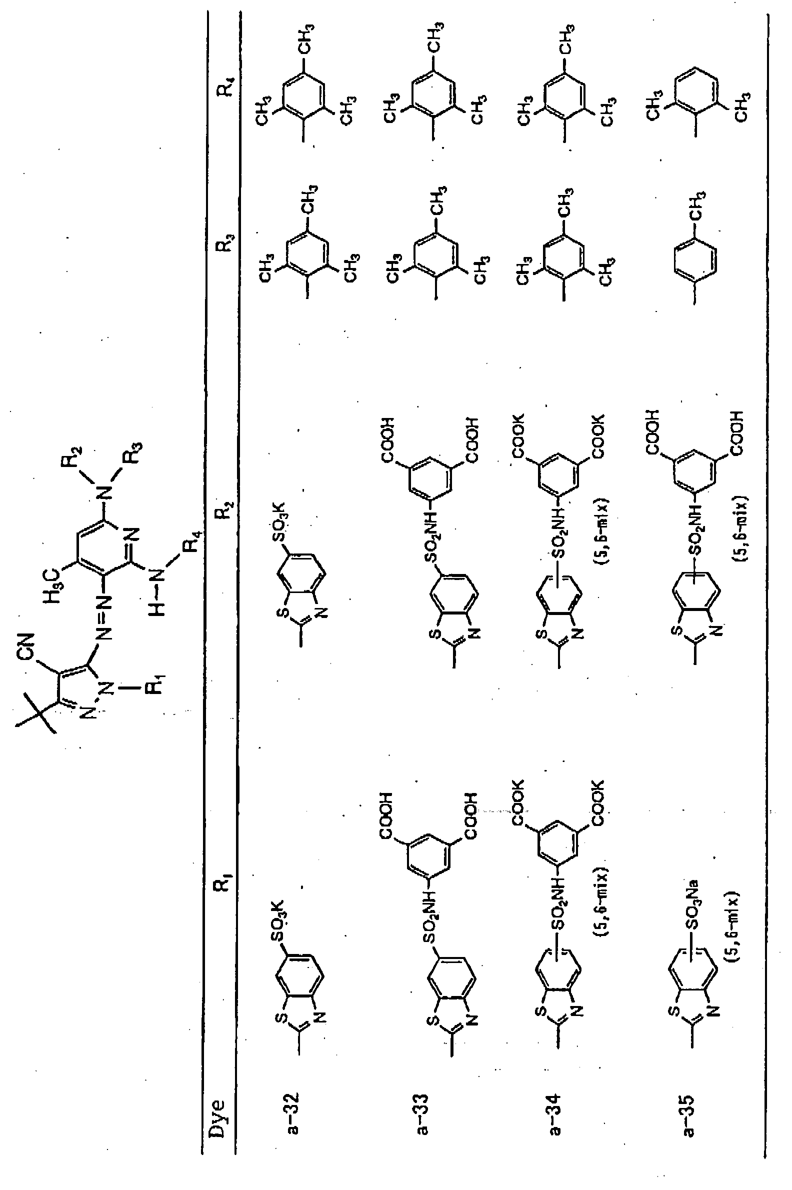

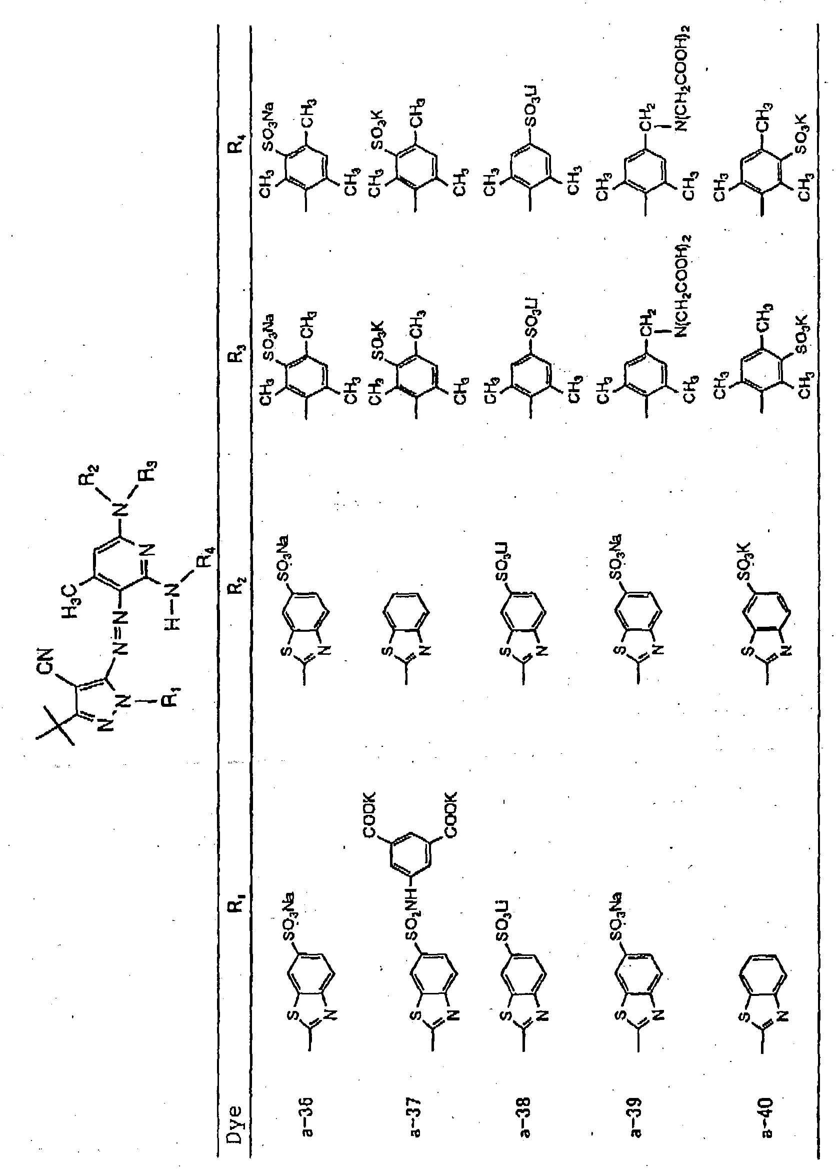

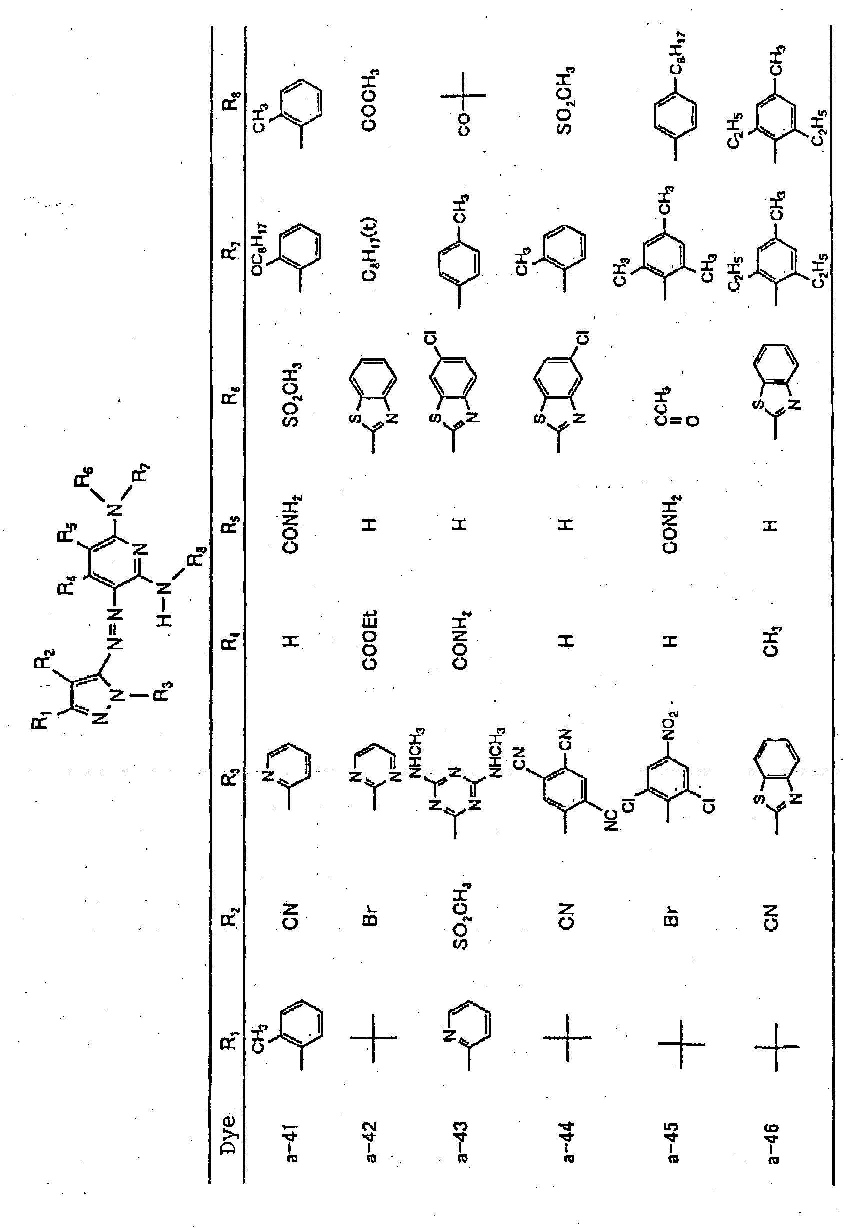

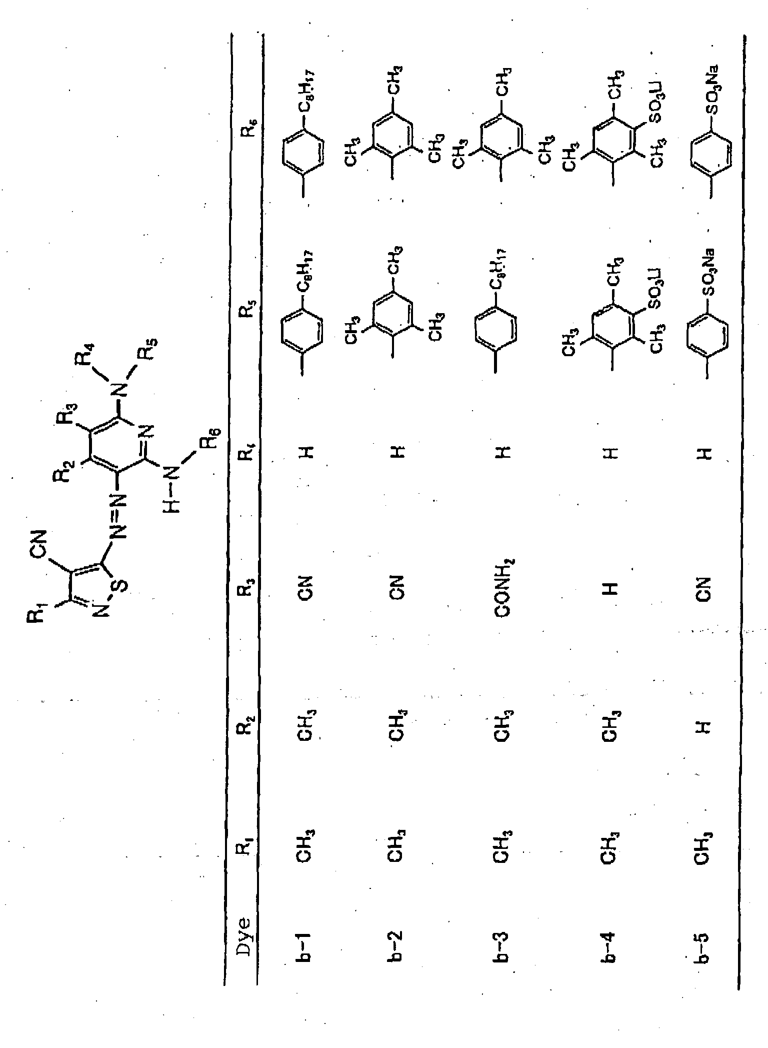

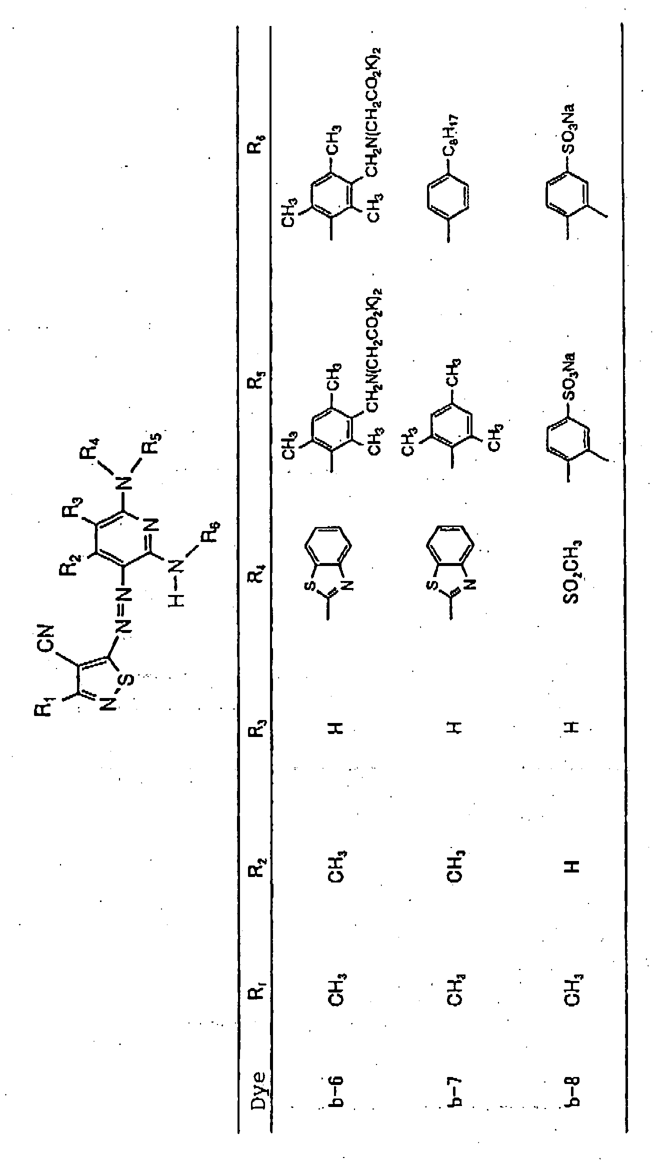

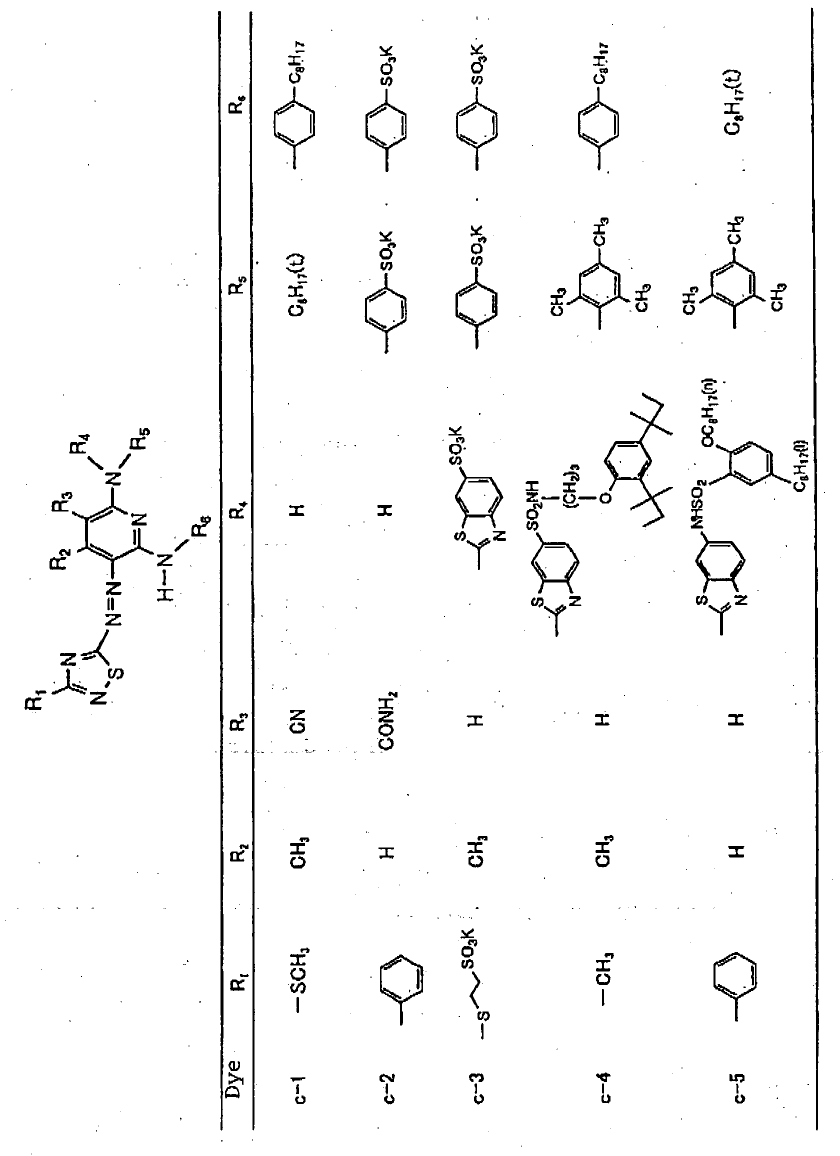

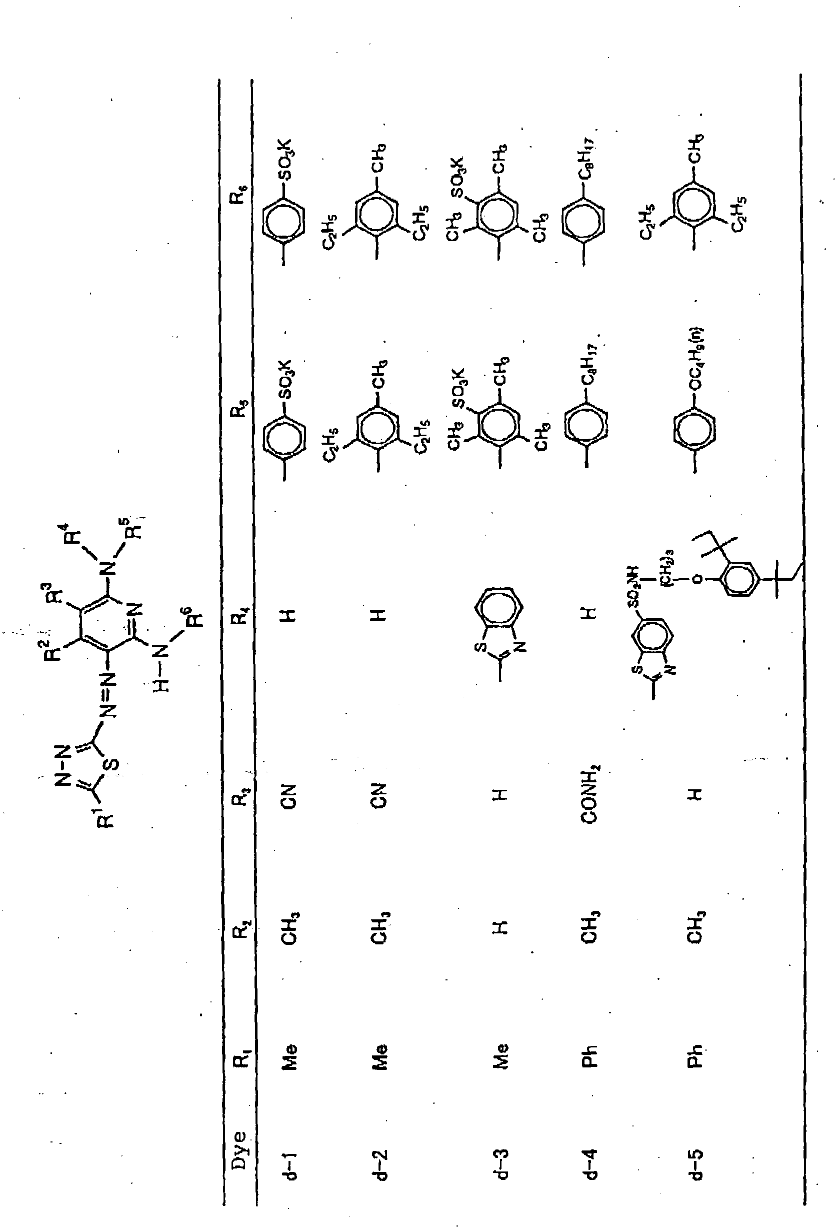

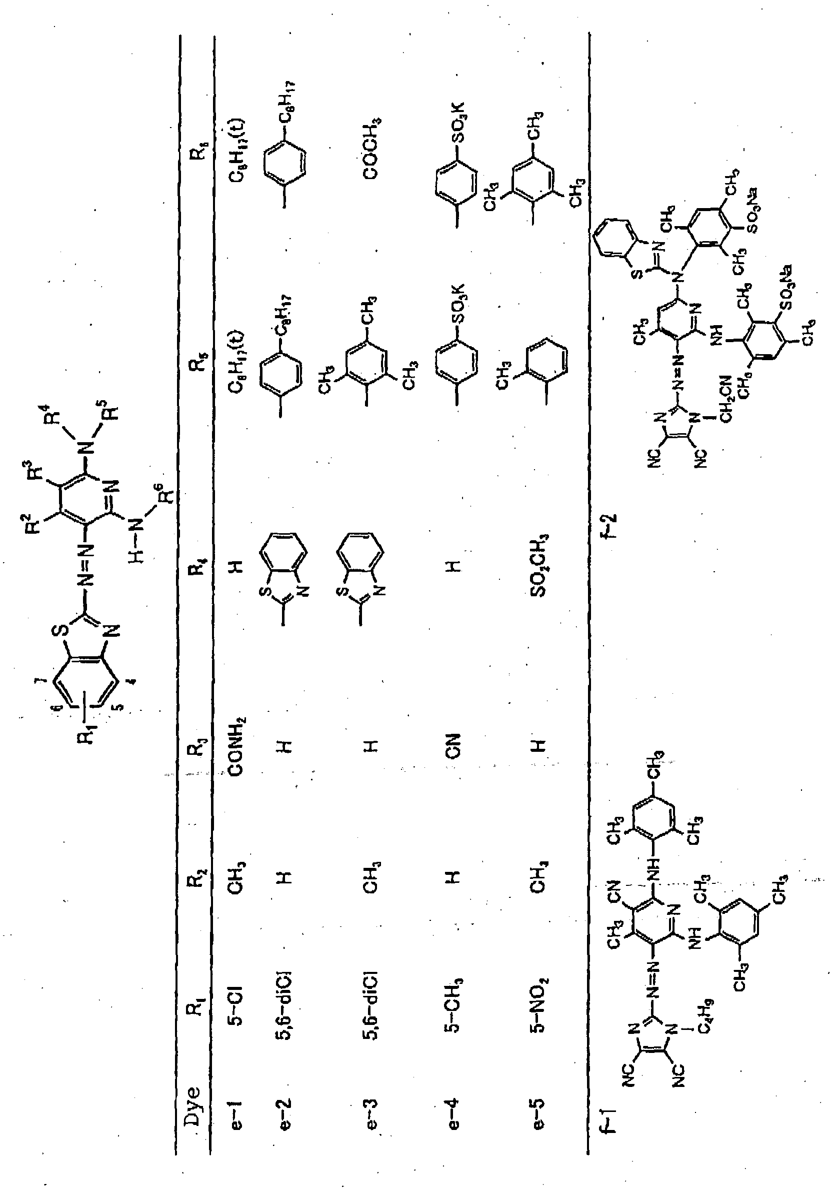

### [Black Dye]

In the black ink for use in the invention, a dye (L) having λmax in the region from 500 to 700 nm and having a half-value width (Wλ_{1/2}) of 100 nm or more (preferably from 120 to 500 nm, more preferably from 120 to 350 nm) in the absorption spectrum of a dilute solution standardized to an absorbance of 1.0 is used.

In the case where the dye (L) by itself can realize black of high image quality "pure black" (that is, black which is not dependent on the light source at the observation and less susceptible to stress of any one color tone of B, G and R), the dye may be used alone as the dye for black ink. However, in general, a dye for covering the region where the dye (L) has low absorption is usually used in combination. A dye (S) having a main absorption in a yellow region (λmax of 350 to 500 nm) is preferably used in combination. The black ink may also be produced by using other dyes in combination.

In the invention, the above-described dye alone or in combination with other dyes is dissolved or dispersed in an aqueous medium to prepare a black ink and in order to satisfy the performances preferred as the black ink for inkjet recording, namely, 1) the weather resistance is excellent and/or 2) the balance of black is not disrupted even after color fading, an ink satisfying the following conditions is preferably produced.

A black square symbol of JIS Code 2223 is printed in a 48-point size by using the black ink and the reflection density (Dᵥᵢₛ) measured by a visual neutral filter (visual filter) is defined as the initial density. Examples of the reflection densitometer having mounted thereon the visual neutral filter include X-Rite Densitometer. In the case of measuring the density of "black", the measured value of Dᵥᵢₛ is used as the standard observation reflection density. The printed material is enforcedly discolored by using an ozone discoloration tester capable of always generating 5 ppm of ozone and the accelerated fading rate constant (kᵥᵢₛ) is determined according to the relational formula of 0.8= exp(-kᵥᵢₛ·t) from the time period (t) until the reflection density (Dᵥᵢₛ) decreases to 80% of the initial reflection density value.

The black ink preferably has the accelerated fading rate constant (kᵥᵢₛ) of 5.0×10⁻² [hour⁻¹] or less, more preferably 3.0×10⁻² [hour⁻¹] or less, still more preferably 1.0×10⁻² [hour⁻¹] or less (condition 1).

Also, a black square symbol of JIS Code 2223 is printed in a 48-point size by using the black ink and the reflection densities (D_{R}, D_{G}, D_{B}) of three colors of C (cyan), M (magenta) and Y (yellow), which are density values measured by a Status A filter, are defined as the initial densities. The reflection densities (D_{R}, D_{G}, D_{B}) indicate C reflection density by Status A (red) filter, M reflection density by Status A (green) filter, Y reflection density by Status A (blue) filter, respectively. The printed material is enforcedly discolored by using an ozone discoloration tester capable of always generating 5 ppm of ozone according to the above-described method and the accelerated fading rate constants (k_{R}, k_{G}, k_{B}) are determined similarly from the time period until the reflection densities (D_{R}, D_{G}, D_{B}) decrease to 80% of respective initial density values. When the ratio (R) of the maximum value to the minimum value in the three accelerated fading rate constants is determined (for example, in the case where k_{R} is a maximum value and k_{G} is a minimum value, R=k_{R}/k_{G}) , the ratio (R) is preferably 1.2 or less, more preferably 1.1 or less, still more preferably 1.05 or less (condition 2).

The "printed material obtained by printing a black square symbol of JIS Code 2223 in a 48-point size" used above is an image printed in a size large enough to cover an aperture of the densitometer and thereby give a sufficiently large size for the measurement of density.

As described above, at least one dye used in the black ink has an oxidation potential more positive than 1.0 V (vs SCE), preferably more positive than 1.1 V (vs SCE), more preferably more positive than 1.15 V (vs SCE), and at least one of the dyes preferably has λmax of 500 nm or longer (condition 3).

Furthermore, the black ink is preferably produced by using an azo dye represented by the following formula (4): $\text{Formula (4):} {\text{A}}_{\text{4}} {\text{1-N=N-B}}_{\text{41}} {\text{-N=N-C}}_{\text{41}}$wherein A₄₁, B₄₁ and C₄₁ each independently represents an aromatic group which may be substituted or a heterocyclic group which may be substituted.

The azo dye represented by formula (4) includes those falling under the dye (L) having λmax in the region from 500 to 700 nm and having a half-value width of 100 nm or more in the absorption spectrum of a dilute solution standardized to an absorbance of 1.0. Further, a dye (S) having λmax in the region from 350 to 500 nm is also included in the dye represented by formula (4). An ink where at least one dye (L) is the dye of formula (4) is preferred, an ink where at least one dye (L) and at least one dye (S) are the dye of formula (4) is more preferred, an ink where 90 wt% of all dyes in the ink is occupied by the dye of formula (4) is still more preferred (condition 4).

The black ink for use in the invention is a black ink satisfying at least one of the conditions 1 to 4.

The dye represented by formula (4) is described below.

In formula (4), A₄₁, B₄₁ and C₄₁ each independently represents an aromatic group which may be substituted or a heterocyclic group which may be substituted (A₄₁ and C₄₁ are each monovalent groups and B₄₁ is a divalent group).

The azo dye represented by formula (4) is preferably a dye represented by the following formula (4-A): 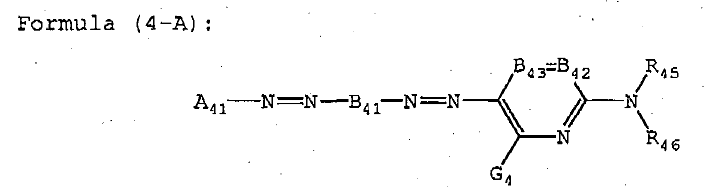 wherein A₄₁ and B₄₁ have the same meanings as defined in formula (4), respectively,
B₄₂ and B₄₃ each represents =CR₄₁- or -CR₄₂=, or either one of B₄₂ and B₄₃ represents a nitrogen atom and the other represents =CR₄₁- or -CR₄₂=,
G₄, R₄₁ and R₄₂ each independently represents a hydrogen atom, a halogen atom, an aliphatic group, an aromatic group, a heterocyclic group, a cyano group, a carboxyl group, a carbamoyl group, an alkoxycarbonyl group, an aryloxycarbonyl group, a heterocyclic oxycarbonyl group, an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an alkylamino group, an arylamino group and a heterocyclic amino group), an acylamino group, a ureido group, a sulfamoylamino group, an alkoxycarbonylamino group, an aryloxycarbonylamino group, an alkylsulfonylamino group, an arylsulfonylamino group, a heterocyclic sulfonylamino group, a nitro group, an alkylthio group, an arylthio group, a heterocyclic thio group, an alkylsulfonyl group, an arylsulfonyl group, a heterocyclic sulfonyl group, an alkylsulfinyl group, an arylsulfinyl group, a heterocyclic sulfinyl group, a sulfamoyl group or a sulfo group, and each group may be further substituted,
R₄₅ and R₄₆ each independently represents a hydrogen atom, an aliphatic group, an aromatic group, a heterocyclic group, an acyl group, an alkoxycarbonyl group, an aryloxycarbonyl group, a carbamoyl 'group, an alkylsulfonyl group, an arylsulfonyl group or a sulfamoyl group, and each group may further have a substituent, provided that R₄₅ and R₄₆ are not a hydrogen atom at the same time, or
R₄₁, and R₄₅, or R₄₅ and R₄₆ may combine to form a 5- or 6-membered ring.

The azo dye represented by formula (4-A) is more preferably a dye represented by the following formula (4-B) : 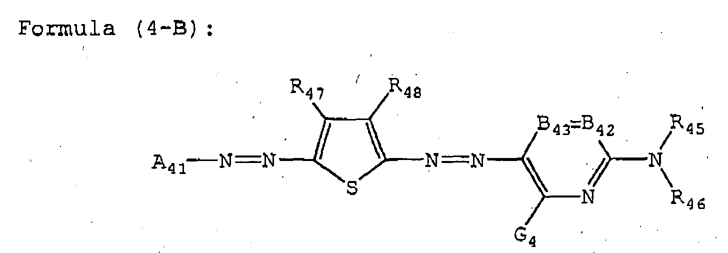 wherein R₄₇ and R₄₈ each has the same meaning as R₄₁ in formula (4-A).

The term "substituent" as used in the description of formulae (4), (4-A) and (4-B) is described below. The term is common in the description of formulae (4-C) and (4-D) shown later.

The halogen atom includes a fluorine atom, a chlorine atom and a bromine atom.

The aliphatic group means an alkyl group, a substituted alkyl group, an alkenyl group, a substituted alkenyl group, an alkynyl 'group, a substituted alkynyl group, an aralkyl group and a substituted aralkyl group. The aliphatic group may be branched or may form a ring. The number of carbon atoms in the aliphatic group is preferably from 1 to 20, more preferably from 1 to 16. The aryl moiety in the aralkyl group and the substituted aralkyl group is preferably phenyl or naphthyl, more preferably phenyl. Examples of the aliphatic group include a methyl group, an ethyl group, a butyl group, an isopropyl group, a tert-butyl group, a hydroxyethyl group, a methoxyethyl group, a cyanoethyl group, a trifluoromethyl group, a 3-sulfopropyl group, a 4-sulfobutyl group, a cyclohexyl group, a benzyl group, a 2-phenethyl group, a vinyl group and an allyl group.

The monovalent aromatic group means an aryl group and a substituted aryl group. The aryl group is preferably a phenyl group or a naphthyl group, more preferably a phenyl group. The number of carbon atoms in the monovalent aromatic group is preferably from 6 to 20, more preferably from 6 to 16. Examples of the monovalent aromatic group include a phenyl group, a p-tolyl group, a p-methoxyphenyl group, an o-chlorophenyl group and an m-(3-sulfopropylamino)phenyl group. The divalent aromatic group is a divalent form of the monovalent aromatic groups and examples thereof include a phenylene group, a p-tolylene group, a p-methoxyphenylene group, an o-chlorophenylene group, an m-(3-sulfopropylamino)phenylene group and a naphthylene group.

The heterocyclic group includes a heterocyclic group having a substituent and an unsubstituted heterocyclic group. The heterocyclic ring may be condensed with an aliphatic ring, an aromatic ring or other heterocyclic ring. The heterocyclic group is preferably a 5- or 6-membered heterocyclic group. Examples of the heteroatom in the heterocyclic ring include N, O and S. Examples of the substituent include an aliphatic group, a halogen atom, an alkylsulfonyl group, an arylsulfonyl group, an acyl group, an acylamino group, a sulfamoyl group, a carbamoyl group and an ionic hydrophilic group. Examples of the heterocyclic ring used in the monovalent or divalent heterocyclic group include a pyridine ring, a thiophene ring, a thiazole ring, a benzothiazole ring, a benzoxazole ring and a furan ring.

The carbamoyl group includes a carbamoyl group having a substituent and an unsubstituted carbamoyl group. Examples of the substituent include an alkyl group. Examples of the carbamoyl group include a methylcarbamoyl group and a dimethylcarbamoyl group.

The alkoxycarbonyl group includes an alkoxycarbonyl group having a substituent and an unsubstituted alkoxycarbonyl group. The alkoxycarbonyl group is preferably an alkoxycarbonyl group having from 2 to 20 carbon atoms. Examples of the substituent include an ionic hydrophilic group. Examples of the alkoxycarbonyl group include a methoxycarbonyl group and an ethoxycarbonyl group.

The aryloxycarbonyl group includes an aryloxycarbonyl group having a substituent and an unsubstituted aryloxycarbonyl group. The aryloxycarbonyl group is preferably an aryloxycarbonyl group having from 7 to 20 carbon atoms. Examples of the substituent include an ionic hydrophilic group. Examples of the aryloxycarbonyl group include a phenoxycarbonyl group.

The heterocyclic oxycarbonyl group includes a heterocyclic oxycarbonyl group having a substituent and an unsubstituted heterocyclic oxycarbonyl group. The heterocyclic oxycarbonyl group is preferably a heterocyclic oxycarbonyl group having from 2 to 20 carbon atoms. Examples of the substituent include an ionic hydrophilic group. Examples of the heterocyclic oxycarbonyl group include a 2-pyridyloxycarbonyl group.

The acyl group includes an acyl group having a substituent and an unsubstituted acyl group. The acyl group is preferably an acyl group having from 1 to 20 carbon atoms. Examples of the substituent include an ionic hydrophilic group. Examples of the acyl group include an acetyl group and a benzoyl group.

The alkoxy group includes an alkoxy group having a substituent and an unsubstituted alkoxy group. The alkoxy group is preferably an alkoxy group having from 1 to 20 carbon atoms. Examples of the substituent include an alkoxy group, a hydroxyl group and an ionic hydrophilic group. Examples of the alkoxy group include a methoxy group, an ethoxy group, an isopropoxy group, a methoxyethoxy group, a hydroxyethoxy group and a 3-carboxypropoxy group.

The aryloxy group includes an aryloxy group having a substituent and an unsubstituted aryloxy group. The aryloxy group is preferably an aryloxy group having from 6 to 20 carbon atoms. Examples of the substituent include an alkoxy group and an ionic hydrophilic group. Examples of the aryloxy group include a phenoxy group, a p-methoxyphenoxy group and an o-methoxyphenoxy group.

The heterocyclic oxy group includes a heterocyclic oxy group having a substituent and an unsubstituted heterocyclic oxy group. The heterocyclic oxy group is preferably a heterocyclic oxy group having from 2 to 20 carbon atoms. Examples of the substituent include an alkyl group, an alkoxy group and an ionic hydrophilic group. Examples of the heterocyclic oxy group include a 3-pyridyloxy group and a 3-thienyloxy group.

The silyloxy group is preferably a silyloxy group substituted by an aliphatic or aromatic group having from 1 to 20 carbon atoms. Examples of the silyloxy group include a trimethylsilyloxy group and a diphenylmethylsilyloxy group.

The acyloxy group includes an acyloxy group having a substituent and an unsubstituted acyloxy group. The acyloxy group is preferably an acyloxy group having from 1 to 20 carbon atoms. Examples of the substituent include an ionic hydrophilic group. Examples of the acyloxy group include an acetoxy group and a benzoyloxy group.

The carbamoyloxy group includes a carbamoyloxy group having a substituent and an unsubstituted carbamoyloxy group. Examples of the substituent include an alkyl group. Examples of the carbamoyloxy group include an N-methylcarbamoyloxy group.

The alkoxycarbonyloxy group includes an alkoxycarbonyloxy group having a substituent and an unsubstituted alkoxycarbonyloxy group. The alkoxycarbonyloxy group is preferably an alkoxycarbonyloxy group having from 2 to 20 carbon atoms. Examples of the alkoxycarbonyloxy group include a methoxycarbonyloxy group and an isopropoxycarbonyloxy group.

The aryloxycarbonyloxy group includes an aryloxycarbonyloxy group having a substituent and an unsubstituted aryloxycarbonyloxy group. The aryloxycarbonyloxy group is preferably an aryloxycarbonyloxy group having from 7 to 20 carbon atoms. Examples of the aryloxycarbonyloxy group include a phenoxycarbonyloxy group.

The amino group includes an amino group substituted by an alkyl group, an aryl group or a heterocyclic group, and the alkyl group, the aryl group and the heterocyclic group each may further have a substituent. The alkylamino group is preferably an alkylamino group having from 1 to 20 carbon atoms. Examples of the substituent include an ionic hydrophilic group. Examples of the alkylamino group include a methylamino group and a diethylamino group.

The arylamino group includes an arylamino group having a substituent and an unsubstituted arylamino group. The arylamino group is preferably an arylamino group having from 6 to 20 carbon atoms. Examples of the substituent include a halogen atom and an ionic hydrophilic group. Examples of the arylamino group include an anilino group and a 2-chlorophenylamino group.

The heterocyclic amino group includes a heterocyclic amino group having a substituent and an unsubstituted heterocyclic amino group. The heterocyclic amino group is preferably a heterocyclic amino group having from 2 to 20 carbon atoms. Examples of the substituent include an alkyl group, a halogen atom and an ionic hydrophilic group.

The acylamino group includes an acylamino group having a substituent and an unsubstituted acylamino group. The acylamino group is preferably an acylamino group having from 2 to 20 carbon atoms. Examples of the substituent include an ionic hydrophilic group. Examples of the acylamino group include an acetylamino group, a propionylamino group, a benzoylamino group, an N-phenylacetylamino group and a 3,5-disulfobenzoylamino group.

The ureido group includes a ureido group having a substituent and an unsubstituted ureido group. The ureido group is preferably a ureido group having from 1 to 20 carbon atoms. Examples of the substituent include an alkyl group and an aryl group. Examples of the ureido group include a 3-methylureido group, a 3,3-dimethylureido group and a 3-phenylureido group.

The sulfamoylamino group includes a sulfamoylamino group having a substituent and an unsubstituted sulfamoylamino group. Examples of the substituent include an alkyl group. Examples of the sulfamoylamino group include an N,N-dipropylsulfamoylamino group.

The alkoxycarbonylamino group includes an alkoxycarbonylamino group having a substituent and an unsubstituted alkoxycarbonylamino group. The alkoxycarbonylamino group is preferably an alkoxycarbonylamino group having from 2 to 20 carbon atoms. Examples of the substituent include an ionic hydrophilic group. Examples of the alkoxycarbonylamino group include an ethoxycarbonylamino group.

The aryloxycarbonylamino group includes an aryloxycarbonylamino group having a substituent and an unsubstituted aryloxycarbonylamino group. The aryloxycarbonylamino group is preferably an aryloxycarbonylamino group having from 7 to 20 carbon atoms. Examples of the substituent include an ionic hydrophilic group. Examples of the aryloxycarbonylamino group include a phenoxycarbonylamino group.

The alkylsulfonylamino group includes an alkylsulfonylamino group having a substituent and an unsubstituted alkylsulfonylamino group, and the arylsulfonylamino group includes an arylsulfonylamino group having a substituent and an unsubstituted arylsulfonylamino group. The sulfonylamino group is preferably a sulfonylamino group having from 1 to 20 carbon atoms. Examples of the substituent include an ionic hydrophilic group. Examples of the sulfonylamino groups include a methylsufonylamino group, an N-phenyl-methylsulfonylamino group, a phenylsulfonylamino group and a 3-carboxyphenylsulfonylamino group.

The heterocyclic sulfonylamino group includes a heterocyclic sulfonylamino group having a substituent and an unsubstituted heterocyclic sulfonylamino group. The heterocyclic sulfonylamino group is preferably a heterocyclic sulfonylamino group having from 1 to 12 carbon atoms. Examples of the substituent include an ionic hydrophilic group. Examples of the heterocyclic sulfonylamino group include a 2-thiophenesulfonylamino group and a 3-pyridinesulfonylamino group.

The heterocyclic sulfonyl group includes a heterocyclic sulfonyl group having a substituent and an unsubstituted heterocyclic sulfonyl group. The heterocyclic sulfonyl group is preferably a heterocyclic sulfonyl group having from 1 to 20 carbon atoms. Examples of the substituent include an ionic hydrophilic group. Examples of the heterocyclic sulfonyl group include a 2-thiophenesulfonyl group and a 3-pyridinesulfonyl group.

The heterocyclic sulfinyl group includes a heterocyclic sulfinyl group having a substituent and an unsubstituted heterocyclic sulfinyl group. The heterocyclic sulfinyl group is preferably a heterocyclic sulfinyl group having from 1 to 20 carbon atoms. Examples of the substituent include an ionic hydrophilic group. Examples of the heterocyclic sulfinyl group include a 4-pyridinesulfinyl group.

The alkylthio group includes include an alkylthio group having a substituent and an unsubstituted alkylthio group, the arylthio group includes an arylthio group having a substituent and an unsubstituted arylthio group, and the heterocyclic thio group includes a heterocyclic thio group having a substituent and an unsubstituted heterocyclic thio group. The alkylthio group, the arylthio group and the heterocyclic thio group are preferably an alkylthio group having from 1 to 20 carbon atoms, an arylthio group having from 1 to 20 carbon atoms and a heterocyclic thio group having from 1 to 20 carbon atoms, respectively. Examples of the substituent include an ionic hydrophilic group. Examples of the alkylthio group, arylthio group and heterocyclic thio group include a methylthio group, a phenylthio group and a 2-pyridylthio group.

The alkylsulfonyl group includes an alkylsulfonyl group having a substituent and an unsubstituted alkylsulfonyl group, and the arylsulfonyl group includes an arylsulfonyl group having a substituent and an unsubstituted arylsulfonyl group. Examples of the alkylsulfonyl group and arylsulfonyl group include a methylsulfonyl group and a phenylsulfonyl group.

The alkylsulfinyl group includes an alkylsulfinyl group having a substituent and an unsubstituted alkylsulfinyl group, and the arylsulfinyl group includes an arylsulfinyl group having a substituent and an unsubstituted arylsulfinyl group. Examples of the alkylsulfinyl group and arylsulfinyl group include a methylsulfinyl group and a phenylsulfinyl group.

The sulfamoyl group includes a sulfamoyl group having a substituent and an unsubstituted sulfamoyl group., Examples of the substituent include an alkyl group. Examples of the sulfamoyl group include a dimethylsulfamoyl group and a di-(2-hydxoxyethyl)sulfamoyl group.

Formulae (4), (4-A) and (4-B) are described in more detail below.

In the following, those described above for each group or substituent are also applied to.

In formula (4), A₄₁, B₄₁ and C₄₁, each independently represents an aromatic group (A₄₁ and C₄₁ are a monovalent aromatic group such as aryl group, and B₄₁ is a divalent aromatic group such as arylene group) which may be substituted, or a heterocyclic group (A₄₁ and C₄₁ are monovalent heterocyclic groups respectively and B₄₁ is a divalent heterocyclic group) which may be substituted. Examples of the aromatic ring include a benzene ring and a naphthalene ring. Examples of the heteroatom in the heterocyclic ring include N, O and S. The heterocyclic ring may be condensed with an aliphatic ring, an aromatic ring or another heterocyclic ring.

The substituent may be an arylazo group or a heterocyclic azo group.

A dye where at least one of A₄₁, B₄₁ and C₄₁ is a heterocyclic group is preferred, and a dye where at least two of A₄₁, B₄₁ and C₄₁ are heterocyclic groups is more preferred. Also, A₄₁, B₄₁ and C₄₁ all may be heterocyclic groups.

The heterocyclic group represented by C₄₁ is preferably an aromatic nitrogen-containing 6-membered heterocyclic group represented by the following formula (4-C). When C₄₁ is the aromatic nitrogen-containing 6-membered heterocyclic group represented by formula (4-C), formula (4) corresponds to formula (4-A).

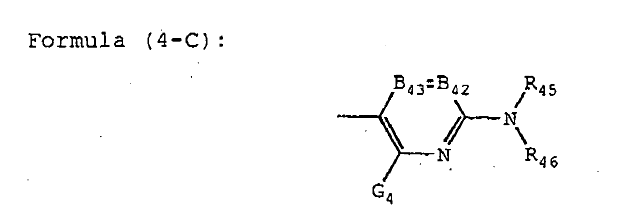

In formula (4-C), B₄₂ and B₄₃ each represents =CR₄₁- or -CR₄₂=, or either one of B₄₂ and B₄₃ represents a nitrogen atom and the other represents =CR₄₁- or -CR₄₂=. B₄₂ and B₄₃ each is preferably =CR₄₁- or -CR₄₂=.

R₄₅ and R₄₆ each independently represents a hydrogen atom, an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group, and each group may further have a substituent. The substituent represented by R₄₅ and R₄₆ is preferably a hydrogen atom, an aliphatic group, an aromatic group, a heterocyclic group, an acyl group, an alkylsulfonyl group or an arylsulfonyl group, more preferably a hydrogen atom, an aromatic group, a heterocyclic group, an acyl group, an alkylsulfonyl group or an arylsulfonyl group, and most preferably a hydrogen atom, an aryl group or a heterocyclic group, and each group may further have a substituent. However, R₄₅ and R₄₆ are not a hydrogen atom at the same time.

G₄, R₄₁ and R₄₂ each independently represents a hydrogen atom, a halogen atom, an aliphatic group, an aromatic group, a heterocyclic group, a cyano group, a carboxyl group, a carbamoyl group, an alkoxycarbonyl group, an aryloxycarbonyl group, a heterocyclic oxycarbonyl group, an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an alkylamino group, an arylamino group and a heterocyclic amino group), an acylamino group, a ureido group, a sulfamoylamino group, an alkoxycarbonylamino group, an aryloxycarbonylamino group, an alkylsulfonylamino group, an arylsulfonylamino group, a heterocyclic sulfonylamino group, a nitro group, an alkylthio group, an arylthio group, a heterocyclic thio group, an alkylsulfonyl group, an arylsulfonyl group, a heterocyclic sulfonyl group, an alkylsulfinyl group, an arylsulfinyl group, a heterocyclic sulfinyl group, a sulfamoyl group or a sulfo group, and each group may be further substituted.

The substituent represented by G₄ is preferably a hydrogen atom, a halogen atom, an aliphatic group, an aromatic group, a hydroxyl group, an alkoxy group, an aryloxy group, an acyloxy group, a heterocyclic oxy group, an amino group (including an alkylamino group, an arylamino group and a heterocyclic amino group), an acylamino group, a ureido group, a sulfamoylamino group, an alkoxycarbonylamino group, an aryloxycarbonylamino group, an alkylthio group, an arylthio group or a heterocyclic thio group, more preferably a hydrogen atom, a halogen atom, an alkyl group, a hydroxy group, an alkoxy group, an aryloxy group, an acyloxy group, an amino group (including an alkylamino group, an arylamino group and a heterocyclic amino group) or an acylamino group, and most preferably a hydrogen atom, an aniline group or an acylamino group, and each group may further have a substituent.

The substituents represented by R₄₁ and R₄₂ each is preferably a hydrogen atom, an alkyl group, a halogen atom, an alkoxycarbonyl group, a carboxyl group, a carbamoyl group, a hydroxy group, an alkoxy group or a cyano group, and each group may further have a substituent.

R₄₁ and R₄₅, or R₄₅ and R₄₆ may combine to form a 5- or 6-membered ring.

When the substituents represented by A₄₁, R₄₁, R₄₂, R₄₅, R₄₆ and G₄ each further has a substituent, examples of the substituent include the substituents described above for G₄, R₄₁ and R₄₂. Also, an ionic hydrophilic group is preferably further present as a substituent on any one of A₄₁, R₄₁, R₄₂, R₄₅, R₄₆ and G₄.

Examples of the ionic hydrophilic group as a substituent include a, sulfo group, a carboxyl group, a phosphono group and a quaternary ammonium group. Among the ionic hydrophilic groups, preferred are a carboxyl group, a phosphono group and a sulfo group, more preferred are a carboxyl group and a sulfa group. The carboxyl group, the phosphono group and the sulfo group each may be in a salt state and examples of the counter ion for forming the salt include ammonium ion, alkali metal ions (e.g., lithium ion, sodium ion, potassium ion) and organic cations (e.g., tetramethylammonium ion, tetramethylguanidium ion, tetramethylphosphonium). Among these, lithium ion is preferred.

When B₄₁ has a ring structure, preferred examples of the heterocyclic ring include a thiophene ring, a thiazole ring, an imidazole ring, a benzothiazole ring and a thienothiazole ring. Each heterocyclic group may further have a substituent. Among the heterocyclic rings, a thiophene ring, a thiazole ring, an imidazole ring, a benzothiazole ring and a thienothiazole ring represented by the following formulae (a) to (e), respectively, are preferred. When B₄₁ is a thiophene ring represented by formula (a) and C₄₁ is a structure represented by formula (4-C), formula (4) corresponds to formula (4-B). 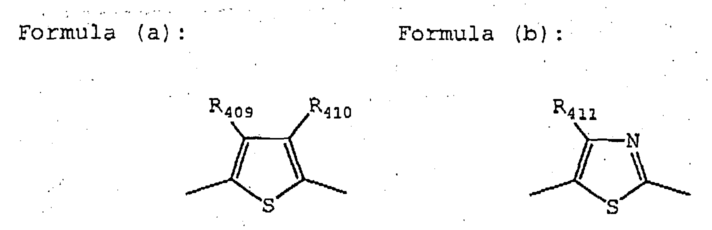 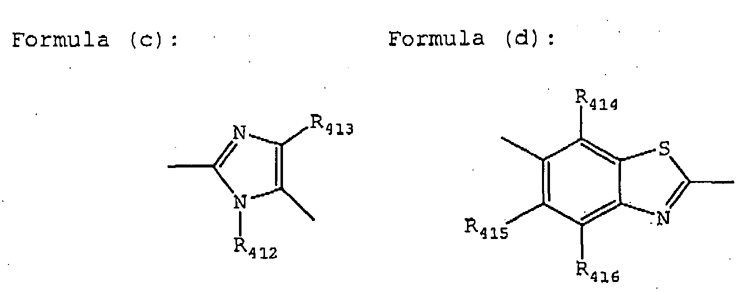 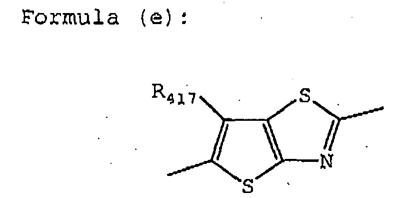 wherein R₄₀₉ to R₄₁₇ each represents a substituent having the same meaning as G₄, R₄₁ and R₄₂ in formula (4-A).

Among the dyes represented by formula (4-B), particularly preferred is a structure represented by the following formula (4-D):

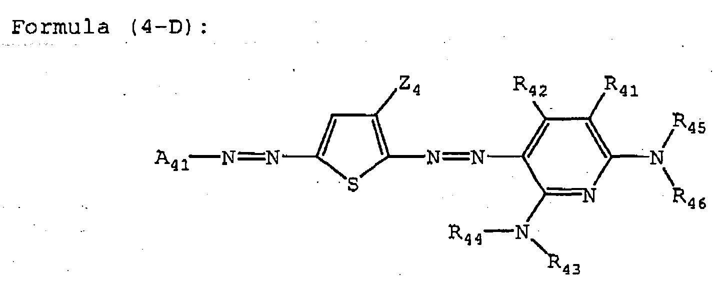

In formula (4-D), Z₄ represents an electron-withdrawing group having a Hammett's substituent constant σp value of 0.20 or more. Z₄ is preferably an electron-withdrawing group having a σp value of 0.30 or more, more preferably 0.45 or more, still more preferably 0.60 to more, but the op value preferably does not exceed 1.0.

Specific examples of the electron-withdrawing group having a Hammett's substituent constant σp value of 0.60 or more include a cyano group, a nitro group, an alkylsulfonyl group (e.g., methanesulfonyl)- and an arylsulfonyl group (e.g., benzenesulfonyl).

Specific examples of the electron-withdrawing group having a Hammett's substituent constant σp value of 0.45 or more include, in addition to those described above, an acyl group (e.g., acetyl), an alkoxycarbonyl group (e.g., dodecyloxycarbonyl), an aryloxycarbonyl group (e.g., m-chlorophenoxycarbonyl), an alkylsulfinyl group (e.g., n-propylsulfinyl), an arylsulfinyl group (e.g., phenylsulfinyl), a sulfamoyl group (e.g., N-ethylsulfamoyl, N,N-dimethylsulfamoyl) and a halogenated alkyl group (e.g., trifluoromethyl).

Specific examples of the electron-withdrawing group having a Hammett's substituent constant σp value of 0.30 or more include, in addition to those described above, an acyloxy group (e.g., acetoxy), a carbamoyl group (e.g., N-ethylcarbamoyl, N,N-dibutylcarbamoyl), a halogenated alkoxy group (e.g., trifluoromethyloxy), a halogenated aryloxy group (e.g., pentafluorophenyloxy), a sulfonyloxy group (e.g., methylsulfonyloxy), a halogenated alkylthio group (e.g., difluoromethylthio), an aryl group substituted by two or more electron-withdrawing groups having a Hammett's substituent constant σp value of 0.15 or more (e.g., 2,4-dinitrophenyl, pentachlorophenyl) and a heterocyclic ring (e.g., 2-benzoxazolyl, 2-benzothiazolyl, 1-phenyl-2-benzimidazolyl).

Specific examples of the electron-withdrawing group having a Hammett's substituent constant σp value of 0.20 or more include, in addition to those described above, a halogen atom.

Among these, Z₄ is preferably an acyl group having from 2 to 20 carbon atoms, an alkyloxycarbonyl group having from 2 to 20 carbon atoms, a nitro group, a cyano group, an alkylsulfonyl group having from 1 to 20 carbon atoms, an arylsulfonyl group having from 6 to 20 carbon atoms, a carbamoyl group having from 1 to 20 carbon atoms or a halogenated alkyl group having from 1 to 20 carbon atoms, more preferably a cyano group, an alkylsulfonyl group having from 1 to 20 carbon atoms and an arylsulfonyl group having from 6 to 20 carbon atoms, and most preferably a cyano group.

R₄₁, R₄₂, R₄₅ and R₄₆ in formula (4-D) have the same meanings as in formula (4-A). R₄₃ and R₄₄ each independently represents a hydrogen atom, an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group, preferably a hydrogen atom, an aromatic group, a heterocyclic group, an acyl group, an alkylsulfonyl group or an arylsulfonyl group, more preferably a hydrogen atom, an aromatic group or a heterocyclic group.

The groups described in regard to formula (4-D) each may further have a substituent. When the groups each further has a substituent, examples of the substituent include the substituents described in regard to formula (4-A), the groups described as examples for G₄, R₄₁ and R₄₂, and ionic hydrophilic groups.

The preferred combination of substituents in the azo dye represented by formula (4-B) is described below. R₄₅ and R₄₆ each is preferably a hydrogen atom, an alkyl group, an aryl group, a heterocyclic group, a sulfonyl group or an acyl group, more preferably a hydrogen atom, an aryl group, a heterocyclic group or a sulfonyl group, and most preferably a hydrogen atom, an aryl group or a heterocyclic group. However, R₄₅ and R₄₆ are not hydrogen atoms at the same time.

G₄ is preferably a hydrogen atom, a halogen atom, an alkyl group, a hydroxyl group, an amino group or an acylamino group, more preferably a hydrogen atom, a halogen atom, an amino group or an acylamino group, and most preferably a hydrogen atom, an amino group or an acylamino group.

A₄₁ is preferably a pyrazole ring, an imidazole ring, an isothiazole ring, a thiadiazole ring or a benzothiazole ring, more preferably a pyrazole ring or an isothiazole ring, and most preferably a pyrazole ring.

B₄₂ and B₄₃ each is =CR₄₁- or -CR₄₂=, and R₄₁ and R₄₂ each is preferably a hydrogen atom, an alkyl group, a halogen atom, a cyano group, a carbamoyl group, a carboxyl group, a hydroxyl group, an alkoxy group or an alkoxycarbonyl group, more preferably a hydrogen atom, an alkyl group, a carboxyl group, a cyano group or a carbamoyl group.

As for the preferred combination of substituents in the azo dye, a compound where at least one of various substituents is the above-described preferred group is preferred, a compound where a larger number of various substituents are the above-described preferred groups is more preferred, and a compound where all substituents are the above-described preferred groups is most preferred.

Specific examples of the azo dye represented by formula (4) are set forth below. The dyes of specific examples, which exhibit the above-described property regarding the dye concentration dependency of the molar extinction coefficient, are preferably used in the invention. However, the invention is not limited to those set forth below. In these specific examples, the carboxyl group, the phosphono group and the sulfo group each may be in a salt state and examples of the counter ion for forming the salt include ammonium ion, alkali metal ions (e.g., lithium ion, sodium ion or potassium ion) and organic cations (e.g., tetramethylammonium ion, tetramethylguanidium ion or tetramethylphosphoniuxn). Among these, lithium ion is preferred.

A―N=N―B―N=N―C

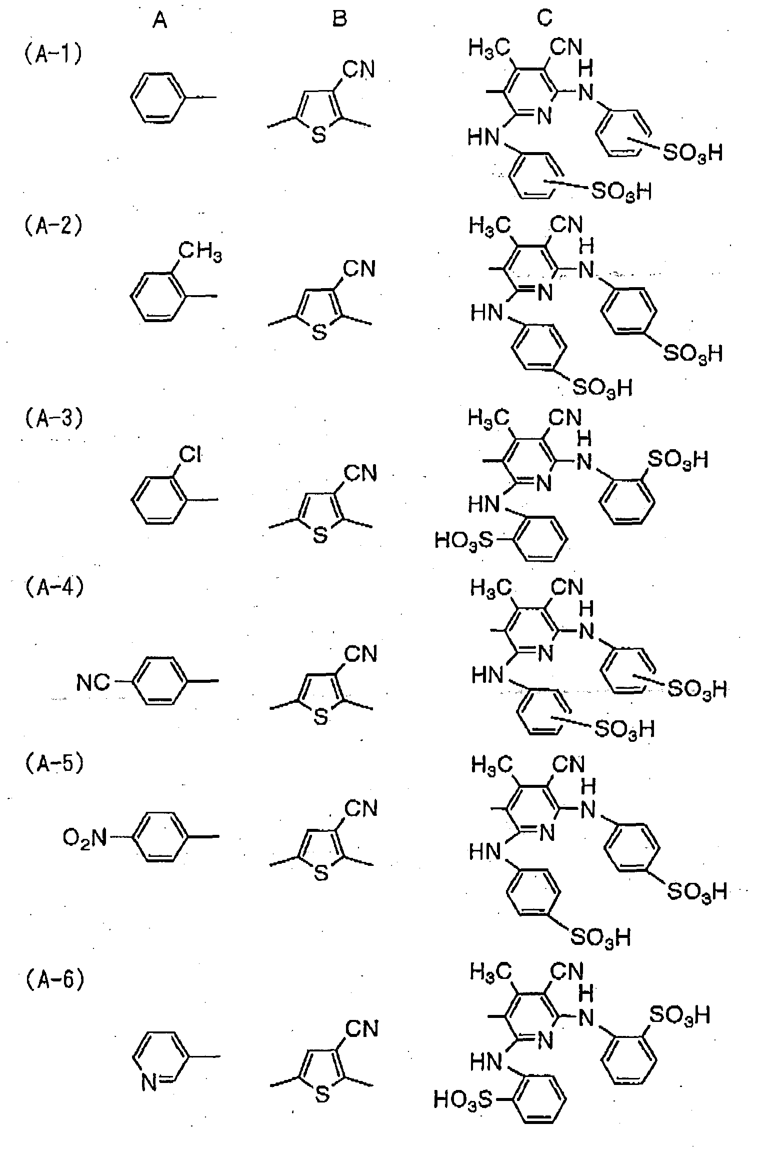

A―N=N―B―N=N―C

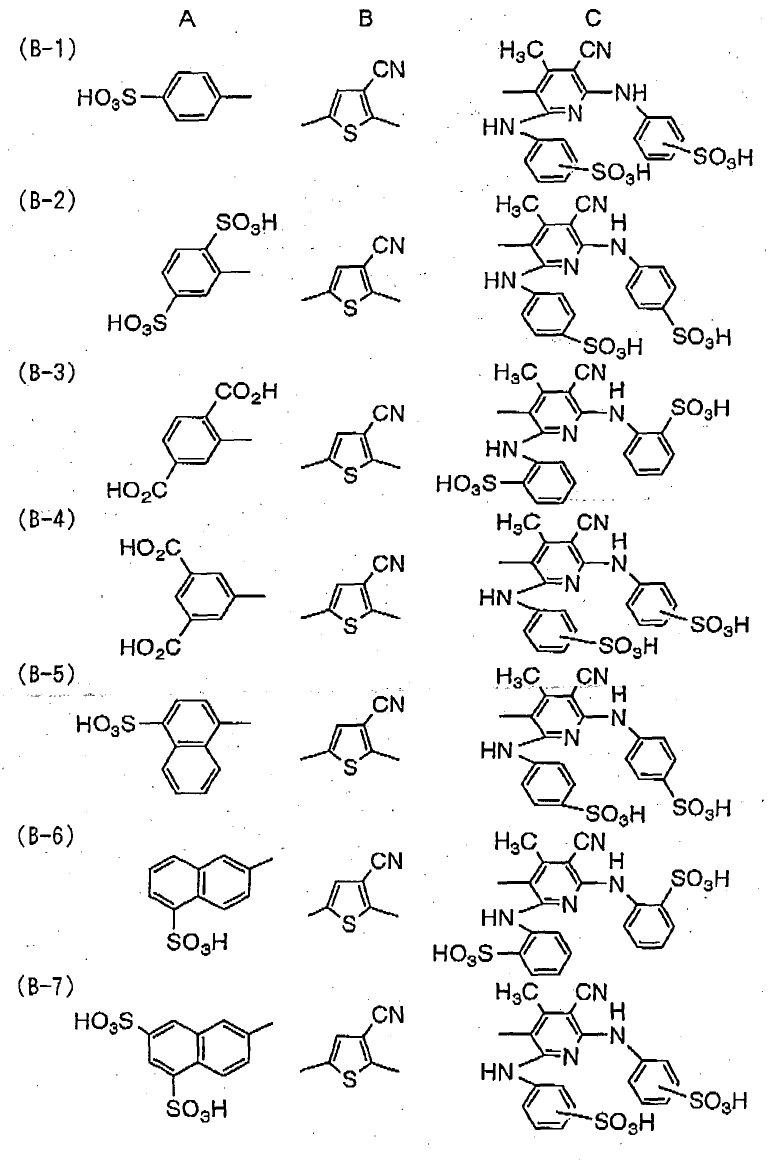

A―N=N―B―N=N―C

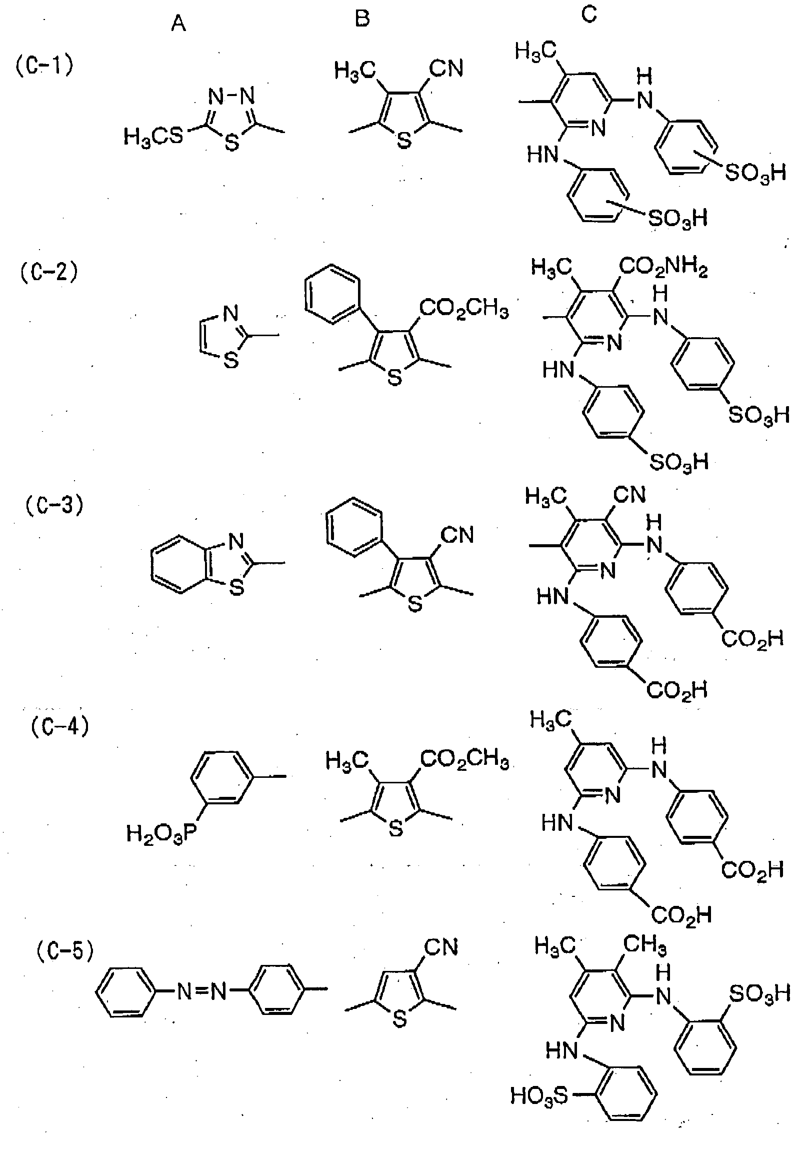

A―N=N―B―N=N―C

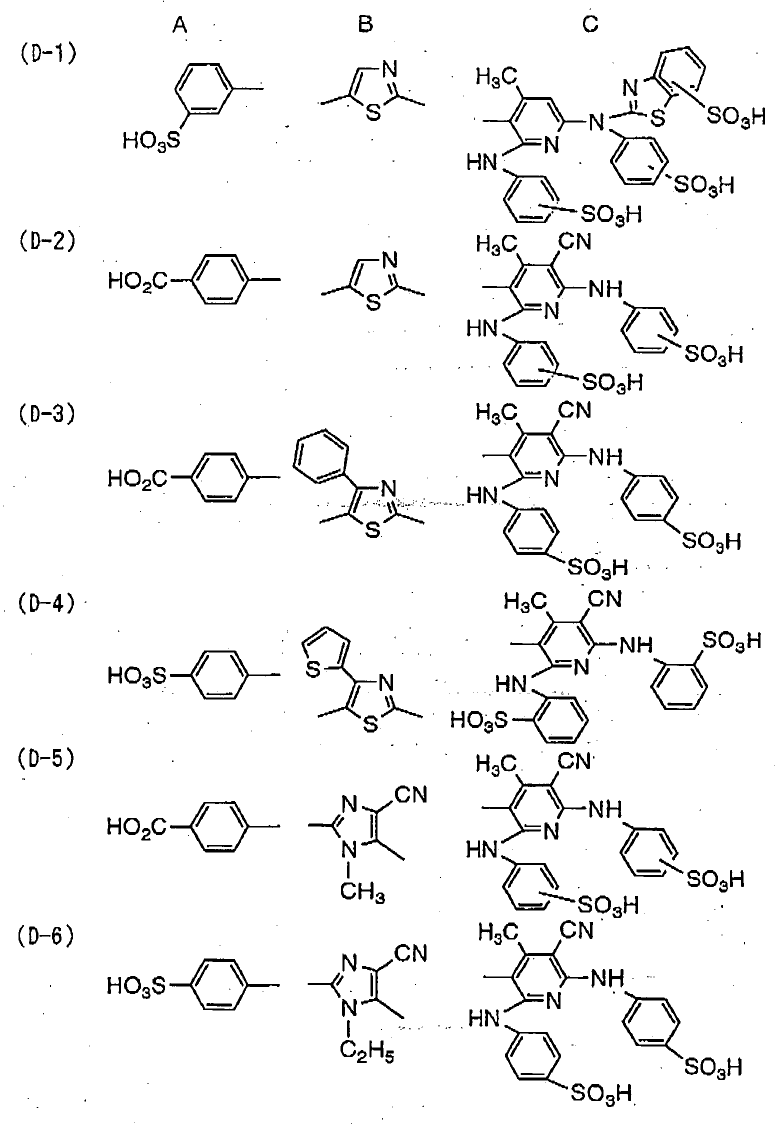

A―N=N―B―N=N―C

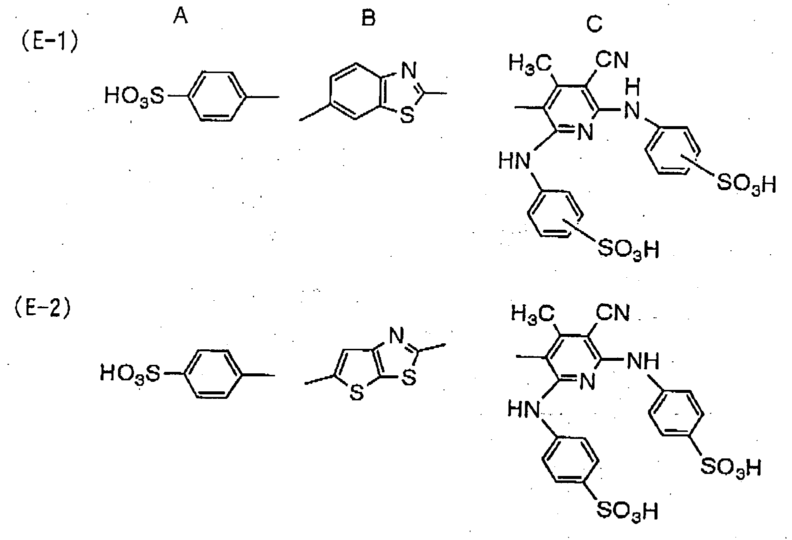

A―N=N―B―N=N―C

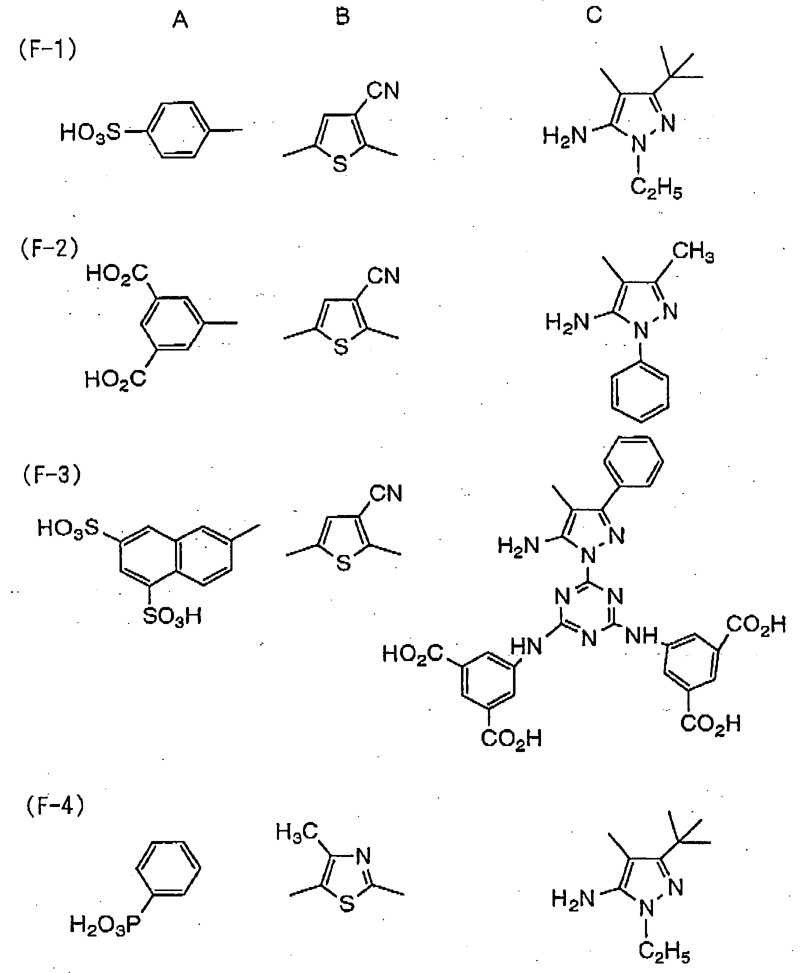

The azo dyes represented by formulae (4), (4-A), (4-B) and (4-D) can be synthesized by a coupling reaction of a diazo component and a coupler. As the main synthesis method, the method described in JP-A-2003-306623 can be used.

For the dye (S) having λmax in the region from 350 to 500 nm, the above-described yellow dye or a pigment can be preferably used.

'The content of each dye represented by any one of formulae (1) to (4) is preferably from 0.2 to 20 wt%, more preferably from 0.5 to 15 wt%, in the ink.

In particular, the present invention is also characterized in that the dyes contained in the ink are those having a solubility of 15 g or more in 100 g of water at 25°C under atmospheric pressure.

The definition of the solubility used herein is the same as the concept used in normal chemical experiments and the solubility is a numerical value showing how much at a maximum the dye as a solute can be dissolved in 100 g of water as a solvent at 25°C under atmospheric pressure.

The solubility can be measured, for example, by adding an excess amount (for example, 60 g) of dye to 100g of water at 25°C, allowing the mixture to stand in a constant-temperature bath at 25°C for 24 hours, removing the undissolved solute through filtration, and analyzing how much the solute is dissolved in the resulting solution.

### [Preparation of Ink]

In the ink of the present invention, other dyes may be used in combination with the above-described dyes so as to obtain a full color image or adjust the color tone. Examples of the dye which can be used in combination include the followings.

Examples of the dye include, as the yellow dye, aryl- or heteryl-azo dyes having a phenol, a naphthol, an aniline, a pyrazolone, a pyridone or an open chain active methylene compound as the coupling component; azomethine dyes having an open chain active methylene compound as the coupling component; methine dyes such as benzylidene dye and monomethine oxonol dye; and quinone-base dyes such as naphthoquinone dye and anthraquinone dye. Other examples of the dye species include quinophthalone dye, nitro·nitroso dye, acridine dye and acridinone dye. The dyes may be a dye which provides a yellow color for the first time when a part of the chromophore is dissociated. In such a case, the counter cation may be an inorganic cation such as alkali metal and ammonium, an organic cation such as pyridinium and quaternary ammonium salt, or a polymer cation having such a cation in a partial structure.

Examples of the dye include, as the magenta dye, aryl- or heteryl-azo dyes having a phenol, a naphthol or an aniline as the coupling component; azomethine dyes having a pyrazolone or a pyrazolotriazole as the coupling component; methine dyes such as arylidene dye, styryl dye, merocyanine dye and oxonol dye; carbonium dyes such as diphenylmethane dye, triphenylmethane dye and xanthene dye; quinone-base dyes such as naphthoquinone, anthraquinone and anthrapyridone; and condensed polycyclic dyes such as dioxazine dye. The dyes may be a dye which provides a magenta color for the first time when a part of the chromophore is dissociated. In such a case, the counter cation may be an inorganic cation such as alkali metal and ammonium, an organic cation such as pyridinium and quaternary ammonium salt, or a polymer cation having such a cation in a partial structure.

Examples of the dye include, as the cyan dye, azomethine dyes such as indoaniline dye and indophenol dye; polymethine dyes such as cyanine dye, oxonol dye and merocyanine dye; carbonium dyes such as diphenylmethane dye, triphenylmethane dye and xanthene dye; phthalocyanine dyes; anthraquinone dyes; aryl- or heteryl-azo dyes having a phenol, a naphthol or an aniline as the coupling component; and indigo·thioindigo dyes. The dyes may be a dye which provides a cyan color for the first time when a part of the chromophore is dissociated. In such a case, the counter cation may be an inorganic cation such as alkali metal and ammonium, an organic cation such as pyridinium and quaternary ammonium salt, or a polymer cation having such a cation in a partial structure.

In addition, a black dye such as polyazo dye may also be used.

Also, a water-soluble dye, for example, direct dye, acid dye, food dye, basic dye and reactive dye may be used in combination. Preferred examples thereof include the following dyes: C.I. Direct Red 2, 4, 9, 23, 26, 31, 39, 62, 63, 72, 75, 76, 79, 80, 81, 83, 84, 89, 92, 95, 111, 173, 184, 207, 211, 212, 214, 218, 21, 223, 224, 225, 226, 227, 232, 233, 240, 241, 242, 243 and 247; C.I. Direct Violet 7, 9, 47, 48, 51, 66, 90, 93, 94, 95, 98, 100 and 101; C.I. Direct Yellow 8, 9, 11, 12, 27, 28, 29, 33, 35, 39, 41, 44, 50, 53, 58, 59, 68, 86, 87, 93, 95, 96, 98, 100, 106, 108, 109, 110, 130, 132, 142, 144, 161 and 163; G.I. Direct Blue 1, 10, 15, 22, 25, 55, 67, 68, 71, 76, 77, 78, 80, 84, 86, 87, 90, 98, 106, 108, 109, 151, 156, 158, 159, 160, 168, 189, 192, 193, 194, 199, 200, 201, 202, 203, 207, 211, 213, 214, 218, 225, 229, 236, 237, 244, 248, 249, 251, 252, 264, 270, 280, 288, 289 and 291; C.I. Direct Black 9, 17, 19, 22, 32, 51, 56, 62, 69, 77, 80, 91, 94, 97, 108, 112, 113, 114, 117, 118, 121, 122, 125, 132, 146, 154, 166, 168, 173 and 199; C.I. Acid Red 35, 42, 52, 57, 62, 80, 82, 111, 114, 118, 119, 127, 128, 131, 143, 151, 154, 158, 249, 254, 257, 261, 263, 266, 289, 299, 301, 305, 336, 337., 361, 396 and 397; C.I. Acid Violet 5, 34, 43, 47, 48, 90, 103 and 126; C.I. Acid Yellow 17, 19, 23, 25, 39, 40, 42, 44, 49, 50, 61, 64, 76, 79, 110, 127, 135, 143, 151, 159, 169, 174, 190, 195, 196, 197, 199, 218, 219, 222 and 227; C.I. Acid Blue 9, 25, 40, 41, 62, 72, 76, 78, 80, 82, 92, 106, 112, 113, 120, 127:1, 129, 138, 143, 175, 181, 205, 207, 220, 221, 230, 232, 247, 258, 260, 264, 271, 277, 278, 279, 280, 288, 290 and 326; C.I. Acid Black 7, 24, 29, 48, 52:1 and 172; C.I. Reactive Red 3, 13, 17, 19, 21, 22, 23, 24, 29, 35, 37, 40, 41, 43, 45, 49 and 55; C.I. Reactive Violet 1, 3, 4, 5, 6, 7, 8, 9, 16, 17, 22, 23, 24, 26, 27, 33 and 34; C.I. Reactive Yellow 2, 3, 13, 14, 15, 17, 18, 23, 24, 25, 26, 27, 29, 35, 37, 41 and 42; C.I. Reactive Blue 2, 3, 5, 8, 10, 13, 14, 15, 17, 18, 19, 21, 25, 26, 27, 28, 29 and 38; C.I. Reactive Black 4, 5, 8, 14, 21, 23, 26, 31, 32 and 34; C.I. Basic Red 12, 13, 14, 15, 18, 22, 23, 24, 25, 27, 29, 35, 36, 38, 39, 45 and 46; C.I. Basic violet 1, 2, 3, 7, 10, 15, 16, 20, 21, 25, 27, 28, 35, 37, 39, 40 and 48; C.I. Basic Yellow 1, 2, 4, 11, 13, 14, 15, 19, 21, 23, 24, 25, 28, 29, 32, 36, 39 and 40; C.I. Basic Blue 1, 3, 5, 7, 9, 22, 26, 41, 45, 46, 47, 54, 57, 60, 62, 65, 66, 69 and 71; and C.I. Basic Black 8.

A pigment may be also used in combination.

As the pigment which can be used in the ink of the present invention, commercially available pigments and known pigments described in various publications can be used. Examples of the publication include Colour Index, compiled by The Society of Dyers and Colourists, Kaitei Shin Han Ganryo Binran (Revised New Handbook of Pigments), compiled by Nippon Ganryo Gijutsu Kyokai (1989), Saishin Ganryo Oyo Gijutsu (Newest Pigment Application Technology), CMC Shuppan (1986), Insatsu Ink Gijutsu (Printing Ink Technique), CMC Shuppan (1984), and W. Herbst and K. Hunger, Industrial Organic Pigments, VCH Verlagsgesellschaft (1993). Specific examples of the pigment includes organic pigments such as azo pigments (e.g., azo lake pigment, insoluble azo pigment, condensed azo pigment, chelate azo pigment), polycyclic pigments (e.g., phthalocyanine-base pigment, anthraquinone-base pigment, perylene-base or perynone-base pigment, indigo-base pigment, quinacridone-base pigment, dioxazine-base pigment, isoindolinone-base pigment, quinophthalone-base pigment, diketopyrrolopyrrole-base pigment), dyeing lake pigments (lake pigments of acid or basic dye) and azine pigments, and inorganic pigments such as C.I. Pigment Yellow 34, 37, 42 and 53 which are a yellow pigment, C.I. Pigment Red 101 and 108 which are a red-type pigment, C.I. Pigment Blue 27, 29 and 17:1 which are a blue-type pigment, C.I. Pigment Black 7 and magnetite which are a black-type pigment, and C.I. Pigment White 4, 6, 18 and 21 which are a white-type pigment.

The pigment having a color tone preferred for the formation of an image includes the followings. As the blue to cyan pigment, phthalocyanine pigments, anthraquinone-type indanthrone pigments (for example, C.I. Pigment Blue 60) and dyeing lake pigment-type triarylcarbonium pigments are preferred, and phthalocyanine pigments are most preferred (preferred examples thereof include copper phthalocyanine such as C.I. Pigment Blue 15:1, 15:2, 15:3, 15:4 and 15:6, monochloro or low chlorinated copper phthalocyanine, aluminum phthalocyanine such as pigments described in European Patent 860475, nonmetallic phthalocyanine such as C.I. Pigment Blue 16, and phthalocyanine with the center metal being Zn, Ni or Ti, and among these, C.I. Pigment Blue 15:3 and 15:4 and aluminum phthalocyanine are more preferred).

As the red to violet pigment, azo pigments (preferred examples thereof include C.I. Pigment Red 3, 5, 11, 22, 38, 48:1, 48:2, 48:3, 48:4, 49:1, 52:1, 53:1, 57:1, 63:2, 144, 146 and 184, and among these, C.I. Pigment Red 57:1, 146 and 184 are more preferred), quinacridone-base pigments (preferred examples thereof include C.I. Pigment Red 122, 192, 202, 207 and 209 and C.I. Pigment Violet 19 and 42, and among these, C.I. Pigment Red 122 is more preferred), dyeing lake pigment-type triarylcarbonium pigments (preferred examples thereof include xanthene-base C.I. Pigment Red 81:1 and C.I. Pigment Violet 1, 2, 3, 27 and 39), dioxazine-base pigments (for example, C.I. Pigment Violet 23 and 37), diketopyrrolopyrrole-base pigments (for example, C.I. Pigment Red 254), perylene pigments (for example, C.I. Pigment Violet 29), anthraquinone-base pigments (for example., C.I. Pigment Violet 5:1, 31 and 33) and thioindigo-base pigments (for example, C.I. Pigment Red 38 and 88) are preferred.

As the yellow pigment, azo pigments (preferred examples thereof include monoazo pigment-type C.I. Pigment Yellow 1, 3, 74 and 98, disazo pigment-type C.I. Pigment Yellow 12, 13, 14, 16, 17 and 83, synthetic azo-base C.I. Pigment Yellow 93, 94, 95, 128 and 155, and benzimidazolone-base C.I. Pigment Yellow 120, 151, 154, 156 and 180, and among these, those not using a benzidine-base compound as a raw material are more preferred), isoindoline·isoindolinone-base pigments (preferred examples thereof include C.I. Pigment Yellow 109, 110, 137 and 139), quinophthalone pigments (preferred examples thereof include C.I. Pigment Yellow 138) and flavanthrone pigments (for example, C.I. Pigment Yellow 24) are preferred.

As the black pigment, inorganic pigments (preferred examples thereof include carbon black and magnetite) and aniline black are preferred.

Further, an orange pigment (for example, C.I. Pigment Orange 13 and 16) and a green pigment (for example, C.I. Pigment Green 7) may be used.

The pigment which can be used in the present invention may be the above-described pigment which is not subjected to any treatment or is subjected to a surface treatment. For the surface treatment, a method of coating the surface with resin or wax, a method of attaching a surfactant, and a method of binding a reactive substance (for example, a radical generated from a silane coupling agent, an epoxy compound, polyisocyanate or a diazonium salt) to the pigment surface may be used and these are described in the following publications and patents:
(1) Kinzoku Sekken no Seishitsu to Oyo (Properties and Applications of Metal Soap), Saiwai Shobo Co., Ltd.;
(2) Insatsu Ink Insatsu (Printing Ink Printing), CMC Publishing Co., Ltd. (1984);
(3) Saishin Ganryo Oyo Gijutsu (Newest Pigment Application Technology), CMC Publishing Co., Ltd. (1986);
(4) U.S. Patents 5,554,739 and 5,571,311; and
(5) JP-A-9-151342, JP-A-10-140065, JP-A-10-292143 and JP-A-11-166145.

Particularly, self-dispersible pigments prepared by allowing a diazonium salt to act on carbon black described in U.S. Patents of (4) and capsulated pigments prepared by the method described in JP-As of (5) are effective, because dispersion stability can be obtained without using an excess dispersant in the ink.

In the ink of the present invention, the pigment may be dispersed by further using a dispersant. Various known dispersants can be used according to the pigment used, for example, a surfactant-type low molecular dispersant or a polymer-type dispersant can be used. Examples of the dispersant include those described in JP-A-3-69949 and European Patent 549486. In case of using the dispersant, a pigment derivative called synergist may also be added so as to accelerate the adsorption of dispersant to the pigment.

The particle size of the pigment which can be used in the ink of the present invention is, after the dispersion, preferably from 0.01 to 10 µm, more preferably from 0.05 to 1 µm.

As for the method of dispersing the pigment, known dispersion techniques used for the production of ink or toner can be used. Examples of the dispersing machine include vertical or horizontal agitator mill, attritor, colloid mill, ball mill, three-roll mill, pearl mill, super-mill, impeller, disperser, KD mill, dynatron and pressure kneader. These are described in detail in Saishin Ganryo Oyo Gijutsu (Newest Pigment Application Technology), CMC Publishing Co., Ltd. (1986).

The surfactant which can be contained in the inkjet ink of the present invention is described below.

In the present invention, a surfactant may be incorporated into the inkjet ink to control the liquid properties of ink, whereby excellent effects can be provided, for example, enhancement of ejection stability of the ink, improvement of water resistance of the image and prevention of bleeding of the printed ink.

Examples of the surfactant include anionic surfactants such as sodium dodecylsulfate, sodium dodecyloxysulfonate and sodium alkylbenzenesulfonate, cationic surfactants such as cetylpyridinium chloride, trimethylcetylammonium chloride and tetrabutylammonium chloride, and nonionic surfactants such as polyoxyethylene nonylphenyl ether, polyoxyethylene naphthyl ether and polyoxyethylene octylphenyl ether. Among these, nonionic surfactants are preferred.

The surfactant content is from 0.001 to 20 wt%, preferably from 0.005 to 10 wt%, more preferably from 0.01 to 5 mass%, based on the ink.

The inkjet ink of the invention can be prepared by dissolving or dispersing the above-described dye and preferably the surfactant in an aqueous medium. The term "aqueous medium" as used in the present invention means water or a mixture of water and a slight amount of water-miscible organic solvent, where an additive such as a wetting agent, stabilizer or antiseptic is added, if desired.

In the preparation of the ink solution of the invention, in the case of a water-soluble ink, the dye is preferably first dissolved in water and thereafter, various solvents and additives are added, dissolved and mixed to provide a uniform ink solution.

For dissolving the dye and the like, various methods, for example, stirring, ultrasonic irradiation and shaking can be used. Among these, stirring is preferred. In performing the stirring, various systems known in the field of art can be used, for example, flow stirring and stirring utilizing a shearing force by means of a reversal agitator or a dissolver. Also, a stirring method utilizing a shearing force with the bottom surface of a container, for example, magnetic stirrer, can be advantageously used.

Examples of the water-miscible organic solvent which can be used in the present invention include alcohols (e.g., methanol, ethanol, propanol, isopropanol, butanol, isobutanol, sec-butanol, tert-butanol, pentanol, hexanol, cyclohexanol, benzyl alcohol), polyhydric alcohols (e.g., ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol), glycol derivatives (e.g., ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, ethylene glycol monophenyl ether), amines (e.g., ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, tetramethylpropylenediamine) and other polar solvents (e.g., formamide, N,N-dimethylformamide, N,N-dimethylacetamide, dimethylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, acetone). The water-miscible organic solvents can be used in combination of two or more thereof.

In the case where the above-described dye is an oil-soluble dye, the ink solution can be prepared by dissolving the oil-soluble dye in a high boiling point organic solvent and emulsion-dispersing it in an aqueous medium.

The high boiling point organic solvent for use in the present invention has a boiling point of 150°C or more, preferably 170°C or more.

Examples thereof include phthalic acid esters (e.g., dibutyl phthalate, dioctyl phthalate, dicyclohexyl phthalate, di-2-ethylhexyl phthalate, decyl phthalate, bis(2,4-di-tert-amylphenyl) isophthalate, bis (1,1-diethylpropyl) phthalate), esters of phosphoric acid or phosphone (e.g., diphenyl phosphate, triphenyl phosphate, tricresyl phosphate, 2-ethylhexyldiphenyl phosphate, dioctylbutyl phosphate, tricyclohexyl phosphate, tri-2-ethylhexyl phosphate, tridodecyl phosphate, di-2-ethylhexylphenyl phosphate), benzoic acid esters (e.g., 2-ethylhexyl benzoate, 2,4-dichlorobenzoate, dodecyl benzoate, 2-ethylhexyl-p-hydroxybenzoate), amides (e.g., N,N-diethyldodecanamide, N,N-diethyllaurylamide), alcohols -or phenols (e.g., isostearyl alcohol, 2,4-di-tert-amylphenol), aliphatic esters (e.g., dibutoxyethyl succinate, di-2-ethylhexyl succinate, 2-hexyldecyl tetradecanoate, tributyl citrate, diethyl azelate, isostearyl lactate, trioctyl citrate), aniline derivatives (e.g., N,N-dibutyl-2-butoxy-5-tert-octylaniline), chlorinated paraffins (e.g., paraffins having a chlorine content of 10 to 80%), trimesic acid esters (e.g., tributyl trimesate), dodecylbenzene, diisopropylnaphthalene, phenols (e.g., 2,4-di-tert-amylphenol, 4-dodecyloxyphenol, 4-dodecyloxycarbonylphenol, 4-(4-dodecyloxyphenylsulfonyl)phenol), carboxylic acids (e.g., 2-(2,4-di-tert-amylphenoxy)butyric acid, 2-ethoxyoctanedecanoic acid) and alkylphosphoric acids (e.g., di-(2-ethylhexyl)phosphoric acid, diphenylphosphoric acid).

The high boiling point organic solvents may be used individually or as a mixture of several kinds thereof (for example, tricresyl phosphate and dibutyl phthalate, trioctyl phosphate and di(2-ethylhexyl) sebacate, or dibutyl phthalate and poly(N-tert-butylacrylamide)).

Examples of the high boiling point organic solvent for use in the present invention, other than the above-described compounds, and/or the synthesis method of the high boiling point organic solvents are described, for example, in U.S. Patents 2,322,027, 2,533,514, 2,772,163, 2,835,579, 3,594,171, 3,676,137, 3,689,271, 3,700,454, 3,748,141, 3,764,336, 3,765,897, 3,912,515, 3,936,303, 4,004,928, 4,080,209, 4,127,413, 4,193,802, 4,207,393, 4,220,711, 4,239,851, 4,278,757, 4,353,979, 4,363,873, 4,430,421, 4,430,422, 4,464,464, 4,483,918, 4,540,657, 4,684,606, 4,728,599, 4,745,049, 4,935,321 and 5,013,639, EP-A-276319, EP-A-286253, EP-A-289820, EP-A-309158, EP-A-309159, EP-A-309160, EP-A-509311, EP-A-510576, East German Patents 147,009, 157,147, 159,573 and 225,240A, British Patent 2091124A, JP-A-48-47335, JP-A-50-26530, JP-A-51-25133, JP-A-51-26036, JP-A-51-27921, JP-A-51-27922, JP-A-51-149028, JP-A-52-46816, JP-A-53-1520, JP-A-53-1521, JP-A-53-15127, JP-A-53-146622, JP-A-54-91325, JP-A-54-106228, JP-A-54-118246, JP-A-55-59464, JP-A-56-64333, JP-A-56-81836, JP-A-59-204041, JP-A-61-84641, JP-A-62-118345, JP-A-62-247364, JP-A-63-167357, JP-A-63-214744, JP-A-63-301941, JP-A-64-9452, JP-A-64-9454, JP-A-64-68745, JP-A-1-101543, JP-A-1-102454, JP-A-2-792, JP-A-2-4239, JP-A-2-43541, JP-A-4-29237, JP-A-4-30165, JP-A-4-232946 and JP-A-4-346338.

The high boiling point organic solvent is used in an amount of from 0.01 to 3.0 times, preferably from 0.01 to 1.0 time, in terms of the weight ratio to the oil-soluble dye.

In the present invention, the oil-soluble dye or high boiling point organic solvent is used by emulsion-dispersing it in an aqueous medium. Depending on the case, a low boiling point organic solvent may also be used at the emulsion-dispersion in view of emulsifiability. The low boiling point organic solvent is an organic solvent having a boiling point of about 30 to 150°C at atmospheric pressure. Preferred examples thereof include esters (e.g., ethyl acetate, butyl acetate, ethyl propionate, β-ethoxyethyl acetate, methylcellosolve acetate), alcohols (e.g., isopropyl alcohol, n-butyl alcohol, secondary butyl alcohol), ketones (e.g., methyl isobutyl ketone, methyl ethyl ketone, cyclohexanone), amides (e.g., dimethylformamide, N-methylpyrrolidone) and ethers (e.g., tetrahydrofuran, dioxane), however, the present invention is not limited thereto.

In the emulsion-dispersion, an oil phase obtained by dissolving the dye in a high boiling organic solvent or depending on the case, in a mixed solvent of a high boiling organic solvent and a low boiling organic solvent is dispersed in an aqueous phase mainly comprising water to form fine oil droplets of the oil phase. At this time, in either one or both of the aqueous phase and the oil phase, an additive described later, for example, surfactant, wetting agent, dye stabilizer, emulsification stabilizer, antiseptic or fungicide, can be added, if desired.

In a conventional emulsification method, an oil phase is added to an aqueous phase, however, a so-called phase inversion emulsification method of adding dropwise an aqueous phase in an oil phase can also be preferably used. The above-described emulsification method can be applied also when the dye used in the present invention is water-soluble and the additive is oil-soluble.

In performing the emulsion-dispersion, various surfactants can be used. Preferred examples thereof include anionic surfactants such as fatty acid salt, alkylsulfuric ester salt, alkylbenzenesulfonate, alkylnaphthalenesulfonate, dialkylsulfosuccinate, alkylphosphoric ester salt, naphthalenesulfonic acid formalin condensate and polyoxyethylene alkylsulfuric ester salt, and nonionic surfactants such as polyoxyethylene alkyl ether, polyoxyethylene alkylaryl ether, polyoxyethylene fatty acid ester, sorbitan fatty acid ester, polyoxyethylene sorbitan fatty acid ester, polyoxyethylene alkylamine, glycerin fatty acid ester and oxyethylene oxypropylene block copolymer. Also, SURFYNOLS (produced by Air Products & Chemicals), which are an acetylene-base polyoxyethylene oxide surfactant, are preferably used. Furthermore, amine oxide-type amphoteric surfactants such as N,N-dimethyl-N-alkylamine oxide are preferred. In addition, surfactants described in JP-A-59-157636 (pages (37) to (38)) and Research Disclosure, No. 308119 (1989) can also be used.

For the purpose of stabilizing the dispersion immediately after the emulsification, a water-soluble polymer may be added in combination with the surfactant. Preferred examples of the water-soluble polymer include polyvinyl alcohol, polyvinylpyrrolidone, polyethylene oxide, polyacrylic acid, polyacrylamide and copolymers thereof. Also, natural water-soluble polymers such as polysaccharides, casein and gelatin are also preferably used. Furthermore, for the stabilization of the dye dispersion, a polymer which does not substantially dissolve in an aqueous medium, such as vinyl polymer, polyurethane, polyester, polyamide, polyurea and polycarbonate obtained by the polymerization of acrylic acid esters, methacrylic acid esters, vinyl esters, acrylamides, methacrylamides, olefins, styrenes, vinyl ethers or acrylonitriles, can also be used in combination. The polymer preferably contains -SO₃⁻ or -COO⁻. In the case of using such a polymer which does not substantially dissolve in an aqueous medium, the polymer is preferably used in an amount of 20 wt% or less, more preferably 10 wt% or less, based on the high boiling point organic solvent used.

In preparing an aqueous ink composition by dispersing the oil-soluble dye and high boiling point organic solvent according to emulsion-dispersion, control of the particle size is particularly important. In order to increase the color purity or density of an image formed by the inkjet recording, it is essential to reduce the average particle size. The average particle size is preferably 1 µm or less, more preferably from 5 to 100 nm, in terms of the volume average particle size.

The volume average particle size and particle size distribution of the dispersed particles can be easily measured by a known method such as static light scattering method, dynamic light scattering method, centrifugal precipitation method and the method described in Jikken Kagaku Koza (Lecture of Experimental Chemistry), 4th ed., pp. 417-418. For example, the ink is diluted with distilled water to have a particle concentration of 0.1 to 1 wt%, then, the particle size can be easily measured by a commercially available volume average particle size measuring apparatus (for example, Microtrac UPA, manufactured by Nikkiso K.K.). The dynamic light scattering method utilizing the laser Doppler effect is particularly preferred because even a small particle size can be measured.

The volume average particle size is an average particle size weighted with the particle volume and it is obtained by multiplying the diameter of individual particles with the volume of the particle and dividing the sum total of-the obtained values by the total volume of the particles in the gathering of particles. The volume average particle size is described in Soichi Muroi, Kobunshi Latex no Kagaku (Chemistry of Polymer Latex), page 119, Kobunshikankokai Co., Ltd.

Also, it is revealed that the presence of coarse particles greatly affects the printing performance. More specifically, the coarse particle clogs the nozzle of head or even if the nozzle is not clogged, forms a soil to bring about failure or twist in the ejection of ink, whereby the printing performance is seriously affected. In order to prevent such troubles, it is important to reduce the number of particles having a particle size of 5 µm or more to 10 or less and the number of particles having a particle size of 1 µm or more to 1,000 or less, in 1 µl of ink prepared.

For removing the coarse particles, a known method such as centrifugal separation or microfiltration can be used. The separation step may be performed immediately after the emulsion-dispersion or may be performed immediately before filling the ink in an ink cartridge after various additives such as wetting agent and surfactant are added to the emulsified dispersion.

A mechanically emulsifying apparatus is effective for reducing the average particle size and eliminating coarse particles.

As for the emulsifying apparatus, known apparatuses such as simple stirrer, impeller stirring system, in-line stirring system, mill system (e.g., colloid mill) and ultrasonic system can be used, however, a high-pressure homogenizer is particularly preferably used.

The mechanism of the high-pressure homogenizer is described in detail in U.S. Patent 4,533,254 and JP-A-6-47264. Examples of the commercially available apparatus include Gaulin Homogenizer (manufactured by A.P. V Gaulin Inc.), Microfluidizer (manufactured by Microfluidex Inc.) and Altimizer (produced by Sugino Machine Ltd.).

The high-pressure homogenizer with a mechanism of pulverizing particles in an ultrahigh pressure jet stream recently described in U.S. Patent 5,720,551 is particularly effective for the emulsion-dispersion of the present invention. Examples of the emulsifying apparatus using such an ultrahigh pressure jet stream include DeBEE2000 (manufactured by BEE International Ltd.).

In performing the emulsification by a high-pressure emulsion-dispersing apparatus, the pressure is 50 MPa or more, preferably 60 MPa or more, more preferably 180 MPa or more.

A method of using two or more emulsifying apparatuses, for example, by performing the emulsification in a stirring emulsifier and then passing the emulsified product through a high-pressure homogenizer is particularly preferred. Also, a method of once performing the emulsion-dispersion by such an emulsifying apparatus, adding an additive such as wetting agent or surfactant, and then again passing the dispersion through a high-pressure homogenizer before the time of filling the ink into a cartridge is preferred.

In the case of containing a low boiling point organic solvent in addition to the high boiling point organic solvent, the low boiling point solvent is preferably removed in view of stability of the emulsified product, safety and hygiene. For removing the low boiling point solvent, various known methods can be used according to the kind of the solvent. Examples of the method include evaporation, vacuum evaporation and ultrafiltration. This removal of the low boiling point organic solvent is preferably performed as soon as possible immediately after the emulsification.

Methods for preparation of the inkjet ink are described in detail in JP-A-5-148436, JP-A-5-295312, JP-A-7-97541, JP-A-7-82515 and JP-A-7-118584 and they can also be utilized in the preparation of the ink for inkjet recording of the present invention.

In the production of the inkjet ink of the present invention, ultrasonic vibrations may be applied, for example, in the step of dissolving the components, for example, the dye.

The ultrasonic vibration is applied so as to prevent the ink from generation of bubbles due to a pressure applied in a recording head. More specifically, an ultrasonic energy equal to or greater than the energy imposed in the recording head is previously applied in the process of producing the ink to eliminate the bubbles.

The ultrasonic vibration is usually conducted with an ultrasonic wave having a frequency of 20 kHz or more, preferably 40 kHz or more, more preferably 50 kHz or more. The energy added to the solution by the ultrasonic vibration is usually 2×10⁷ J/m³ or more, preferably 5×10⁷ J/m³ or more, more preferably 1×10⁸ J/m³ or more. The time period where the ultrasonic vibration is applied is usually on the order of from 10 minutes to one hour.

No matter when the step of applying ultrasonic vibrations is performed, the effect can be attained as long as it is after the dye is charged into a medium. The effect is also achieved even by applying ultrasonic vibrations after the finished ink is once stored. However, the ultrasonic vibration is preferably applied at the time of dissolving and/or dispersing the dye in a medium, because the effect of removing bubbles is large and the dissolution and/or dispersion of dye in the medium is accelerated by the ultrasonic vibration.

Specifically, the step of applying ultrasonic vibrations can be performed during or after the step of dissolving and/or dispersing the dye in the medium. In other words, the step of applying ultrasonic vibrations can be appropriately performed once or more in the preparation of ink until the ink is finished as a product.

According to a preferred embodiment, the step of dissolving and/or dispersing the dye in a medium preferably comprises a step of dissolving the dye in a part of the entire medium and a step of mixing the remaining medium. The ultrasonic vibration is preferably applied at least in either one of these steps, more preferably in the step of dissolving the dye in a part of the entire medium.

The step of mixing the remaining solvent may be a single step or a multiple step.

In the production of the ink, degassing under heating or degassing under a reduced pressure is preferably used together, because the effect of eliminating bubbles in the ink is enhanced. The degassing step under heating or a reduced pressure is preferably performed simultaneously with or after the step of mixing the remaining medium.

Examples of the ultrasonic vibration-generating device for use in the step of applying ultrasonic vibrations include known devices, for example, ultrasonic disperser.

In the production of the inkjet ink of the present invention, a step of removing dusts as a solid content by filtration, which is performed after the preparation of ink solution, is important. The operation is performed using a filtration filter. The filtration filter used is a filter having an effective pore size of 1 µm or less, preferably from 0.05 to 0.3 µm, particularly preferably from 0.25 to 0.3 µm. As for a material of the filter, various materials can be used, however, in the case of an ink containing a water-soluble dye, a filter produced for an aqueous solvent is preferably used. In particular, a filter made of a polymer material, which hardly generates wastes, is preferably used. The filtration may be performed by feeding and passing the solution through a filter or may be performed either under pressure or under a reduced pressure.

After the filtration, air is often taken in into the solution. Bubbles ascribable to the air give rise to the disorder of image in the inkjet recording in many cases and therefore, the above-described bubble-eliminating step is preferably provided separately. For the elimination of bubbles, the solution after the filtration may be allowed to stand or various methods, for example, ultrasonic defoaming, or reduced-pressure defoaming using a commercially available device may be used. In the case of ultrasonic defoaming, the bubble-eliminating operation is preferably performed for 30 seconds to 2 hours, more preferably on the order of from 5 minutes to one hour.

The operation is preferably performed in a space, for example, a clean room or clean bench so as to prevent mingling of dusts at the operation. In the invention, the operation is preferably performed in a space having a cleanness degree of class 1,000 or less. The term "cleanness degree" as used herein means a value measured by a dust counter.

In the inkjet ink of the present invention, additives such as drying inhibitor for preventing clogging due to drying of ink at the ejection port, permeation accelerator for attaining more successful permeation of ink into paper, ultraviolet absorbent, antioxidant, viscosity adjusting agent, surface tension adjusting agent, dispersant, dispersion stabilizer, fungicide, rust inhibitor, pH adjusting agent, defoaming agent and chelating agent, can be appropriately selected and used in an appropriate amount.

The drying inhibitor for use in the present invention is preferably a water-soluble organic solvent having a vapor pressure lower than water. Specific examples thereof include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivative, glycerin and trimethylolpropane; lower alkyl ethers of polyhydric alcohol, such as ethylene glycol monomethyl(or ethyl) ether, diethylene glycol monomethyl(or ethyl) ether and triethylene glycol monoethyl(or butyl) ether; heterocyclic compounds such as 2-pyrrolidone, N-methyl-2-pyrrolidone, 1,3-dimethyl-2-imidazolidinone and N-ethylmorpholine; sulfur-containing compounds such as sulfolane, dimethylsulfoxide and 3-sulfolene; polyfunctional compounds such as diacetone alcohol and diethanolamine; and urea derivatives. Among these, polyhydric alcohols such as glycerin and diethylene glycol are preferred. The drying inhibitors may be used individually or in combination of two or more thereof. The drying inhibitor is preferably contained in an amount of 10 to 50 wt% in the ink.

Examples of the permeation accelerator which can be used in the present invention include alcohols such as ethanol, isopropanol, butanol, di(tri)ethylene glycol monobutyl ether and 1,2-hexanediol, sodium laurylsulfate, sodium oleate and nonionic surfactants. A sufficiently high effect can be obtained by adding from 10 to 30 wt% of the permeation accelerator in the ink. The permeation accelerator is preferably used in an amount of causing no bleeding of printed letter or no print through.

Examples of the ultraviolet absorbent which can be used in the present invention for improving the preservability of image include benzotriazole-base compounds described in JP-A-58-185677, JP-A-61-190537, JP-A-2-782, JP-A-5-197075 and JP-A-9-34057, benzophenone-base compounds described in JP-A-46-2784, JP-A-5-194483 and U.S. Patent 3,214,463, cinnamic acid-base compounds described in JP-B-48-30492 (the term "JP-B" as used herein means an "examined Japanese patent publication"), JP-B-56-21141 and JP-A-10-88106, triazine-base compounds described in JP-A-4-298503, JP-A-8-53427, JP-A-8-239368, JP-A-10-182621 and JP-T-8-501291 (the term "JP-T" as used herein means a "published Japanese translation of a PCT patent application"), compounds described in Research Disclosure No. 24239, and compounds of absorbing ultraviolet light and emitting fluorescent light, so-called fluorescent brightening agents, represented by stilbene-base compounds and benzoxazole-base compounds.

As the antioxidant which can be used in the present invention for improving the preservability of image, various organic or metal complex discoloration inhibitors can be used. Examples of the organic discoloration inhibitor include hydroquinones, alkoxyphenols, dialkoxyphenols, phenols, anilines, amines, indanes, chromans, alkoxyanilines and heterocyclic compounds. Examples of the metal complex include nickel complex and zinc complex. More specifically, compounds described in patents cited in Research Disclosure, Nos. 17643 (Items VII-I to VII-J), 15162, 18716 (page 650, left column), 36544 (page 527), 307105 (page 872) and 15162, and compounds included in formulae of representative compounds and specific examples thereof described in JP-A-62-215272 (pages 127 to 137) can be used.

Examples of the fungicide for use in the present invention include sodium dehydroacetate, sodium benzoate, sodium pyridinethione-1-oxide, ethyl p-hydroxybenzoate, 1,2-benzisothiazolin-3-one and salts thereof. The fungicide is preferably used in an amount of 0.02 to 5.00 wt% in the ink.

The fungicide is described in detail in Bokin Bobai Zai Jiten (Dictionary of Microbicide and Fungicide), compiled by Nippon Bokin Bobai Gakkai Jiten Henshu Iinkai.

Examples of the rust inhibitor include acidic sulfite, sodium thiosulfate, ammon thioglycolate, diisopropylammonium nitrite, pentaerythritol tetranitrate, dicyclohexylammonium nitrite and benzotriazole. The rust inhibitor is preferably used in an amount of 0.02 to 5.00 wt% in the ink.

The pH adjusting agent for use in the present invention can be suitably used for adjusting the pH and imparting dispersion stability. The pH of the ink is preferably adjusted to 8 to 11 at 25°C. when the pH is less than 8, the solubility of dye decreases to readily cause clogging of a nozzle, whereas when it exceeds 11, the water resistance is liable to deteriorate. Examples of the pH adjusting agent include basic compounds such as organic base and inorganic alkali, and acidic compounds such as organic acid and inorganic acid.

As the basic compound, inorganic compounds such as sodium hydroxide, potassium hydroxide, sodium carbonate, potassium carbonate, sodium hydrogencarbonate, potassium hydrogencarbonate, sodium acetate, potassium acetate, sodium phosphate and sodium monohydrogenphosphate, and organic bases such as aqueous ammonia, methylamine, ethylamine, diethylamine, triethylamine, ethanolamine, diethanolamine, triethanolamine, ethylenediamine, piperidine, diazabicyclooctane, diazabicycloundecene, pyridine, quinoline, picoline, lutidine and collidine, can also be used.

As the acidic compound, inorganic compounds such as hydrochloric acid, sulfuric acid, phosphoric acid, boric acid, sodium hydrogensulfate, potassium hydrogensulfate, potassium dihydrogenphosphate and sodium dihydrogenphosphate, and organic compounds such as acetic acid, tartaric acid, benzoic acid, trifluoroacetic acid, methanesulfonic acid, ethanesulfonic acid, benzenesulfonic acid, p-toluenesulfonic acid, saccharinic acid, phthalic acid, picolinic acid and quinolinic acid, can also be used.

The ink of the present invention ordinarily has a conductivity of 0.01 to 10 S/m, preferably from 0.05 to 5 S/m.

The conductivity can be measured by an electrode method using a commercially available saturated potassium chloride.

The conductivity can be controlled mainly by the ion concentration in an aqueous solution. In the case where the salt concentration is high, desalting can be performed by using ultrafiltration membrane or the like. Also, in the case of controlling the conductivity by adding a salt or the like, the conductivity can be controlled by adding various organic or inorganic salts.

Examples of the inorganic salt which can be used include inorganic compounds such as potassium halide, sodium halide, sodium sulfate, potassium sulfate, sodium hydrogensulfate, potassium hydrogensulfate, sodium nitrate, potassium nitrate, sodium hydrogencarbonate, potassium hydrogencarbonate, sodium phosphate, sodium monohydrogenphosphate, boric acid, potassium dihydrogenphosphate and sodium dihydrogenphosphate. Also, organic compounds such as sodium acetate,' potassium acetate, potassium tartrate, sodium tartrate, sodium benzoate, potassium benzoate, sodium p-toluenesulfonate, potassium saccharinate, potassium phthalate and sodium picolinate can be used.

The conductivity can also be controlled by selecting the component of other additives.

The ink of the present invention has a viscosity at 25°C of 1 to 20 mPa · s, preferably from 2 to 15 mPa·s, more preferably from 2 to 10 mPa·s. When the viscosity exceeds 20 mPa·s, the fixing rate of the recorded image decreases and the ejection performance also decreases, whereas if it is less than 1 mpa·s, the recorded image is blurred to decrease the grade.

The viscosity can be appropriately adjusted by the amount of the ink solvent added. Examples of the ink solvent include glycerin, diethylene glycol, triethanolamine, 2-pyrrolidone, diethylene glycol monobutyl ether and triethylene glycol monobutyl ether.

A viscosity adjusting agent may also be used. Examples of the viscosity adjusting agent include water-soluble polymers such as celluloses and polyvinyl alcohol, and nonionic surfactants. The viscosity adjusting agent is described in detail in Nendo Chosei Gijutsu (Viscosity Adjusting Technology), Chap. 9, Gijutsu Joho Kyokai (1999), and Inkjet Printer Yo Chemicals (98 Zoho) -Zairyo no Kaihatsu Doko·Tenbo Chosa- (Chemicals for Inkjet Printer (Enlarged Edition of 98) -Survey on Tendency·Prospect of Development of Materials-), pp. 162-174, CMC . Publishing Co., Ltd. (1997).

The method for measuring the viscosity of liquid is described in detail in JIS Z8803 but the viscosity can be simply and easily measured by a commercially available viscometer and examples of the rotational viscometer include B-type viscometer and E-type viscometer manufactured by Tokyo Keiki Co. In the present invention, the viscosity is measured at 25°C by using a vibrating viscometer Model VM-100A-L manufactured by Yamaichi Denki Co., Ltd. The unit of viscosity is pascal second (Pa·s) but usually, milli-pascal second (mPa·s) is used.

The surface tension of the ink for use in the present invention is, irrespective of dynamic surface tension or static surface tension, preferably from 20 to 50 mN/m, more preferably from 20 to 40 mN/m, at 25°C. When the surface tension exceeds 50 mN/m, ejection stability and printing quality, for example, the occurrence of bleeding due to color mixing or feathering are seriously deteriorated, whereas if the surface tension of the ink is less than 20 mN/m, printing failure may occur due to, for example, attachment of ink to the hard surface at the ejection.

For the purpose of adjusting the surface tension, a cationic, anionic or nonionic surfactant of various types can be added. The surfactant is preferably used in the range from 0.01 to 20 wt%, more preferably from 0.1 to 10 wt%, based on the inkjet ink. The surfactants can be used in combination of two or more thereof.

As the method for measuring the static surface tension, a capillary elevation method, a dropping method, a suspended ring method and the like are known. In the present invention, a vertical plate method is used as the method for measuring the static surface tension.

When a glass or platinum thin plate is vertically suspended while dipping a part of the plate in a liquid, a surface tension of the liquid acts downward along the portion of contact between the liquid surface and the plate. The force is balanced by an upward force and thereby, the surface tension can be measured.

As the method for measuring the dynamic surface tension, a vibrating jet method, a meniscus dropping method, a maximum bubble pressure method and the like are known as described, for example, in Shin Jikken Kagaku Koza, Kaimen to Colloid (New Lecture of Experimental Chemistry, Interface and Colloid), Vol. 18, pp. 69-90, Maruzen co., Ltd. (1977). Furthermore, a liquid film rupturing method described in JP-A-3-2064 is known. In the present invention, a differential bubble pressure method is used as the method for measuring the dynamic surface tension. The principle and method of the measurement are described below.

When a bubble is generated in a solution rendered uniform by stirring, a gas-liquid interface is newly produced and surfactant molecules in the solution gather to the water surface at a constant speed. When the bubble rate (bubble generation rate) is changed, as the generation rate decreases, a larger number of surfactant molecules gather to the bubble surface. Therefore, the maximum bubble pressure immediately before the bubble bursts becomes small and the maximum bubble pressure (surface tension) for the bubble rate can be detected. The dynamic surface tension is preferably measured by a method of generating a bubble in a solution by using large and small two probes, measuring the differential pressure between two probes in the maximum bubble pressure state, and calculating the dynamic surface tension.

In view of ejection stability of ink, quality of printed image, various fastnesses of image and reduction in bleeding of image after printing or in stickiness on the printed surface, the content of the nonvolatile component in the ink of the present invention is preferably from 10 to 70 wt% based on the entire amount of the ink. In view of ejection stability of ink and reduction in bleeding of image after printing, the content of the nonvolatile component is more preferably from 20 to 60 wt%.

The nonvolatile component as used herein means a liquid or solid component having a boiling point of 150°C or more at 1 atm or a high molecular weight component. The nonvolatile component in the ink for inkjet ink recording includes a dye and a high boiling point solvent and also includes a polymer latex, a surfactant, a dye stabilizer, a fungicide and a buffering agent, which are added, if desired. Many of the nonvolatile components except for the dye stabilizer reduce dispersion stability of the ink and even after printing, remain on the inkjet image-receiving paper to inhibit stabilization of the dye due to aggregation on the image-receiving paper and worsen various fastnesses of the image area or bleeding of the image under high humidity condition.

In the ink of the invention, a high molecular weight compound may also be contained. The high molecular weight compound as used herein means all polymer compounds having a number average molecular weight of 5,000 or more contained in the ink. Examples of the polymer compound include a water-soluble polymer compound which substantially dissolves in an aqueous medium, a water-dispersible polymer compound such as polymer latex and polymer emulsion, and an alcohol-soluble polymer compound which dissolves in a polyhydric alcohol used as an auxiliary solvent, however, the high molecular weight compound used in the present invention includes any polymer compound as far as it substantially dissolves or disperses uniformly in the ink solution.

Specific examples of the water-soluble polymer compound include water-soluble polymers, for example, polyvinyl alcohol, silanol-modified polyvinyl alcohol, carboxymethyl cellulose, hydroxyethyl cellulose, polyvinylpyrrolidone, polyalkylene oxide (e.g., polyethylene oxide or polypropylene oxide) and polyalkylene oxide derivatives; natural water-soluble polymers, for example, polysaccharides, starch, cationized starch, casein and gelatin; aqueous acrylic resins, for example, polyacrylic acid, polyacrylamide and copolymers thereof; aqueous alkyd resin; and water-soluble polymer compounds having a -SO₃⁻ or -COO⁻ group in the molecule and substantially soluble in an aqueous medium.

Specific examples of the polymer latex include a styrene-butadiene latex, a styrene-acryl latex and a polyurethane latex, and specific examples of the polymer emulsion include an acryl emulsion.

The water-soluble polymer compounds can be used individually or in combination of two or more thereof.

As described above, the water-soluble polymer compound is used as the viscosity adjusting agent so as to adjust the viscosity of ink to a viscosity region of giving good ejection property, however, when the amount of the water-soluble polymer compound added is large, the viscosity of ink increases to reduce the ejection stability of ink solution and after aging of the ink, the nozzle is readily clogged by the precipitate.

The amount added of the polymer compound as the viscosity adjusting agent varies depending on the molecular weight of the compound added (as the molecular weight is higher, the amount added can be smaller), but the amount added is from 0 to 5 wt%, preferably from 0 to 3 wt%, more preferably from 0 to 1 wt%, based on the entire amount of ink.

In the present invention,. apart from the above-described surfactants, a nonionic, cationic or anionic surfactant is used as the surface tension adjusting agent. Examples of the anionic surfactant include a fatty acid salt, an alkylsulfuric ester salt, an alkylbenzenesulfonate, an alkylnaphthalenesulfonate, a dialkylsulfosuccinate, an alkylphosphoric ester salt, a naphthalenesulfonic acid formalin condensate and a polyoxyethylenealkylsulfuric ester salt. Examples of the nonionic surfactant include a polyoxyethylene alkyl ether, a polyoxyethylene alkylaryl ether, a polyoxyethylene fatty acid ester, a sorbitan fatty acid ester, a polyoxyethylene sorbitan fatty acid ester, a polyoxyethylene alkylamine, a glycerin fatty acid ester and an oxyethylene oxypropylene block copolymer. Also, SURFYNOLS (produced by Air Products & Chemicals), which are acetylene-base polyoxyethylene oxide surfactants, are preferably used. Furthermore, amine oxide-type amphoteric surfactants, for example, N,N-dimethyl-N-alkylamine oxide are preferred. In addition, surfactants described in JP-A-59-157636 (pages (37) to (38)) and Research Disclosure, No. 308119 (1989) can be used.

In the invention, if desired, various cationic, anionic or nonionic surfactants described above may be used as a dispersant or a dispersion stabilizer, fluorine- or silicone-base compounds may be used as a defoaming agent, and chelating agents as represented by EDTA may be used.

### [Image-Receiving Material]

The image-receiving material for use in the invention includes recording paper and recording film described below, which are reflective media.

The support which can be used for the recording paper or film is produced, for example, from a chemical pulp such as LBKP and NBKP, a mechanical pulp such as GP, PGW, RMP, TMP, CTMP, CMP and CGP, or a waste paper pulp such as DIP, by mixing, if desired, conventionally known additives such as pigment, binder, sizing agent, fixing agent, cation agent and paper strength increasing agent, and then sheeting the mixture by using various devices such as Fourdrinier paper machine and cylinder paper machine. Other than these supports, synthetic paper or plastic film may be used. The thickness of the support is preferably from 10 to 250 µm and the basis weight is preferably from 10 to 250 g/m².

An image-receiving layer and a backcoat layer may be provided on the support as it is to produce an image-receiving material for the ink of the present invention, or after providing a size press or anchor coat layer by using starch, polyvinyl alcohol or the like, an image-receiving layer and a backcoat layer may be provided to produce an image-receiving material. The support may be further subjected to a planarizing treatment by a calendering device such as machine calender, TG calender and soft calender.

In the present invention, the support is preferably paper both surfaces of which are laminated with polyolefin (for example, polyethylene, polystyrene, polybutene or a copolymer thereof) or polyethylene terephthalate, or a plastic film. In the polyolefin, a white pigment (for example, titanium oxide or zinc oxide) or a tinting dye (for example, cobalt blue, ultramarine or neodymium oxide) is preferably added.

The image-receiving layer provided on the support contains a porous material or an aqueous binder. Also, the image-receiving layer preferably contains a pigment and the pigment is preferably a white pigment. Examples of the white pigment include inorganic white pigments such as calcium carbonate, kaolin, talc, clay, diatomaceous earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide and zinc carbonate, and organic pigments such as styrene-base pigment, acryl-base pigment, urea resin and melamine resin. Among these, porous inorganic white pigments are preferred, and synthetic amorphous silica and the like having a large pore area are more preferred. The synthetic amorphous silica may be either a silicic acid anhydride obtained by a dry production method (gas phase method) or a silicic acid hydrate obtained by a wet production method.

Specific examples of the recording paper having the image-receiving layer containing the pigment include those disclosed in JP-A-10-81064, JP-A-10-119423, JP-A-10-157277, JP-A-10-217601, JP-A-11-348409, JP-A-2001-138621, JP-A-2000-43401, JP-A-2000-211235, JP-A-2000-309157, JP-A-2001-96897, JP-A-2001-138627, JP-A-11-91242, JP-A-8-2087, JP-A-8-2090, JP-A-8-2091, JP-A-8-2093, JP-A-8-174992, JP-A-11-192777 and JP-A-2001-301314.

Examples of the aqueous binder contained in the image-receiving layer include water-soluble polymers such as polyvinyl alcohol, silanol-modified polyvinyl alcohol, starch, cationized starch, casein, gelatin, carboxymethyl cellulose, hydroxyethyl cellulose, polyvinylpyrrolidone, polyalkylene oxide and polyalkylene oxide derivatives, and water-dispersible polymers such as styrene butadiene latex and acryl emulsion. The aqueous binders can be used individually or in combination of two or more thereof. Among these, polyvinyl alcohol and silanol-modified polyvinyl alcohol are particularly preferred in the present invention in view of adhesion to the pigment and peeling resistance of the ink-receiving layer.

The image-receiving layer may contain a mordant, a water-proofing agent, a light fastness enhancer, a gas resistance enhancer, a surfactant, a hardening agent and other additives in addition to the pigment and the aqueous binder.

The mordant added to the image-receiving layer is preferably immobilized and for this purpose, a polymer mordant is preferably used.

The polymer mordant is described in JP-A-48-28325, JP-A-54-74430, JP-A-54-124726, JP-A-55-22766, JP-A-55-142339, JP-A-60-23850, JP-A-60-23851, JP-A-60-23852, JP-A-60-23853, JP-A-60-57836, JP-A-60-60643, JP-A-60-118834, JP-A-60-122940, JP-A-60-122941, JP-A-60-122942, JP-A-60-23513, JP-A-1-161236 and U.S. Patents 2,484,430, 2,548,564, 3,148,061, 3,309,690, 4,115,124, 4,124,386, 4,193,800, 4,273,853, 4,282,305 and 4,450,224. An image-receiving material containing the polymer mordant described in JP-A-1-161236 (pages 212 to 215) is particularly preferred. When the polymer mordant described in JP-A-1-161236 is used, an image having excellent image quality can be obtained and at the same time, the light fastness of the image is improved.

The water-proofing agent is effective for obtaining a water-resistant image. The water-proofing agent is preferably a cationic resin. Examples of the cationic resin include polyamidopolyamine epichlorohydrin, polyethyleneimine, polyaminesulfone, poly-dimethyldiallylammonium chloride and cation polyacrylamide. The content of the cationic resin is preferably from 1 to 15 wt%, more preferably from 3 to 10 wt%, based on the entire solid content of the ink-receiving layer.

Examples of the light fastness enhancer and the gas resistance enhancer include phenol compounds, hindered phenol compounds, thioether compounds, thiourea compounds, thiocyanic acid compounds, amine compounds, hindered amine compounds, TEMPO compounds, hydrazine compounds, hydrazide compounds, amidine compounds, vinyl group-containing compounds, ester compounds, amide compounds, ether compounds, alcohol compounds, sulfinic acid compounds, saccharides, water-soluble reducing compounds, organic acids, inorganic acids, hydroxy group-containing organic acids, benzotriazole compounds, benzophenone compounds, triazine compounds, heterocyclic compounds, water-soluble metal salts, organic metal compounds and metal complexes.

Specific examples of the compound include those described in JP-A-10-182621, JP-A-2001-260519, JP-A-2000-260519, JP-B-4-34953, JP-B-4-34513, JP-B-4-34512, JP-A-11-170686, JP-A-60-67190, JP-A-7-276808, JP-A-2000-94829, JP-T-8-512258 and JP-A-11-321090.

The surfactant functions as a coating aid, an adherence improver, a slipperiness improver or an antistatic agent. The surfactant is described in JP-A-62-173463 and JP-A-62-183457.

In place of the surfactant, an organic fluoro compound may be used. The organic fluoro compound is preferably hydrophobic. Examples of the organic fluoro compound include fluorine-containing surfactants, oily fluorine-base compounds (for example, fluorine oil) and solid fluorine compound resins (for example, ethylene tetrafluoride resin). The organic fluoro compound is described in JP-B-57-9053 (columns 8 to 17), JP-A-61-20994 and JP-A-62-135826.

As the hardening agent, for example, the materials described in JP-A-1-161236 (page 222), JP-A-9-263036, JP-A-10-119423 and JP-A-2001-310547 can be used.

Other examples of the additive added to the image-receiving layer include a pigment dispersant, a thickener, a defoaming agent, a dye, a fluorescent brightening agent, an antiseptic, a pH adjusting agent and a matting agent. The ink-receiving layer may be composed of one layer or two layers.

In the recording paper or film, a backcoat layer may also be provided. Examples of the component which can be added to the layer include a white pigment, an aqueous binder and other components.

Examples of the white pigment contained in the backcoat layer include inorganic white pigments such as precipitated calcium carbonate light, ground calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudo-boehmite, aluminum hydroxide, alumina, lithopone, zeolite, hydrated halloysite, magnesium carbonate and magnesium hydroxide, and organic pigments such as styrene-base plastic pigment, acryl-base plastic pigment, polyethylene, microcapsule, urea resin and melamine resin.

Examples of the aqueous binder contained in the backcoat layer include water-soluble polymers such as styrene/maleate copolymer, styrene/acrylate copolymer, polyvinyl alcohol, silanol-modified polyvinyl alcohol, starch, cationized starch, casein, gelatin, carboxymethyl cellulose, hydroxyethyl cellulose and polyvinylpyrrolidone, and water-dispersible polymers such as styrene butadiene latex and acryl emulsion. Other examples of the component contained in the backcoat layer include a defoaming agent, a foam inhibitor, a dye, a fluorescent brightening agent, an antiseptic and a water-proofing agent.

To a constituent layer (including the back layer) of the inkjet recording paper or film, a polymer fine particle dispersion may be added. The polymer fine particle dispersion is used for the purpose of improving film properties, for example, stabilizing dimension and preventing curling, adhesion or film cracking. The polymer fine particle dispersion is described in JP-A-62-245258, JP-A-62-136648 and JP-A-62-110066. When a polymer fine particle dispersion having a low glass transition temperature (40°C or less) is added to a layer containing a mordant, the layer can be prevented from cracking or curling. The curling can be prevented also by adding a polymer fine particle dispersion having a high glass transition temperature to the back layer.

### [Inkjet Recording]

In the invention, the hitting volume of ink on a recording material is preferably from 0.1 to 100 pl, more preferably from 0.5 to 50 pl, particularly preferably from 2 to 50 pl.

The invention is not limited as for the inkjet recording system and can be used for a known system, for example, an electric charge controlling system of ejecting the ink by using the electrostatic drawing force, a drop-on-demand system (pressure pulse system) utilizing an oscillation pressure of a piezoelectric element, an acoustic inkjet system of converting electric signals into acoustic beams, irradiating the beams on the ink and ejecting the ink by utilizing the radiation pressure, and a thermal inkjet (e.g., Bubble Jet (registered trade mark)) system of heating the ink to form a bubble and utilizing the generated pressure.

The inkjet recording system includes a system of ejecting a large number of small-volume ink droplets of a so-called photo ink having a low concentration, a system of improving the image quality by using a plurality of inks having substantially the same color hue but different in the concentration, and a system using a colorless transparent ink. The hitting volume of ink is controlled mainly by a printer head.

For example, in the case of a thermal inkjet system, the hitting volume can be controlled by the structure of printer head. Specifically, the ink can be hit in a desired size by changing a size of ink chamber, heating section or nozzle. Also, even in the thermal inkjet system, the ink can be hit in a plurality of sizes by providing a plurality of printer heads different in the size of heating section or nozzle.

In the case of a drop-on-demand system using a piezoelectric element, the hitting volume can be changed by the structure of printer head similarly to the thermal inkjet system, however, by controlling a waveform of driving signals for driving the piezoelectric element, the ink can be hit in a plurality of sizes with printer heads having the same structure as described below.

In the invention, the ejection frequency for hitting the ink on a recording material is preferably 1 kHz or more.

In order to record a high-quality image like a photograph, the hitting density must be 600 dpi (number of dots per inch) or more so that an image having good sharpness can be reproduced by a small ink droplet.

In hitting an ink by a head having a plurality of nozzles, the number of heads which can be driven at the same time is restricted, that is, from several tens to about 200 in the case of a type where a recording paper and a head are moved in the directions orthogonal to each other, and several hundreds even in the case of a type called line head where the head is fixed. This is because the driving electric power is limited or in order to avoid the effect of heat generated in the head on the image, a large number of head nozzles cannot be simultaneously driven. Accordingly, the recording at a high hitting density tends to take a long time, but the recording speed can be increased by elevating the driving frequency.

The hitting frequency can be controlled, in the case of a thermal inkjet system, by controlling the frequency of head-driving signal for heating the head.

In the case of a piezoelectric system, the hitting frequency can be controlled by controlling the frequency of signal for driving the piezoelectric element.

The driving of piezoelectric head is described. The hitting size, hitting speed and hitting frequency are determined in a printer control section based on the signal of an image to be printed, and a signal for driving a printer head is prepared. The driving signal is supplied to the printer head. The hitting size, hitting speed and hitting frequency are controlled by the signal for driving the piezoelectric element. Specifically, the hitting size and hitting speed are determined by the shape and amplitude of the driving waveform, and the hitting frequency is' determined by the cycle period of signal.

When the hitting frequency is set to 10 kHz, the head is driven every 100 micro-seconds and one-line recording is completed in 400 micro-seconds. When the transportation speed of recording paper is set such that the recording paper moves 1/600 inch, namely, about 42 micron per 400 micro-seconds, the printing can be performed at a speed of one sheet per 1.2 seconds.

With respect to the constitution of printing apparatus or printer using the inkjet ink of the invention, embodiments described, for example, in JP-A-11-170527 are suitably used. With respect to the ink cartridge, embodiments described, for example, in JP-A-5-229133 are suitably used. With respect to the suction and the constitution of cap or the like covering the printing head at the suction, those described, for example, in JP-A-7-276671 are suitably used. In the vicinity of head, a filter for eliminating bubbles as described in JP-A-9-277552 is suitably provided.

Also, the surface of nozzle is suitably subjected to a water repellent treatment described in Japanese Patent Application No. 2001-16738. The invention may be used for a printer connected to a computer or for an apparatus specialized for printing of photograph.

The inkjet ink of the invention is preferably used by hitting on a recording material at an average hitting speed of 2 m/sec or more, more preferably 5 m/sec or more.

The hitting speed is controlled by controlling the shape and amplitude of the waveform for driving the head.

Furthermore, by using a plurality of driving waveforms and appropriately selecting thereof, the ink can be hit in a plurality of sizes with the same printer head.

### [Use of Inkjet Ink]

The inkjet ink of the present invention can also be used for the uses other than the inkjet recording, for example, a material for display image, an image-forming material for interior decoration and an image-forming material for outdoor decoration.

Examples of the material for display image include various materials such as poster, wall paper, ornamental articles (e.g., decorative figurine, doll), handbill for commercial advertisement, wrapping paper, wrapping material, paper bag, vinyl bag, package material, billboard, image drawn on or attached to the side face of transportation facilities (e.g., automobile, bus, electric car), and clothing with a logo. In the case of using the ink of the present invention as a material for forming a display image, the image includes not only a narrow definition of image but also all patterns by an ink, which can be acknowledged by a human, for example, abstract design, letter and geometrical pattern.

Examples of the material for interior decoration include various materials such as wall paper, ornamental articles (e.g., decorative figurine, doll), luminaire member, furniture member and design member of floor or ceiling. In the case of using the ink of the present invention as a material for forming an image, the image includes not only a narrow definition of image but also all patterns by an ink, which can be acknowledged by a human, for example, abstract design, letter and geometrical pattern.

Examples of the material for outdoor decoration include various materials such as wall material, roofing material, billboard, gardening material, outdoor ornamental articles (e.g., decorative figurine, doll) and outdoor luminaire member. In the case of using the ink of the present invention as a material for forming an image, the image includes not only a narrow definition of image but also all patterns by an ink, which can be acknowledged by a human, for example, abstract design, letter and geometrical pattern.

In these uses, examples of the medium on which the pattern is formed include various materials such as paper, fiber, cloth (including non-woven fabric), plastic, metal and ceramic. Examples of the dyeing form include mordanting, printing and fixing of a dye in the form of a reactive dye having introduced thereinto a reactive group. Among these, preferred is dyeing by mordanting.

The present invention will be described in more detail with reference to the following examples, but the invention should not be construed as being limited thereto.

### EXAMPLES

Ultrapure water (resistively: 18 MΩ or more) was added to the components shown in Table 1 below to make one liter, followed by stirring for one hour under heating at 30 to 40°C. Then, the solution was filtered under a reduced pressure through a microfilter having an average pore size of 0.25 µm to prepare each ink solution of Cyan Ink (C), Light Cyan Ink (LC), Magenta Ink (M), Light Magenta Ink (LM), Yellow Ink (Y), Dark Yellow Ink (DY) and Black Ink (Bk) thereby preparing Ink Set 101.

**TABLE 1**

| Composition of Ink Set 101 | | | | | | | |
|---|---|---|---|---|---|---|---|
| | C | LC | M | LM | Y | DY | Bk |
| Dye | C-1 45g | C-1 15g | M-1 30g | M-1 10g | Y-1 30g | Y-1 30g C-1 3g M-1 5g | Bk-1 55g Bk-2 15g |
| BTZ | 3g | 3g | 3g | 3g | 3g | 3g | 3g |
| UR | 12g | 5g | 10q | 5g | 10g | 15g | 17g |
| DGB | - | - | - | - | 130g | 125g | 120g |
| TGB | 150g | 140g | 120g | 120g | - | - | - |
| DEG | 100g | 100g | 90g | 80g | - | - | - |
| TEG | - | - | - | - | 110g | 125g | 100g |
| GR | 120g | 130g | 130g | 120g | 125g | 135g | 125g |
| PRD | 35g | 35g | - | - | - | - | 35g |
| TEA | log | log | 10g | 10g | 10g | 10g | 10g |
| PRX | 1q | 1g | 1g, | 1q | 1g | 1g | 1g |
| SW | 10g | 10g | 10g | 10g | 10g | 10g | 10g |
| BTZ: Benzotriazole | | | | | | | |
| UR: Urea | | | | | | | |
| DGB: Diethylene glycol monobutyl ether | | | | | | | |
| TGB: Triethylene glycol monobutyl ether | | | | | | | |
| DEG: Diethylene glycol | | | | | | | |
| TEG: Triethylene glycol | | | | | | | |
| GR: Glycerin | | | | | | | |
| PRD: 2-Pyrrolidone | | | | | | | |
| TEA: Triethanolamine (TEA) | | | | | | | |
| PRX: Proxel XL2 (S) (manufactured by Avecia Ltd.) | | | | | | | |
| SW: Surfynol STG | | | | | | | |

Structures of the cyan, magenta, yellow and black dyes shown in Table 1 above and Table 2 below are illustrated below.

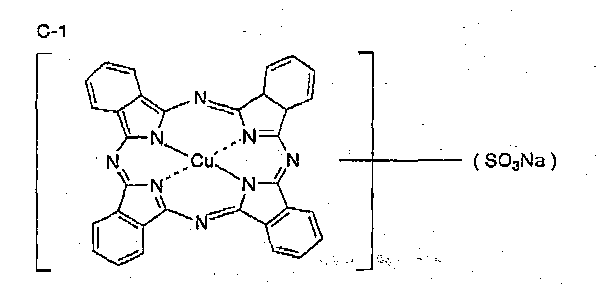

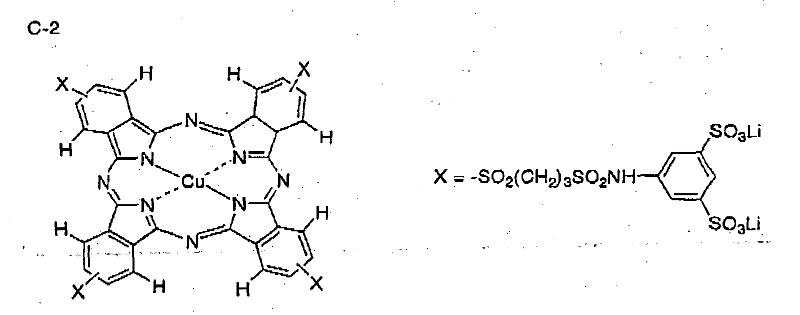

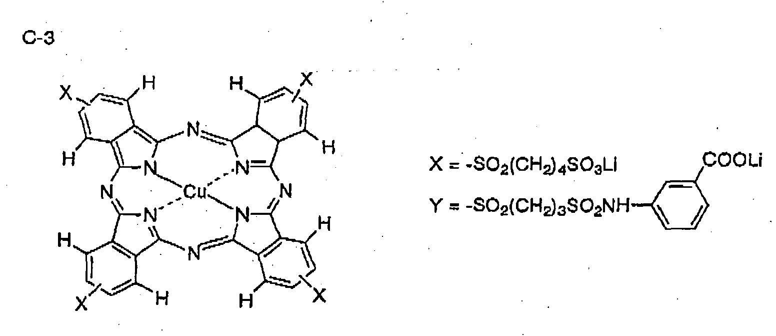

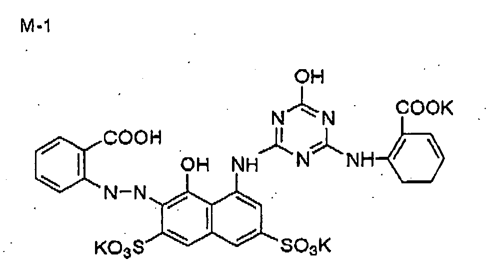

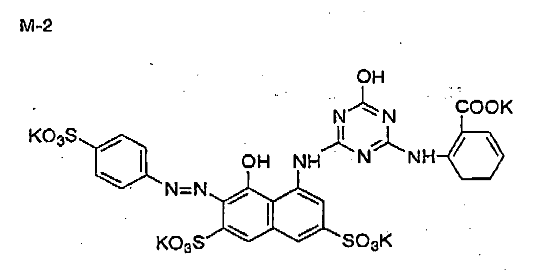

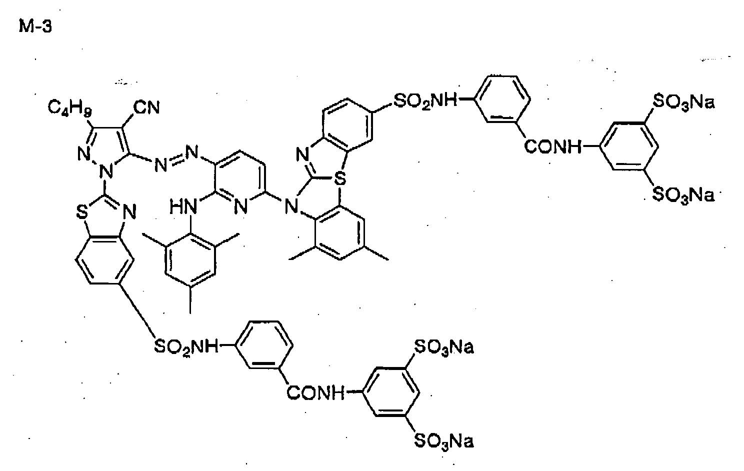

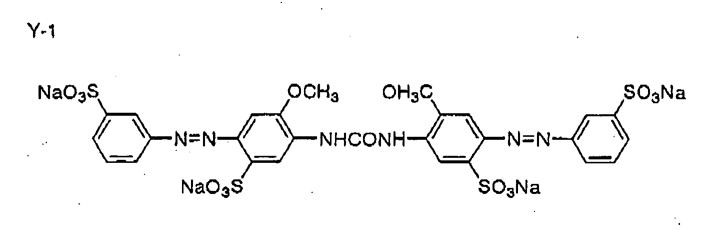

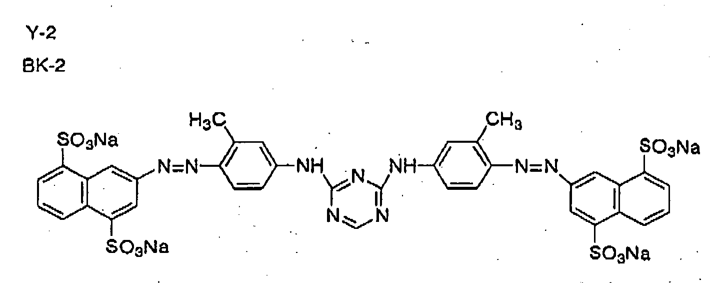

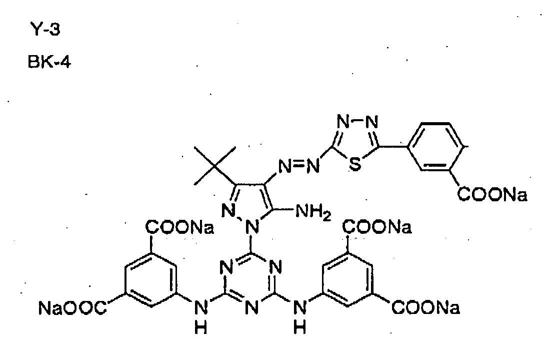

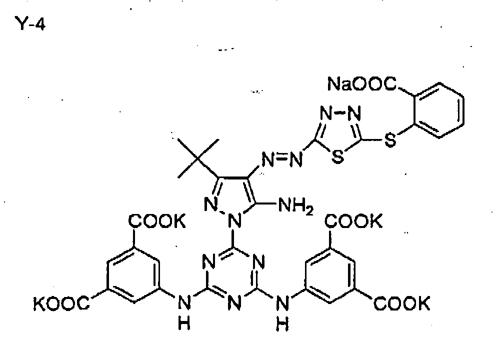

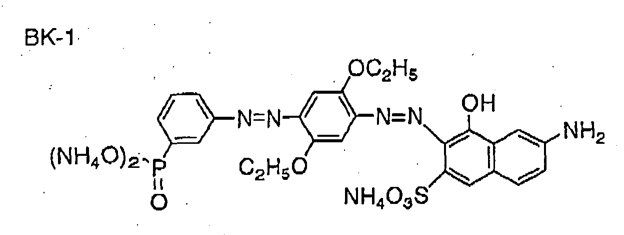

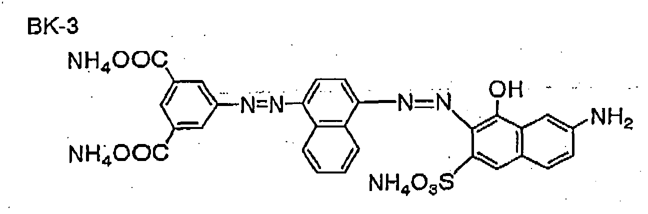

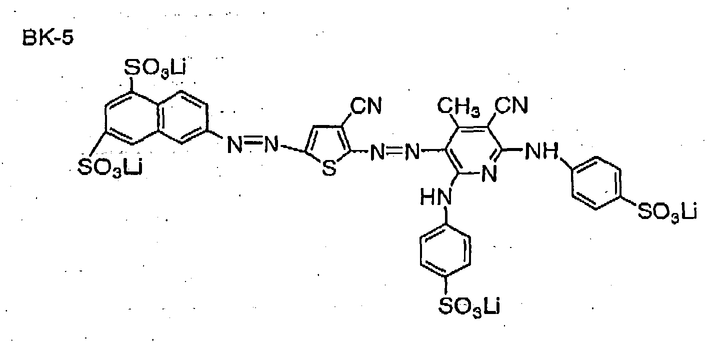

Ink Sets 102 to 109 were prepared in the same manner as in Ink Set 101 except for changing the dyes in the inks to those shown in Table 2 below, respectively.

**TABLE 2**

| | C | LC | M | LM | Y | DY | Bk |
|---|---|---|---|---|---|---|---|
| 101 | | | | | | Y-1 | Bk-1 |
| (Comparative | C-1 | C-1 | M-1 | M-1 | Y-1 | C-1 | Bk-2 |
| Example) | | | | | | M-1 | |
| 102 | | | | | | Y-1 | Bk-1 |
| (Comparative | C-1 | C-1 | M-1 | M-2 | Y-1 | C-1 | Bk-2 |
| Example) | | | | | | M-2 | |
| 103 | | | | | | Y-1 | Bk-1 |
| (Comparative | C-1 | C-1 | M-1 | M-1 | Y-2 | C-1 | Bk-2 |
| Example) | | | | | | M-1 | |
| 104 | | | | | | Y-1 | Bk-1 |
| (Comparative | C-1 | C-1 | M-2 | M-2 | Y-2 | C-1 | Bk-2 |
| Example) | | | | | | M-1 | |
| 105 | C-2 | C-2 | M-3 | M-3 | Y-3 | Y-3 | Bk-3 |
| (Invention) | | | | | | C-2 | Bk-3 |
| 106 | | | | | | Y-3 | Bk-4 |
| (Invention) | C-2 | C-2 | M-3 | M-3 | Y-3 | C-2 | Bk-4 |
| 107 | | | | | | Y-4 | Bk-3 |
| (Invention) | C-2 | C-2 | M-3 | M-3 | Y-3 | C-3 | Bk-4 |
| | | | | | | M-3 | Y-3 |
| 108 | | | | | | Y-3 | Bk-3 |
| (Invention) | C-3 | C-3 | M-3 | M-3 | Y-4 | C-2 | Bk-4 |
| | | | | | | M-3 | T-4 |
| 109 | | | | | | Y-4 | Bk-3 |
| (Invention) | C-3 | C-3 | M-3 | M-3 | Y-4 | C-2 | Bk-5 |
| | | | | | | M-3 | Y-4 |
| 110 | | | | | | Y-3 | Bk-3 |
| (Invention) | C-3 | C-3 | M-3 | M-3 | Y-4 | C-3 | Bk-5 |
| | | | | | | M-3 | Y-4 |

With each of the dyes used in the inks, an aqueous solution of the dye having a concentration of 0.1 mind/liter was prepared and a molar extinction coefficient (ε1) was determined from absorbance at the maximum wavelength of a spectral absorption curve obtained by measuring the aqueous solution using a cell having a light pass length of 1 cm. Also, an aqueous solution of the dye having a concentration of 0.2 mmol/liter was prepared and a molar extinction coefficient (ε2) was determined from absorbance at the maximum wavelength of a spectral absorption curve obtained by measuring the aqueous solution using a cell having a light pass length of 5 µm. A ratio of the molar extinction coefficient obtained, ε1/ε2, is shown in Table 3 below. As shown in Table 3, C-1, M-1, M-2, Y-1, Y-2, Bk-1 and Bk-2 exhibit the ratio of molar extinction coefficient lower than 1.2 that is the critical point according to the invention.

On the other hand, C-2, C-3, M-3, Y-3, Y-4, Bk-3, Bk-4 and Bk-5 exhibit the ratio of molar extinction coefficient more than 1.2.

**TABLE 3**

| Dye | ε1 | ε2 | ε1/ε2 |
|---|---|---|---|
| C-1 | 63,000 | 58,000 | 1.09 |
| C-2 | 55,000 | 42,000 | 1.31 |
| C-3 | 54,000 | 40,000 | 1.35 |
| M-1 | 39,000 | 37,000 | 1.05 |
| M-2 | 45,000 | 43,000 | 1.05 |
| M-3 | 59,000 | 48,000 | 1.23 |
| Y-1 | 19,000 | 17,000 | 1.12 |
| Y-2 | 23,000 | 22,000 | 1.05 |
| Y-3 | 29,000 | 24,000 | 1.21 |
| Y-4 | 28,000 | 23,000 | 1.22 |
| Bk-1 | 55,000 | 51,000 | 1.08 |
| Bk-2 | 29,000 | 27,000 | 1.07 |
| Bk-3 | 58,000 | 45,000 | 1.29 |
| Bk-4 | 57,000 | 43,000 | 1.32 |
| Bk-5 | 56, 000 | 40,000 | 1.40 |

The inks were filled in ink cartridges of inkjet printer PM-950C manufactured by Seiko Epson Corp. and a gray stepwise image pattern and a portrait were printed on an image-receiving sheet.

As the image-receiving sheet, Inkjet Paper Photo Gloss Paper "Gasai" manufactured by Fuji Photo Film Co., ltd. was used. With the printed image, image quality, ejection stability of ink and image fastness were evaluated.

### (Evaluation Experiments)

1) with respect to the ejection stability, the cartridges were set on the printer, ejection of the ink from all nozzles was confirmed, then the printer was stopped and allowed to stand under conditions of 15°C and 30% RH for 240 hours and then under conditions of 35°C and 90% RH for 240 hours, and thereafter 100 sheets of A4 size image were output. The outputs were evaluated according to the following criteria:
   A: Disturbance of printing did not occur from start to finish of the printing.
   B: Some outputs having disturbance of printing occurred.
   C: Disturbance of printing occurred from start to finish of the printing.
2) With respect to the image fastness, a printed sample was evaluated as shown below. The printed sample was prepared by printing cyan and gray patterns changed stepwise in the density. Of these patterns, a pattern having a density of 1.0 ± 0.1 measured using a Status A filter (a Status A green filter in case of printed region with black ink) by X-rite Densitometer was used as the index for measurement of density in the fading test.
   (1) In the evaluation of light fastness, the printed sample was irradiated with xenon light (85, 000 lx) for 7 days using a weather meter manufactured by Atlas Electric Co., Ltd. and then the remaining image density was measured.
   (2) In the evaluation of heat fastness, the printed sample was stored for 10 days under conditions of 80°C and 70% RH and then the remaining image density was measured.
   (3) In the evaluation of ozone resistance, the printed sample was allowed to stand for 7 days in a box set at an ozone gas concentration of 0.5 ppm and then the remaining image density was measured.

In each of the evaluations, the printed sample wherein the remaining image density was more than 85% of the initial density was rated A, the printed sample wherein the remaining image density was from 70 to 85% of the initial density was rated B, and the printed sample wherein the remaining image density was less than 70% of the initial density was rated C.

The results obtained are shown in Table 4 below.

**TABLE 4**

| No: | Ejection Stability | Light Fastness | Heat Fastness | Ozone Resistance |
|---|---|---|---|---|
| PM-950C (Reference example) | A | B | B | C |
| 101 (Comparative example) | A | C | B | C |
| 102 (Comparative example) | A | C | B | C |
| 103 (Comparative example) | A | C | B | B |
| 104 (Comparative example) | A | C | C | B |
| 105 (Invention) | A | A | A | A |
| 106 (Invention) | A | A | A | A |
| 107 (Invention) | A | A | A | A |
| 108 (Invention) | A | A | A | A |
| 109 (Invention) | A | A | A | A |
| 110 (Invention) | A | A | A | A |

From the results shown in Table 4 above, Ink Sets 105 to 110 using the dye exhibiting the scale of the concentration dependency of molar extinction coefficient, ε1/ε2, of not less than 1.2 according to the present invention are superior to Ink Sets 101 to 104 for Comparative Examples and Ink Set of Reference Example in all properties of the light fastness, heat fastness and ozone resistance.

The entire disclosure of each and every foreign patent application from which the benefit of foreign priority has been claimed in the present application is incorporated herein by reference, as if fully set forth herein.

While the invention has been described in detail and with reference to specific embodiments thereof, it will be apparent to one skilled in the art that various changes and modifications can be made therein without departing from the spirit and scope thereof.

## Claims

1. An ink comprising at least one dye in an aqueous medium, wherein the dye satisfies a relation of ε1/ε2 > 1.2 wherein ε1 represents a molar extinction coefficient obtained from absorbance at the maximum wavelength of a spectral absorption curve obtained by measuring an aqueous solution of the dye having a concentration of 0.1 mmol/liter using a cell having a light pass length of 1 cm and ε2 represents a molar extinction coefficient obtained from absorbance at the maximum wavelength of a spectral absorption curve obtained by measuring an aqueous solution of the dye having a concentration of 0.2 mmol/liter using a cell having a light pass length of 5 µm.

2. An ink set comprising the ink as claimed in Claim 1 as at least one of constituting inks.

3. The ink set as claimed in Claim 2, wherein the dye contained in the ink as claimed in Claim 1 constituting the ink set is an azo dye having a heterocyclic group.

4. The ink set as claimed in Claim 3, wherein the azo dye having a heterocyclic group is an azo dye wherein two heterocyclic groups are connected by an azo bond.

5. The ink set as claimed in Claim 2, wherein the dye contained in the ink as claimed in Claim 1 constituting the ink set is a metal chelate dye wherein a metal coordinated with a heterocyclic group form a nucleus.

6. The ink set as claimed in Claim 5, wherein the metal chelate dye wherein a metal coordinated with a heterocyclic group form a nucleus is a phthalocyanine dye.

7. The ink set as claimed in Claim 2, which is for use in inkjet recording.
